(19) Europäisches Patentamt
European Patent Office
Office européen des brevets

(11) **EP 1 180 743 B1**

(12) **EUROPEAN PATENT SPECIFICATION**

(45) Date of publication and mention
of the grant of the patent:
**07.11.2007 Bulletin 2007/45**

(51) Int Cl.:
***G06T 3/40*** (2006.01)

(21) Application number: **01303732.0**

(22) Date of filing: **24.04.2001**

(54) **Apparatus and method for image data interpolation**

Vorrichtung und Verfahren zur Interpolation von Bilddaten

Dispositif et méthode d'interpolation de données d'image

(84) Designated Contracting States:
**AT BE CH CY DE DK ES FI FR GB GR IE IT LI LU MC NL PT SE TR**

(30) Priority: **24.04.2000 JP 2000123174**
**24.04.2000 JP 2000123175**

(43) Date of publication of application:
**20.02.2002 Bulletin 2002/08**

(73) Proprietor: **Seiko Epson Corporation**
**Shinjuku-ku**
**Tokyo-to (JP)**

(72) Inventors:
• **Hoshii, Jun,**
**c/o Seiko Epson Corporation**
**Suwa-shi,**
**Nagano (JP)**
• **Nakami, Yoshihiro**
**c/o Seiko Epson Corp.**
**Nagano (JP)**

(74) Representative: **Sturt, Clifford Mark et al**
**Miller Sturt Kenyon**
**9 John Street**
**London WC1N 2ES (GB)**

(56) References cited:
**EP-A- 0 785 529** **WO-A-99/53441**
**WO-A-99/55073** **US-A- 5 327 257**
**US-A- 5 774 601** **US-A- 5 953 465**

• **PATENT ABSTRACTS OF JAPAN vol. 1996, no. 02, 29 February 1996 (1996-02-29) -& JP 07 262361 A (CANON INC), 13 October 1995 (1995-10-13)**

**Description**

BACKGROUND OF THE INVENTION

Technical Field of the Invention

The present invention relates to a medium whereon an image data interpolation program has been recorded, an image data interpolation method, and an image data interpolation apparatus.

Background of the Related Art

When an image is processed by a computer it is represented in dot matrix pixels, with each pixel having a tone value. On the screen of a computer, for example, a photograph or a computer graphics image is often represented in 640 dots of pixels in the horizontal direction and 480 dots of pixels in the vertical direction.

Meanwhile, the performance of color printers has been enhanced remarkably with very dense dots such as 720 dpi (dots per inch), achieving high precision printing. When such printer prints an image represented in pixels of 640 dots by 480 dots with dot-to-dot correspondence, the printed corresponding image would be very small. In this case, because the image data generated on the computer and the printed image differ in the tone values and what is meant by resolution, pixels should be interpolated between the dots generated on the computer thereby converting the image to printing image data. Specifically, if the printer prints a smaller image from the image data with dot-to-dot correspondence, multiplying the pixels of the image should be performed (this is referred to as conversion to higher resolution or image enlargement). Inversely, if the printer prints a larger image, reducing the pixels of the image should be performed (this is referred to as conversion to lower resolution or image reduction).

As conventional methods of interpolation of dot in such cases, the following are known: nearest neighbor interpolation (hereinafter referred to as a nearest method), cubic convolution interpolation (hereinafter referred to as a cubic method), and a pattern matching method. These interpolation methods have their specific feature. For example, the cubic method enables image interpolation without affecting the tone gradation of a source image, though the amount of arithmetic processing is large. Thus, this method is generally suitable for image interpolation of a natural picture consisting of multi-tone pixels. The pattern matching method enables interpolation by which the contours in an image are sharpened, though tending to affect the tone gradation of a source image. Thus, this method is generally suitable for image interpolation of logos and illustrations with a small number of tones.

To apply interpolation to image data, based on which a printer prints a good image, conventionally, the pattern matching method is used if the image to which interpolation is to be applied is regarded as the one belonging to logos and illustrations, and the cubic method is used if such image is regarded as the one belonging to natural pictures. However, it is generally not easy to judge automatically and correctly whether the attribute of an image is the one belonging to logos and illustrations or the one belonging to natural pictures. Due to incorrect judgment, sometimes, unsuitable interpolation execution has occurred. Discrimination between natural pictures and logos or illustrations is not absolute and objects that sharpening the contour is desirable may exist in a natural picture image.

Even if interpolation processing suitable for the attribute of an image is performed, it is useless to apply interpolation for natural pictures by which subtle tune gradation is reproduced to an image to be printed by low quality setting.

DISCLOSURE OF THE INVENTION

An object of the present invention, produced by our study efforts to solve the above problem, is to provide a medium whereon an image data interpolation program has been recorded, an image data interpolation method, and an image data interpolation apparatus that prevent incorrect selection of an interpolation method, based on the appraised attribute of the image for which interpolation is executed, and enable proper interpolation processing suitable for print quality.

As a constitution of a first aspect of the present invention, contrived to attain the above object, one aspect of the invention is a medium whereon an image data interpolation program has been recorded to implement pixel interpolation to image data of an image represented in multi-tone dot matrix pixels on a computer, the medium being as defined in claim 1.

In a second aspect of the invention an image data interpolation method has the steps defined in claim 7. In a third aspect of the invention there is provided an image data interpolation apparatus as set forth in claim 13.

BRIEF DESCRIPTION OF THE DRAWINGS

Fig. 1 is a block diagram showing an image data interpolation apparatus as an explanatory example of the present invention.

Fig. 2 is a block diagram showing the hardware embodiment of the above image data interpolation apparatus.

Fig. 3 is a schematic view of another example of application of the image data interpolation apparatus.

Fig. 4 is a schematic view of another example of application of the image data interpolation apparatus.

Fig. 5 is a schematic view of another example of application of the image data interpolation apparatus.

Fig. 6 is a schematic view of another example of application of the image data interpolation apparatus.

Fig. 7 is a flowchart illustrating the process regarding resolution conversion that a printer driver executes

Fig. 8 is a flowchart of first interpolation processing.

Fig. 9 is a graphical representation of a histogram of luminance values.

Fig. 10 is a graphical representation of application examples of evaluation function F (y).

Fig. 11 is an illustration giving a luminance pattern example of $3 \times 3$ pixels.

Fig. 12 is an illustration showing a zone comprising $5 \times 5$ reference pixels.

Fig. 13 is an illustration giving edge pattern examples.

Fig. 14 is a conceptual representation of the nearest method.

Fig. 15 is an illustration wherein data of the grid points is copied to their nearest points to be interpolated by the nearest method.

Fig. 16 is a schematic illustration showing the state of the pixels before interpolation by the nearest method.

Fig. 17 is a schematic illustration showing the state of the pixels after interpolation by the nearest method.

Fig. 18 is a conceptual representation of the cubic method.

Fig. 19 is a graphical representation showing how pixel data changes when the cubic method and its variant are applied.

Fig. 20 is a tabulation of pixel data obtained as a cubic method application example.

Fig. 21 is a tabulation of pixel data obtained as an M-cubic method application example.

Fig. 22 is an illustration showing how the pixels, separately interpolated in two modes, are blended and supplied to image data.

Fig. 23 is a schematic block diagram of a color printer of ink jet type, as relating to a first embodiment of the invention.

Fig. 24 is a schematic illustration of a print head unit of the above color printer.

Fig. 25 is a schematic illustration showing a mechanism of jetting color ink out of the above print head unit.

Fig. 26 is a flowchart of image data flow in the printing system.

Fig. 27 is a schematic illustration showing a bubble jet mechanism of jetting color ink out of the print head

Fig. 28 is a schematic illustration of an electrophotographic printer.

Fig. 29 is a block diagram showing the outline configuration of the printing system.

Fig. 30 is a flowchart illustrating the process regarding print processing that a printer driver executes

Fig. 31 is an illustration showing a window for printing operation.

Fig. 32 is an illustration showing a window for printer setup operation.

Fig. 33 is a graphical representation of application examples of evaluation function F (y).

Fig. 34 is a schematic diagram giving an overview of a second embodiment of the present invention.

Fig. 35 is a schematic diagram giving an overview of a third embodiment of the present invention.

Fig. 36 is a flowchart illustrating decisions to be made, subject to the conditions for an edge with an angle of 45 degrees.

Fig. 37 is a flowchart illustrating decisions to be made, subject to the conditions for an edge with an angle of 30 degrees.

Fig. 38 is an illustration showing source pixels and pixels of interpolations to be generated from the target source pixel, where it is assumed that a horizontal edge has been found and the magnifying rate of two times applies.

Fig. 39 is an illustration showing source pixels and pixels of interpolations to be generated from the target source pixel, where it is assumed that an angular edge has been found and the magnifying rate of two times applies.

Fig. 40 is an illustration showing source pixels and pixels of interpolations to be generated from the target source pixel, where it is assumed that an edge with an angle of 45 degrees has been found and the magnifying rate of two times applies.

Fig. 41 is a flowchart illustrating decisions to be made, subject to the conditions for an edge with an angle of 45 degrees.

Fig. 42 is an illustration showing source pixels and pixels of interpolations to be generated from the target source pixel, where it is assumed that an edge with an angle of 30 degrees has been found and the magnifying rate of two times applies.

Fig. 43 is a flowchart illustrating decisions to be made, subject to the conditions for an edge with an angle of 30 degrees.

## DESCRIPTION OF THE PREFERRED EMBODIMENTS OF THE INVENTION

Preferred embodiments of the present invention will now be described, based on the drawings.

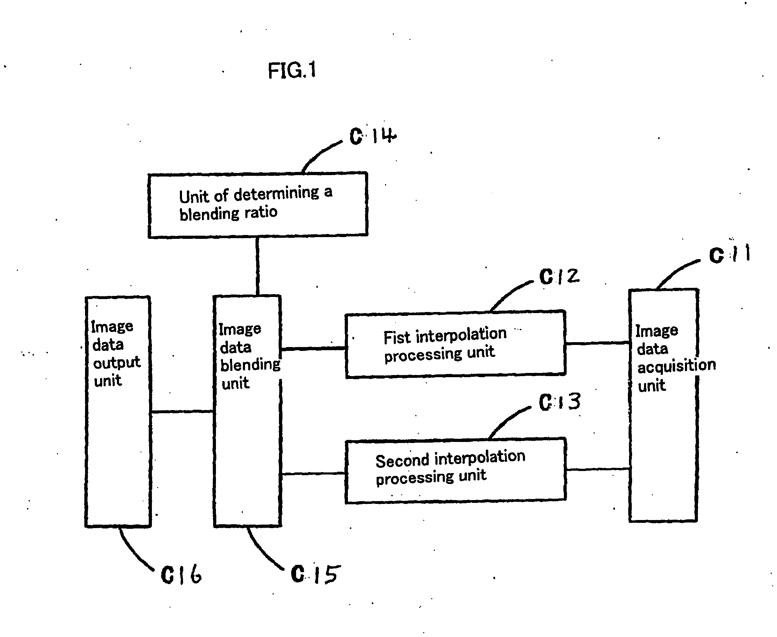

Fig. 1 is a block diagram showing the primary configuration of an image data interpolation apparatus as an example for explaining the present invention.

When digital processing is assumed, an image is represented in dot matrix pixels and image data comprises all pixel data of the image. In the mode of image processing in units of pixels, image enlargement and reduction are performed in units of pixels. The present image data interpolation apparatus performs such image enlargement processing in units of pixels. An image data acquisition unit C11 acquires such image data and a first interpolation processing unit C12 and a second interpolation processing unit C13 perform interpolation processing by which the number of pixels constituting the image data multiplies. The first interpolation processing unit C12 is able to execute the pattern matching method and the nearest method as interpolation processing. The second interpolation processing unit C13 is able to execute the cubic method as interpolation processing.

A first unit of determining a blending ratio C14 appraises the attribute of the image, based on reference pixels around a pixel for which interpolation is just now executed in the image data acquired by the image data acquisition unit C11, and determines a blending ratio between the pixels interpolated by the first interpolation processing unit C12 and those interpolated by the second interpolation processing unit C13, based on the above attribute. Once the first unit of determining a blending ratio C14 have determined a blending ratio, an image data blending unit C15 blends the data of the pixels interpolated by the first interpolation processing unit C12 and the data of the pixels interpolated by the second interpolation processing unit C13 at that blending ratio. Then, an image data output unit C16 outputs the pixels of interpolations data blended by the image data blending unit C15.

In the present example of the hardware embodiment of the above image data interpolation apparatus, a computer system 10 is applied.

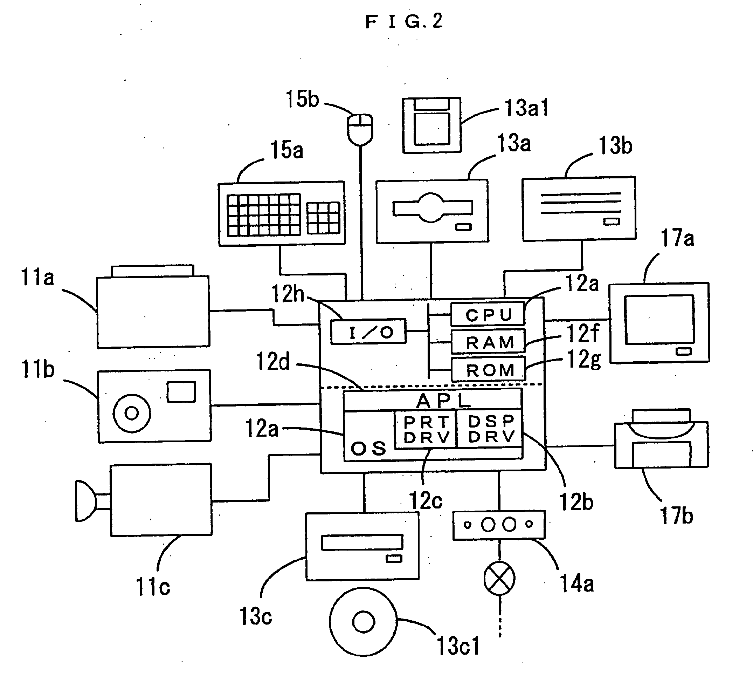

Fig. 2 is a block diagram showing this computer system 10.

This computer system 10 is equipped with a scanner 11a, a digital still camera 11b, and a video camera 11c as image input devices connected to a computer main unit 12. These input devices are able to generate image data represented dot matrix pixels of an image and output such data to the computer main unit 12. Such image data enables image representation in about 16, 700, 000 colors by varying 256 tones of the three primary colors of R, G, and B.

To the computer main unit 12, a floppy disk drive 13a, a hard disk 13b, and a CD-ROM drive 13c are connected as external auxiliary storage. System-related main programs are stored in the hard disk 13b and other programs, if necessary, can be read from a floppy disk 13a1 and a CD-ROM 13c1.

As a communication device for connecting the computer to an external network, a modem 14a is connected to the computer main unit 12 to enable the computer to connect to the external network via a public communication line, so that software and data can be downloaded into the computer across the communication line. Although, in this example, the modem 14a enable access to the external over a telephone circuit, a LAN adapter may be attached to the computer so that access to a network can be made via the LAN adapter. To the computer main unit 12, moreover, a keyboard 14a and a mouse 15b for operating the computer are connected.

Furthermore, the computer is equipped with a display 17a and a color printer 17b as image output devices. The display 17a has a display area of horizontal 800 pixels by vertical 600 pixels and can display each pixel in the above-mentioned color range of 16, 700, 000 colors. This resolution is, of course, only an example, and the resolution can be modified appropriately; e.g., $640 \times 480$ pixels, $1024 \times 768$ pixels, and so on.

The color printer 17b is an ink jet printer and can print an image by printing the dots of the mage on printing paper which is an image recording medium, using inks of four colors, C, M Y, and K. In addition to normal density of $360 \times 360$ dpi of an image printed by the printer, the printer is capable of high density printing with density of $720 \times 720$ dpi, and is provided with two options of tone representation; either color ink print or colorless.

Meanwhile, inside the computer main unit 12, given programs run to input an image to the computer via any of the above image input devices while outputting an image to either output device. Among such programs, an operating system (OS) 12a runs as a basic program. In the operating program 12a, a display driver (DSP DRV) 12bc that controls the display 17a to make image display and a printer driver (PRT DRV) 12c that controls the printer 17b to make image print output are assembled. These drivers 12b and 12c depend on the model of the display 17a and the model of the color printer 17b and can be added to or removed from the operating system 12a, according to the display model and the printer model selected for use. Moreover, either driver can implement additional function beyond the standard processing scope, dependent on the model selected for use. That is, even if any driver is assembled into the operating system 12a, a common processing system is maintained by the standard operating system 12a, while a variety of additional processing can be implemented, according to the driver, within a permissible range.

Inside the computer main unit 12, of course, essential components are installed for running such programs: CPU 12e, RAM 12f, ROM12g, and I/O interface 12h. The CPU 12e that performs arithmetic operation appropriately executes the basic program written into the ROM 12g, while using the RAM 12f as temporary working area, setting save area or program area, and controls the external devices connected to the computer via the I/0 interface 12h as well as the internal components.

Application 12d is run on the operating system 12a as the basic program. The application 12d executes a wide range of processing: it watches for the operation of a keyboard 15a and a mouse 15b which are the operation devices; when such device is operated, it appropriately controls kinds of external devices and executes the appropriate operation; and it displays the result of operation on the display 17a or sends the result to the color printer 17b.

In the above computer system 10, image data is acquired by the scanner 11a which is an image input device. After processed by the application 12d, according to predetermined image processing, the image data can be output to either image output device; it may be displayed on the display 17a or sent to the color printer 17b from which it is printed. Here simply take notice of the correspondence between the pixels of the source image and the pixels of the printed image. If the density of the pixels of the image printed by the color printer 17b matches the density of the pixels of the image scanned by the scanner 11a, the scanned source image and the printed image are of same size. If the former density is different from the latter density, the size of the printed image is different from the size of the scanned image. Most models of the scanner 11a are capable of scanning images with the density of pixels corresponding or approximating to that of the color printer 17 b. However, in many cases, the density cf pixels of images printed by the color printer 17b which is designed to enhance the density of pixels for high quality image printing is generally higher than the density of pixels provided by general image input devices. Especially, as compared with the density of pixels of an image displayed on the display 17a, the density of pixels of that image printed by the color printer is significantly higher. When the data of an image displayed on the display 17a is sent to the printer and the image is printed in the corresponding number of pixels, there is a possibility of the extremely reduced image being printed.

By reason hereof, resolution conversion is executed to eliminate the difference in the density of pixels between practically used devices, while the operating system 12a sets standard density of pixels. If the resolution of the display 17a is, for example, 72 dpi, and if the operating system 12 sets a standard resolution of 360 dpi, the display driver 12b executes resolution conversion from 72 dpi to 360 dpi. If the resolution of the color printer is 720 dpi, and if the same standard resolution applies, the printer driver 12c executes resolution conversion.

The resolution conversion is a processing by which the number of pixels constituting the image data multiplies and thus corresponds to interpolation processing. The above display driver 12b and printer driver 12c execute the interpolation processing as one of their functions. Hereupon, the display driver 12 b and printer driver 12c are able to execute interpolation as the above-described first interpolation processing unit C12 and second interpolation processing unit C13 do, and furthermore execute processing as the first unit of determining a blending ratio C14, the image data blending unit C15, and the image data output unit C16 do. These drivers are designed to blend the pixels interpolated by the first interpolation processing and those interpolated by the second interpolation processing at a ratio, according to the attribute of the image of input.

These display driver 12b and printer driver 12c are stored in the hard disk 13b and put into operation after read to the computer main unit 12 when the computer is booted up. Either driver is installed as follows: set a medium such as a CD-ROM 13cl or a floppy disk 13al whereon these drivers have been recorded in the appropriate drive and install it from the medium into the hard disk. Thus, such medium corresponds to the medium whereon the image data interpolation program has been recorded.

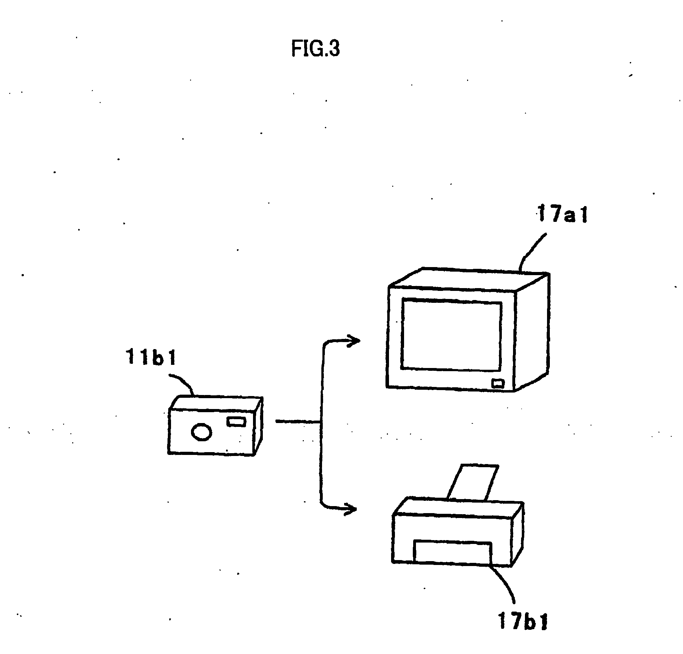

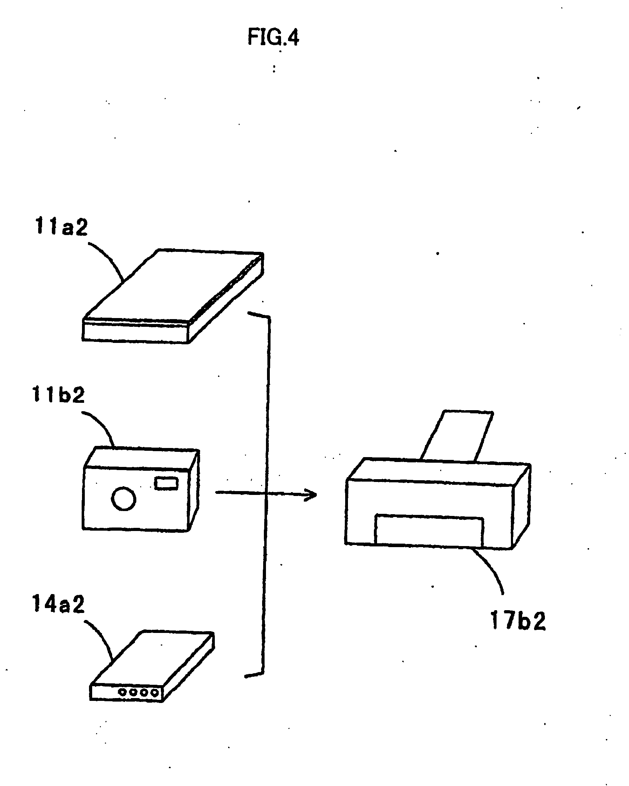

Although the image data interpolation apparatus is embodied as the computer system 10 in the present example, such computer system is not necessarily required. Instead, a system may be used that can implement the similar functions required for image data interpolation processing. For example, a system which is shown in Fig. 3 is feasible, where a chip equivalent to the image data interpolation apparatus for executing interpolation processing is assembled into a digital still camera 11b1 and interpolation-processed image data by the chip is input to a display 17a1 or a color printer 17b1 so that an interpolation-processed image is displayed or printed. Moreover, a color printer 17b2 that prints an image after image data is input thereto without the intervention of a computer system, as is shown in Fig. 4, can be configured to implement the interpolation, so that it will automatically execute resolution conversion of image data input through a scanner 11a2, a digital still camera 11b2, or a modem 14a2 and print the image.

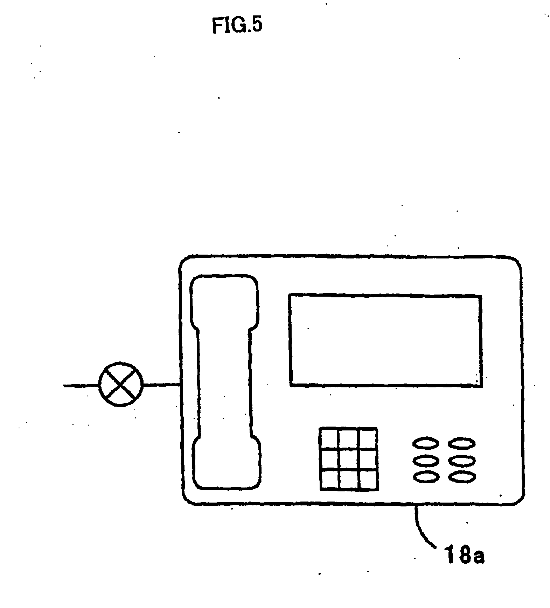

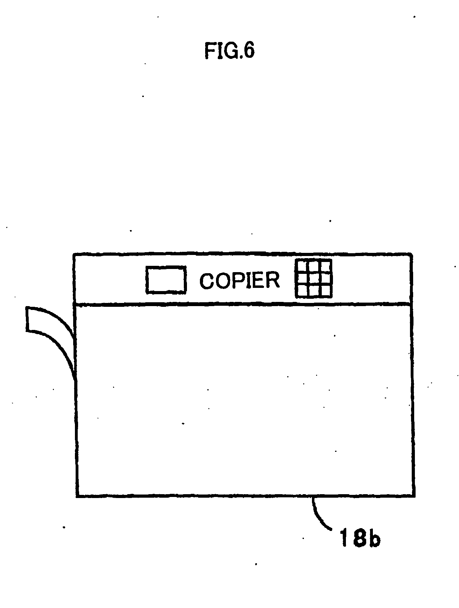

In addition, the prevent invention is, of course, applicable to types of equipment for image data processing, such as color facsimile equipment 18a, which is shown in Fig. 5, and color copy equipment 18b which is shown in Fig. 6.

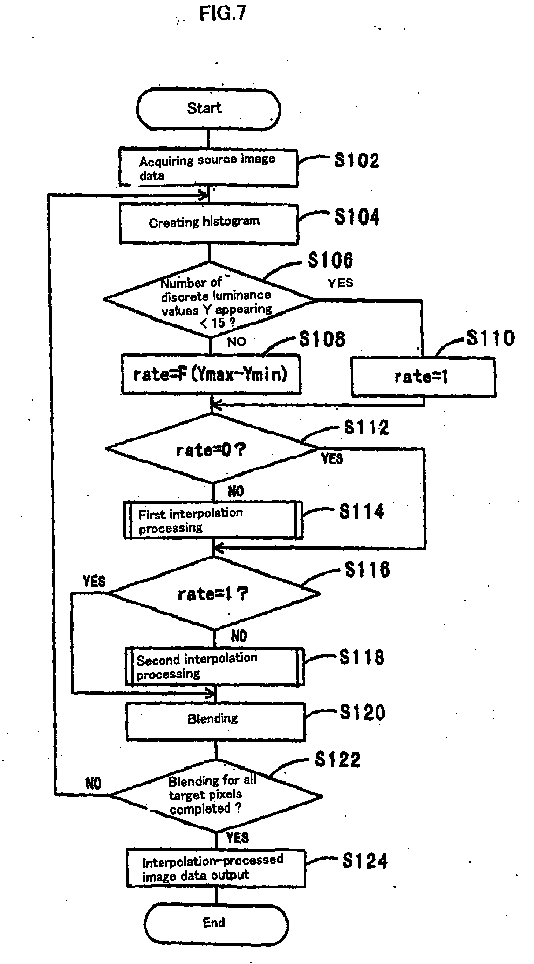

Fig. 7 is a flowchart illustrating the software operation flow regarding the resolution conversion that the above printer driver 12c executes. In Fig. 7, source image data is acquired in step S102. During process sequence in which an image is scanned by the scanner 11a under the control of the application 12d, the image data is processed by predetermined image processing, and printing from the image data is executed, the printer driver 12c acquires print data of predetermined resolution via the operating system 12a and this stage corresponds to the step S102. The processing of this step is regarded as the step or function of image data acquisition, from the software point of view. However, it can be understood that the description of all steps including this step of image data acquisition to be executed by the computer does not directly include the operation of the operating system 12a itself and hardware. On the other hand, if this step is considered to be implemented as part of the organically integrated operation of the hardware including the CPU, it corresponds to the action of the image data acquisition unit C11.

In step S104, a pixel in the read image data is set as a target of interpolation, the pixel data in a zone comprising $5 \times 5$ pixels around the target pixel is set to be reference pixels, and a histogram of the luminance values of the reference pixels is created. In step S106, the number of discrete luminance values appearing in the created histogram is counted and judgment is made as to whether this count is less than 15. The greater the number of discrete luminance values, the greater will be the number of colors assigned to the reference pixels. From this fact, if the number of discrete luminance values appearing in the histogram is less than 15, the reference pixels are regarded as the pixels belonging to a non-natural picture. When the judgment is the above step S106 is that the number of discrete luminance values appearing is less than 15, the blending ratio (hereinafter referred to as the rate) of interpolations by the above first interpolation processing to those by the second interpolation processing is set to 1 in step 110.

When the judgment in the step S106 is that the number of discrete luminance values appearing is not less than 15, the rate is determined by an evaluation function F in step S108. This evaluation function F, which will be detailed later, is a function of the width of the range within which the luminance values of the above reference pixels fall, that is, the difference between the maximum luminance value Ymax and the minimum luminance value Ymin among the reference pixels. Thus, the sequence of the steps S104, S106, S108, and S110 corresponds to the first step or function of determining a blending ratio. If these steps are considered to be implemented as part of the organically integrated operation of the hardware including the CPU, they are defined as the action of the first unit of determining a blending ratio C14.

After the rate is determined in the step S108 or the step S110, judgment is made as to whether the rate is "0" in step S112. When the rate is "0," the first interpolation processing is not executed. When the judgment in the step S112 is that the rate is other than "0," the first interpolation processing is executed in step S114. Thus, this step corresponds to the step or function of first interpolation processing. If this step is considered to be implemented as part of the organically integrated operation of the hardware including the CPU, it is defined as the action of the first interpolation processing unit C12.

Then, in step S116, judgement is made as to whether the rate is "1." When the rate is "1," the second interpolation processing is not executed. When the judgment in the step S116 is that the rate is not "1, the second interpolation processing is executed in step S118. Thus, this step corresponds to the step or function of second interpolation processing. If this step is considered to be implemented as part of the organically integrated operation of the hardware including the CPU, it is defined as the action of the second interpolation processing unit C13. After the rate is determined in this way and the first and/or second interpolation processing is executed, in step S120, blending of pixel data of interpolations is performed, according to the following equation, where the set rate shall be assigned, and then pixels of interpolations are generated in step S120.

```
Data to be blended =

        (First interpolation) × rate + (Second interpolation)

× (1 - rate)

                                        ... (1)
```

Thus, this step corresponds to the step or function of image data blending. If this step is considered to be implemented as part of the organically integrated operation of the hardware including the CPU, it is defined as the action of the image data blending unit C15. Upon the completion of the above sequence of generating data of interpolations to the target pixel, judgment is made as to whether blending of interpolated data has been completed for all target pixels in the input source image data in step S122. If not, the step S104 and subsequent steps are repeated until blending of interpolated data has been completed for all target pixels. Upon the completion of blending of interpolated data for all target pixels, the interpolation-processed image data is output in step S124. For the printer driver 12c, print data is not obtained only by resolution conversion; color conversion and halftone processing are further required. Thus, the image data output just means transferring the data to the next stage and the processing of this step corresponds to the step or function of image data output. If this step is considered to be implemented as part of the organically integrated operation of the hardware including the CPU, it is defined as the action of the image data output unit C16.

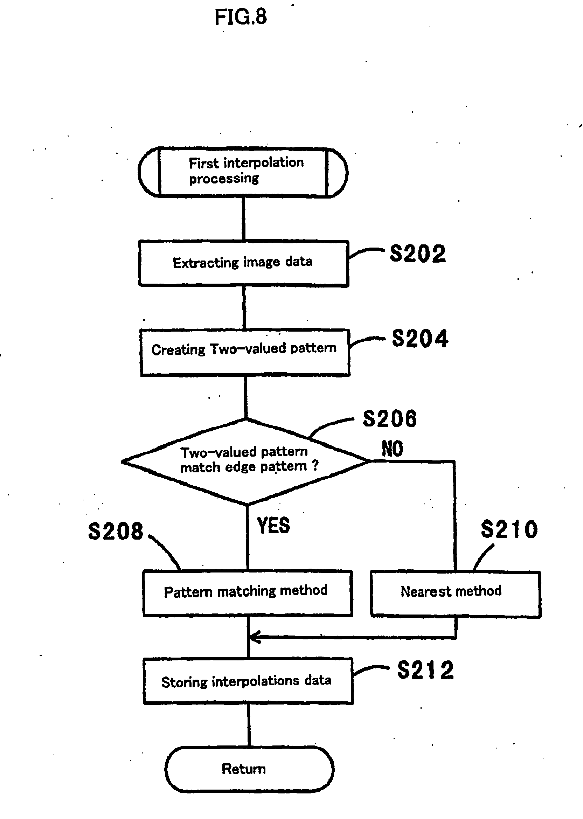

Next, the detailed flow of the first interpolation processing in the step S114 in the above flowchart will be explained below. Fig. 8 is a flowchart illustrating the flow of the first interpolation processing. In step S202 in Fig. 8, from the pixel data in the zone comprising $5 \times 5$ pixels obtained in the above step S104, further, pixel data in a zone comprising $3 \times 3$ pixels around the target pixel is extracted for pattern matching. In step S204, from the thus extracted pixel data, a two-valued pattern of the pixels is created, depending on the luminance values of the extracted pixels are greater than a predetermined threshold which will be described later

In step S206, judgment is made as to whether the two-valued pattern of the pixels created in the step S204 matches a predetermined edge pattern which has been prepared in advance. Here, the edge pattern is a two-valued pattern of the pixels, representing an edge with an angle, for example, 30˚, 45˚, etc., formed in the above zone comprising $3 \times 3$ pixels. By judging whether there is a match between such edge pattern and the two-valued pattern of the pixels created in the above step S204, judgment is made as to whether the zone comprising $3 \times 3$ pixels is an edge.

If the judgment in the step S206 is that both patterns match, pixels of interpolations are generated by a predetermined rule, according to the above edge pattern, in step S208. The interpolation processing to be applied when the patterns match is represented by the pattern matching method in the flow. If the judgment in the step S206 is that both patterns do not match, pixels of interpolations are generated by the nearest method in step S210. After the interpolation processing of the target pixel is executed in this way, the result data of interpolation is stored into the RAM 12f in step S212 which is followed by the return to the above flow shown in Fig. 7.

Then, detailed processing for each step in the above flowcharts will be explained below. In the present embodiment of the invention, judgment is made as to whether the source image acquired in the step S102 belongs to computer graphics (non-natural pictures) or photography (natural pictures) and the result of the judgment is reflected in setting a blending ratio between the first and second interpolations. To prevent incorrect selection of an interpolation method to be applied, based on the appraised attribute of the image for which interpolation is executed, it is, of course, possible to avoid fixing the above-mentioned rate to "1" or "0." However, in the present example, if the number of discrete luminance values appearing in the reference pixels is less than 15, the pixels are regarded as those belonging to a non-natural picture. This is because the inventor considers it more important to avoid the application of the second interpolation processing to non-natural pictures; otherwise, the second interpolation would make contours vague in a non-natural picture.

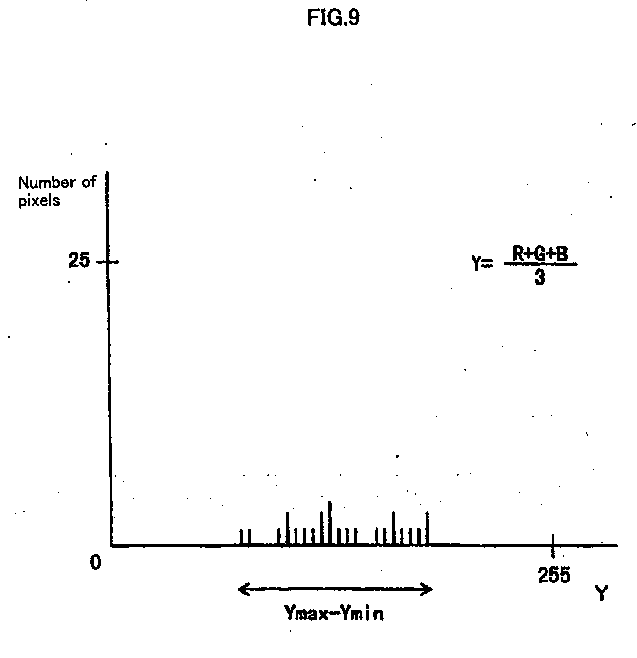

For the above judgment, a histogram of luminance values, which is shown in Fig. 9, is used. In the step 104, the luminance values of the reference pixels in the zone comprising $5 \times 5$ pixels are obtained and a histogram is created to show how the pixels are distributed in the range of their luminance values. The number of discrete luminance values appearing in the histogram, that is, how many luminance values appear for which the number of distributed pixels is other than "0" is counted, based on which, the judgment in the step S106 is made. Among 1, 670, 000 colors, of course, a plurality of colors of same luminance exist on one image. When taking notice of comparison between natural and non-natural pictures, quantitative comparison can be performed, whether the number of discrete colors or the number of discrete luminance values, based on which the comparison is made. In addition to the luminance values, the number of discrete colors appearing in the reference pixels may be counted, base on which judgment may be made as to whether the pixels belong to a non-natural picture.

If the pixel data of the reference pixels includes luminance as its component factor, distribution of the pixels can be obtained by using the luminance values of the pixels. However, even for some image data that does not include luminance values as its direct component values, the data would include component values indirectly representing luminance. Thus, by converting color solid space in which luminance values are not direct component values to color solid space in which luminance values are direct component values, luminance values can be obtained.

Color conversion between different coordinate systems of color solid space is not definitely formulated by a conversion formula. Mutual correspondence between component values on the coordinates of different color space systems must be obtained and a color conversion table that retains this correspondence created. By referring to this table, one-to-one color conversion must be executed. Exactly speaking, thus, a color conversion table containing 16,700,000 color elements must be prepared. As a result of considering the efficient use of storage resources, mapping of correspondence between different color components for all coordinate values is not feasible. Normally, mapping of correspondence between different color components at properly spaced grid points is prepared and arithmetic of interpolation is additionally applied. However, because such arithmetic of interpolation involves a number of operations of multiplication and addition, a great amount of arithmetic processing is required.

If a full color conversion table is used, the amount of processing is reduced, but the table size expands so extremely that is considered infeasible. If the table size is reduced to practically reasonable size, the amount of processing often increases so extremely that is considered infeasible. In view hereof, a simple method of luminance value calculation is taken in the present embodiment of the invention. Image data for which interpolation is executed is based on the color solid space of R, G, and B and each color component value represents brightness of color. By viewing the R, G, and B component values separately, the property of linear relation to luminance is found equally for all the components. Thus, it can be said that data reflects the luminance value of a pixel without considering the rates of the colors to be added even when we simply apply the following:

$$Y = (R + G + B)/3$$

By using this formula, luminance values of pixels are calculated in the present example.

Of course, calculating luminance values of pixels is not only based on this method. As is applied to televisions, the following conversion formula by which the luminance of a pixel is obtained from the three primary colors of R, G, and B may be used:

$$Y = 0.30R + 0.59G + 0.11B$$

If this formula is used, luminance values of pixels can be obtained only by carrying out multiplication three times and addition two times.

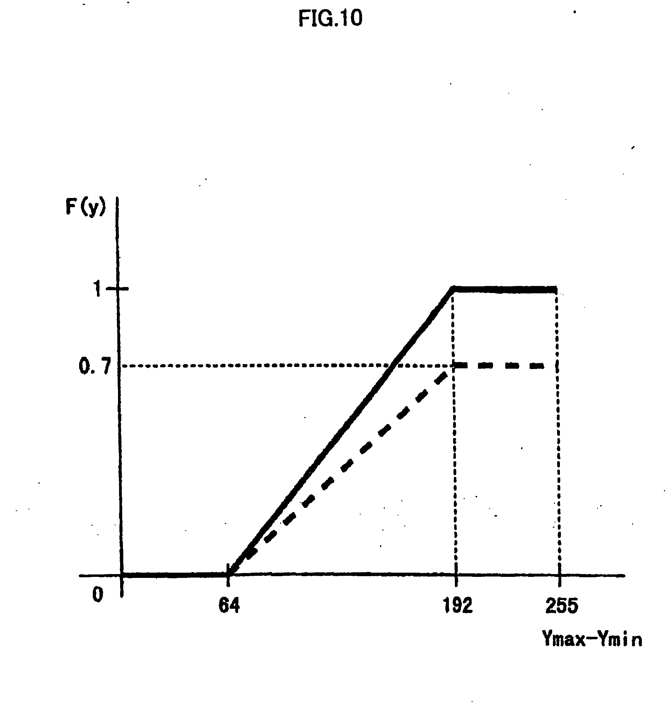

After the luminance values of the reference pixels are thus obtained, if 15 or more discrete luminance values or which the number of distributed pixels is other than "0" a pears in the histogram, a blending ratio (of the first interpolation to the second interpolation), namely, a rate is determined by a predetermined evaluation function F in the step S108. A solid line, which is shown in Fig. 10, is an example of such evaluation function F (y). The evaluation function has a value when "y" falls within the range that $0 \leq y \leq 255$ and varies in the range that $0 \leq F (y) \leq 1$. F (y) is 0 in the range that $0 y \leq 64$ and 1 in the range that $192 \leq y \leq 255$. F (y) linearly increases from 0 to 1 in the range that $64 \leq y \leq 192$. Hereupon, the width of the range within which the luminance values falls, "Ymax - Ymin," shown in Fig. 7, is assigned to "y." Thus, the greater the value of this width, that is, the reference pixels make edge-like visualization due to mutual relation in luminance, the greater will be the rate.

The evaluation function that sets the rate greater for such edge-like visualization is not limited to the function example shown in Fig. 10. As the evaluation function, any function may be used that shows the characteristic: when the width of the range of the luminance values is assumed variable, the function value increases monotonously as the value of the width increases. It is not necessary that the maximum value of the evaluation function be set to "1" and the minimum value be set to "0." The maximum value of the evaluation function may be set at "0.7" to prevent the execution of only the first interpolation processing. This function example is represented by a dotted line shown in Fig. 10. Alternatively, an evaluation function whose value gradually changes over the range of luminance values of 0 to 255 may be used.

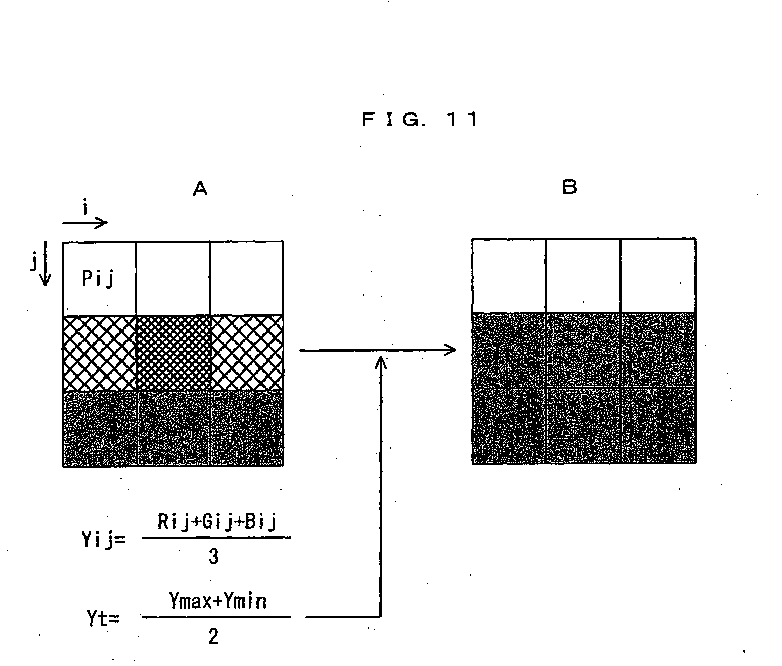

In the histogram shown in Fig. 9, because the are 19 luminance values for which the number of distributed pixels is other than "0," after the affirmative judgment is made in the step S106, a rate is determined by the evaluation function shown in Fig. 10 in the step S108. Then, the first interpolation processing in the step S114 and the second interpolation processing in the step S118 are executed. Fig. 11A gives an example of a luminance pattern of $3 \times 3$ pixels, extracted in the step S202 in Fig. 8. In the step S204, a two-valued pattern of the pixels, whose example is given in Fig. 11B, is created from the luminance pattern shown in Fig. 11A. Firstly, for all the pixels Pij, their luminance values Yij are calculated, according to the above luminance value calculation formula.

A mean value between the maximum value Ymax and the minimum value Ymin of the thus obtained luminance values of the pixels is calculated and this mean value is set as the above-mentioned threshold Yt. After the threshold is calculated, by comparing each pixel's luminance value Yij with the threshold Yt, the pixels are divided into those having a luminance value above the threshold and those having a luminance value below the threshold and the pattern of the pixels is converted to a two-valued pattern of the pixels. Of course, methods of selecting a threshold and creating a two-valued pattern of the pixels are not limited to the above ways. A variety of manners thereof can be taken; e.g., a means luminance value of 128 is set as the threshold; if there are extremely low luminance values that are less than "45, these values are ignored and the minimum value is set at "45."

Once a two-valued pattern of the pixels shown in Fig. 11B has been created, the judgment is made in the step S206 as to whether the two-valued pattern matches one of edge patterns that have been prepared in advance. Hereupon, various types of edge patterns can be used as the prepared ones. It is assumed that the pattern of the pixels shown in Fig. 11B matches one of the prepared edge patterns. Because of matching wit an edge pattern, the pattern shown in Fig. 11B shows a characteristic that the difference between the luminance values of the pixels positioned on the upper side in the j direction of the figure and those of the pixels positioned on the lower side in the j direction of the figure tends to be great, but the luminance difference in the horizontal direction on paper is little. Thus, this pattern is regarded as a horizontally parallel edge. To this edge pattern, pixel interpolation processing is then executed, according to a predetermined rule.

Types of rules may be predetermined for types of edge patterns. In principle, for given pixels in the above zone comprising $3 \times 3$ pixels, a weighted average of the tone values of the pixels is calculated with each pixel being given a weight of reciprocal ratio of its distance from its corresponding pixel to be interpolated. Hereupon, we can conceive variations regarding what policy should be applied for selecting pixels in the zone and calculating the above weighted average on the pixels to generate pixels of interpolations and how to reflect the angle and direction of the edge in generating thereof. In a sense that a predetermined variation thereof is set for a particular edge pattern, pixel interpolation processing is executed, according to a predetermined rule for an edge pattern.

Although the above edge patterns are formed in the zone comprising $3 \times 3$ pixels, the above reference $5 \times 5$ pixels are also used to distinguish the above angle and direction of the edge. A database of a variety of two-valued edge patterns must be prepared in advance. If these predetermined patterns are prepared by being formed in the zone comprising $5 \times$ pixels, the number of the patterns becomes huge. In the present embodiment of the invention, a practicable number of edge patterns are prepared by being formed in the zone comprising $3 \times 3$ pixels and a two-valued pattern of the pixels in that zone is generated. After judgment is made as to whether the two-valued pattern generated matches one of the edge patterns, the zone comprising $5 \times 5$ pixels is referred to for edge property reflection in generating pixels of interpolations.

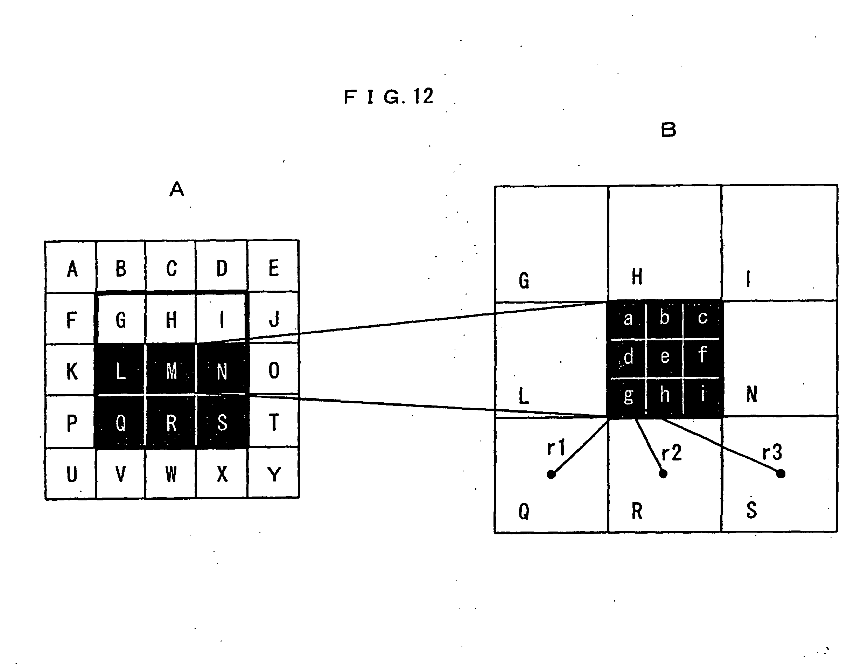

Rules of generating pixels of interpolation if the judgement is the match between the two-valued patter of the pixels shown in Fig. 11B and the corresponding edge pattern will be explained below. Fig. 12A shows the zone comprising $5 \times 5$ pixels which are the above reference pixels data, where each of the pixels is assigned one of A to Y alphabets for identifying each. In this notation, the above zone comprising $3 \times 3$ pixels used for pattern matching consists of the G, H, I, L, , N, Q, R, and S pixels and the above target pixel is the M pixel. Fig. 12A shows the state after a two-valued pattern of the pixels is formed in the zone comprising $3 \times 3$ pixels.

Fig. 12B shows the pixels after interpolation processing is executed, where the target pixel M changed to pixels a to i of interpolations. To generate such pixels of interpolations, calculation is executed, according to a basic formula, which is given below, for calculating a weighted average of the tone values of selected source pixels with each pixel being given a weight of reciprocal ratio of its distance from its corresponding pixel of interpolation.

[Equation 1]

$$\bar{X} = \frac{\sum \frac{1}{r_n} P_n}{\sum \frac{1}{r_n}}$$

where, the tone value of a pixel of interpolation to be generated is assumed to be x bar, Pn represents the tone values of the source pixels to be referenced (selected from among G, H, I, L, M, N, Q, R, and S) , and rn represents the distance from the pixel of interpolation to be generated to each of the selected source pixels to be referenced.

It is a noticeable feature of this interpolation manner that the tone value of a pixel of interpolation which is generated in this way is obtained from the tone values of the selected source pixels. From the multi-tone pixels, each having a discrete tone value, a two-valued pattern is created, and then pattern matching is carried out. By using the calculation formulas appropriate for a pattern found to match with the two-valued pattern by pattern matching, the tone value of a pixel of interpolation is obtained from the tone values of its surrounding pixels. In this way, judgment by pattern patching is carried out, while a pixel is generated from its surrounding source pixels, based on a predetermined rule that applies, depending on the matched pattern. Thus, natural pixels of interpolations can be generated, which, otherwise, could not be obtained only by interpolation processing based on simple pattern matching. Although calculating the luminance of a pixel from its R, G, and B color component values was executed for reference pixels hereinbefore, the tone value of a pixel of interpolation to be generated, in fact, consists of the R, G, and B values. When calculating the tone value of each pixel of interpolation, exactly, the reference pixels as source pixels are given predetermined weight by using their R, G, and B values. If convenience of calculation is permitted, it is acceptable that the pixels are weighted with their luminance values being in use and the same rate of weight is applied to their R, G, and B values when calculation is executed.

Because this example pattern of pixels formed in the zone comprising $3 \times 3$ pixels has little luminance difference in the horizontal direction (the i direction of), that is, a horizontal lengthening edge, the tone values of only three pixels that are placed in a horizontal line are assigned to Pn in the above formula. In principle, the tone values of the source L, M, and N pixels are assigned to Pn. In the present example, interpolation is executed such that change of luminance in the direction perpendicular to the above horizontally lengthening edge is also reflected in the interpolation. If luminance changes in the direction perpendicular to the horizontally lengthening edge, the tone values of the source Q, R, and S pixels are assigned to Pn so that the appearance of edge change will be reflected in the tone values of the g, h, and i pixels of interpolations. If the luminance value of the targe pixel M is greater (smaller) than that of the pixel R forming part of the edge, using the R pixel in addition to the M pixel for interpolation is not effective for highlighting and thus the target pixel shall be used as is.

By reason hereof, the luminance value of the M pixel and that of the R pixel are compared before the calculation for interpolation is executed. If the luminance value of the M pixel is greater than that of the R pixel, the tone values of the above source Q, R, and S pixels are assigned to Pn in the above formula and pixels g, h, and i of interpolations are generated. As a result, the luminance values of the g, h, and i pixels of interpolations become greater than those of the d, e, and f pixels of interpolations and the edge is highlighted in the interpolation-processed image data.

The specific condition for making decision in this case is:

```
((M = edge) & (R > M)) or (M ≠ edge) & (R < M))
```

If this is fulfilled, the calculation formulas to be used to generate pixels of interpolations are:

```
a = d = (Lx2 + Mx2 + N)/5
```

```
b = e = (L + Mx2 + N)/4
```

```
c = f = (L + Mx2 + Nx2)/5
```

```
g = (Qx4 + Rx6 + Sx3)/13
```

```
h = (Q + Rx2 + S)/4
```

```
i = (Qx3 + Rx6 + Sx4)/13
```

On the other hand, if the luminance value of the M pixel is less than that of the R pixel, such highlighting is not performed; only the tone values of the source L, M, and N pixels are used.

The specific condition for making decision in this case is:

```
not ((M = edge) & (R > M)) or (M ≠ edge) & (R < M))
```

If this is fulfilled, the calculation formulas to be used to generate pixels of interpolations are:

```
a = d = g = (Lx2 + Mx2 + N)/5
```

$$b = e = h = (L + Mx2 + N)/4$$

$$c = f = i = (L + Mx2 + Nx2)/5$$

When executing the calculation, according to the above formula, to obtain the tone values of pixels of interpolations, only when the luminance value of the source M pixel is assigned to Pn, half the weight of reciprocal ratio of its distance from its corresponding pixel of interpolation is applied because the weight is too heavy if used as is.

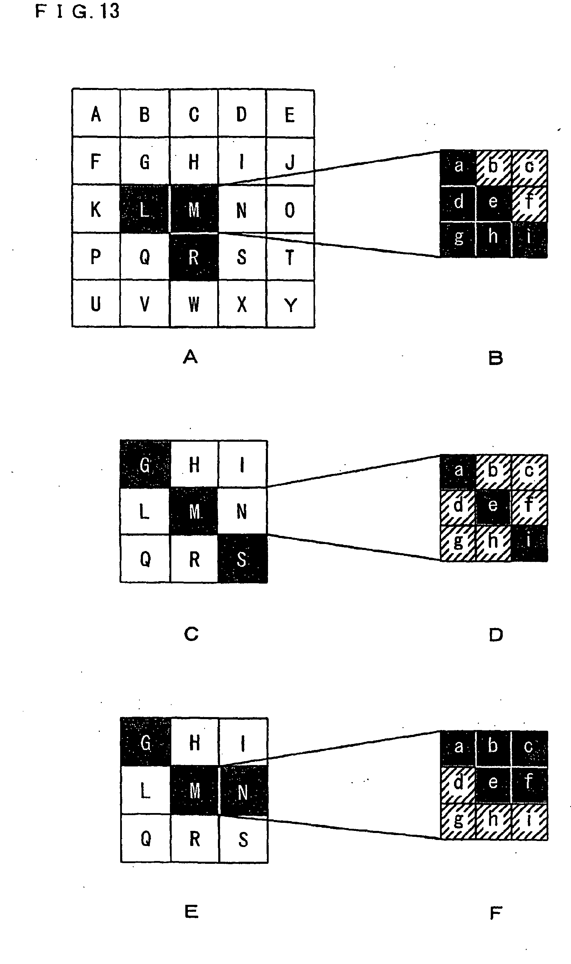

In the present example, interpolation processing is executed for a horizontal edge, according to the above rules, with luminance change in the direction perpendicular to the edge being taken into consideration. In addition to the horizontal edge, types of edge patterns of pixels can be subjected to interpolation processing and examples thereof are given in Fig. 13. If an edge pattern of pixels, shown in Fig. 13A, is found to be the match in the above step S206, given pixels outside the zone comprising 3 × 3 pixels as well as given pixels within the zone are referred to and pixels of interpolations are generated, which are shown in Fig. 13B. In the rule applied to this pattern, for the calculation to obtain the tone values of pixels a, d, e, g, h, and i of interpolations, source L, M, and R pixels are used.

For the calculation to obtain the tone values of pixels b, c, and f of interpolations, source pixels to be used differ, according to the luminance values of given pixels that fall within the zone comprising 5 × 5 pixels. If the pattern is a right-angled edge, source L, M, R pixels are used to generate. If the pattern is not a right-angled edge, source G, H, N, and S pixels are used to generate pixels b, c, and f of interpolations.

First, the condition for deciding that the present pattern is a right-angled edge is:

```
(((M = K = edge) & (F = not edge)) or ((M = W = edge) & (X =

not edge)))
```

or

```
(((M = K = not edge) & (F = edge)) or ((M = W = not edge) &

(X = edge)))
```

If this is fulfilled, the calculation formulas to be used to generate pixels of interpolations are:

$$c = (L + Mx2 + R)/4$$

$$b = (Lx4 + Mx6 + Rx3)/13$$

$$f = (Lx3 + Mx6 + Rx4)/13$$

$$a = (Lx2 + Mx2 + R)/5$$

$$d = (Lx3 + Mx3 + Rx2)/8$$

$$e = (L + Mx2 + R)/4$$

$$g = (L + M + R)/3$$

$$h = (Lx2 + Mx3 + Rx3)/8$$

$$i = (L + Mx2 + Rx2)/5$$

Then, the condition for deciding that the present pattern is a first pattern approximating to the right-angled edge, though not forming a right angle is:

$$(((M = F = edge) \& (A = not\ edge))\ or\ ((M = X = edge) \& (Y = not\ edge))$$

or

$$(((M = F = not\ edge) \& (A = edge))\ or\ ((M = X = not\ edge) \& (Y = edge)))$$

If this is fulfilled, the calculation formulas to be used to generate pixels of interpolations are:

$$c = (G + Hx2 + Nx2 + S)/6$$

$$b = (Lx4 + Mx6 + Rx3)/13$$

$$f = (Lx3 + Mx6 + Rx4)/13$$

To generate other pixels a, d, e, g, h, and i, the same calculation formulas as for the first condition are used. If neither of the above two conditions for making decision is fulfilled, the calculation formulas to be used to generate pixels of interpolations are:

$$c = (G + Hx2 + Nx2 + S)/6$$

$$b = (Gx15 + Hx30 + Nx20 + Sx12)/77$$

$$f = (Gx12 + Hx20 + Nx30 + Sx15)/77$$

To generate other pixels a, d, e, g, h, and i, the same calculation formulas as for the first condition are used.

Furthermore, if an edge pattern of pixels, shown in Fig. 13C, is found to be the match, pixels of interpolations are generated, which are shown in Fig. 13D. Because the pattern shown in Fig. 13C is regarded as forming a diagonal line (an edge with an angle of 45 degrees) in the zone comprising $3 \times 3$ pixels, source G, M, and S pixels which are elements forming this diagonal line are used to generate pixels a, e, and i of interpolations. At the same time, the edge angle and line thickness of the source pixels are decided, based on the luminance values of given pixels that fall within the zone comprising $5 \times 5$ pixels. According to this decision, selection is made between source "H and N" pixels and "G, M, and S" pixels or source "L and R" pixels and "G, M, and S" pixels and the selected pixels are used to generate pixels b, c, f, d, g, and h of interpolations.

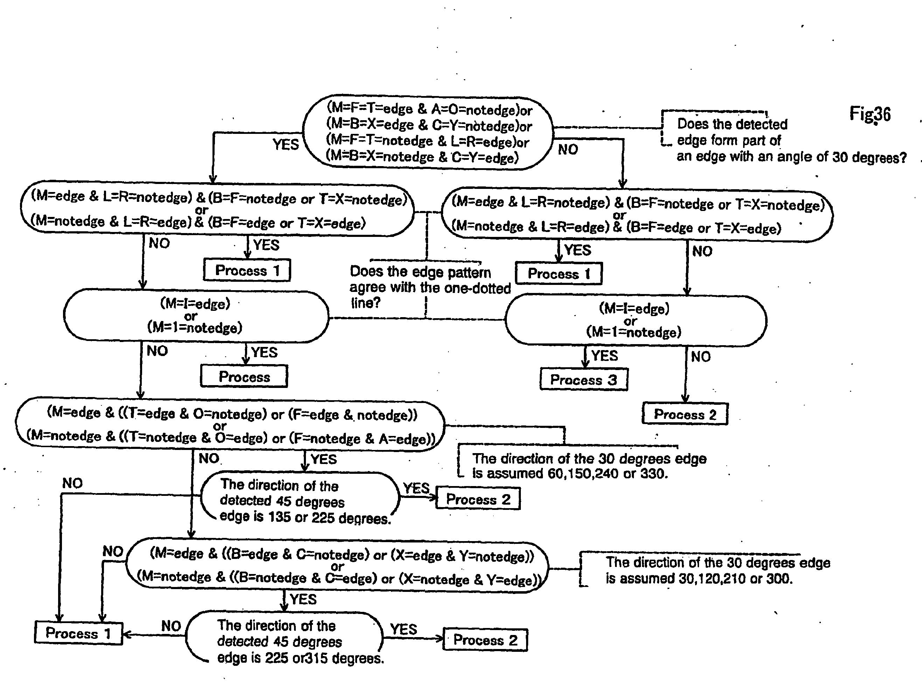

Depending on decision whether the detected edge with an angle of 45 degrees forms part of its extending edge with an angle of 45 degrees or part of an edge with an angle of 30 degrees, the processing flow branches into three processes. The conditions for making this decision and subsequent decisions are specified in Fig. 36. The intention for which each decision is made is described in a box drawn with dotted lines.

If process 1 is selected, the calculation formulas to be used to generate pixels b, c, and f are:

$$b = (Gx5 + Mx10 + Sx4)/19$$

$$c = (G + Mx2 + S)/4$$

$$f = (Gx4 + Mx10 + Sx5)/19.$$

If process 2 is selected, the calculation formulas to be used to generate pixels b, c, and f are:

$$b = (Gx5 + Mx10 + Sx4)/19$$

$$c = (H + N)/2$$

$$f = (Gx4 + Mx10 + Sx5)/19$$

If process 3 is selected, the calculation formulas to be used to generate pixels b, c, and f are:

$$b = (Hx3 + Nx2)/5$$

$$c = (H + N)/2$$

$$f = (Hx2 + Nx3)/5$$

For generating other pixels, the calculation formulas are:

$$a = (Gx3 + Mx6 + Sx2)/11$$

$$d = (Gx5 + Mx10 + Sx4)/19$$

$$e = (G + Mx2 + S)/4$$

$$g = (G + Mx2 + R)/4$$

$$h = (Gx4 + Mx10 + Sx5)/19$$

$$i = (Gx2 + Mx6 + Sx3)/11$$

Furthermore, if an edge pattern of pixels, shown in Fig. 13E, is found to be the match, pixels of interpolations are generated, which are shown in Fig. 13F. Because the line pattern shown in Fig. 13E is regarded as a smaller-angled line (an edge with an angle of 30 degrees) than the line shown in Fig. 13C, source G, M and N pixels that form this line pattern are used to generate pixels a, b, c, e, and f of interpolations. At the same time, the edge angle and protrusion of the source pixels are decided, based on the luminance values of given pixels that fall within the zone comprising 5 × 5 pixels. According to this decision, selection is made between source "G, M and N" pixels and "L, R, and S" pixels and the selected pixels are used to generate pixels d, g, h, and i of interpolations.

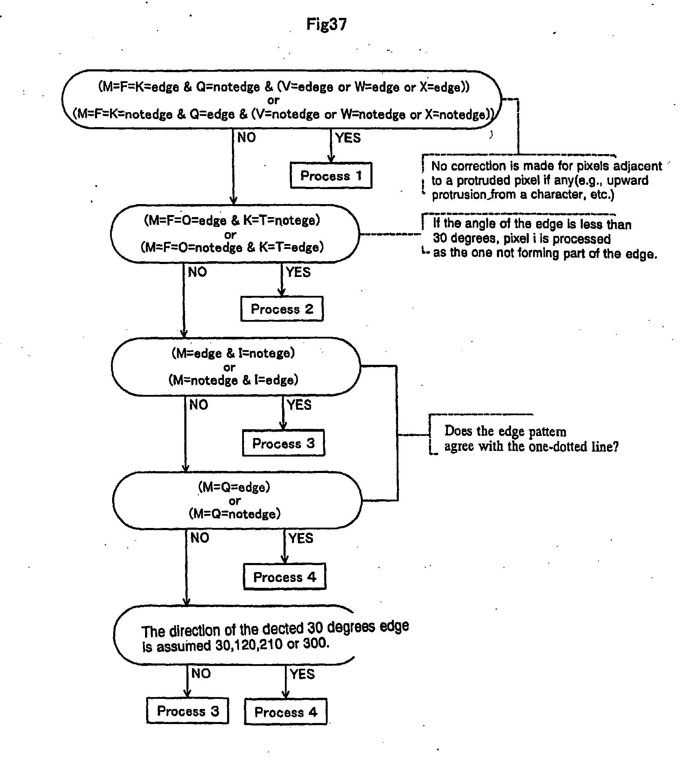

More specifically, the flow of processing for the detected edge with an angle of 30 degrees branches into four processes. The conditions for making decision required for this processing are specified in Fig. 37. The intention for which each decision is made is described in a box drawn with dotted lines.

If process 1 is selected, the calculation formulas to be used to generate pixels d, g, h, and i:

$$d = (G + Mx2 + N)/4$$

$$g = (G + Mx2 + S)/4$$

$$h = (Gx3 + Mx8 + Nx5)/16$$

$$i = (G + Mx3 + Nx3)/7$$

If process 2 is selected, the calculation formulas to be used to generate pixels d, g, h, and i:

$$d = (G + Mx2 + N)/4$$

$$g = (Lx2 + Rx2 + S)/5$$

$$h = (Lx4 + Rx6 + Sx3)/13$$

$$i = (Lx3 + Rx6 + Sx4)/13$$

If process 3 is selected, the calculation formulas to be used to generate pixels d, g, h, and i:

$$d = (G + Mx2 + N)/4$$

$$g = (Lx2 + Rx2 + S)/5$$

$$h = (Lx4 + Rx6 + Sx3)/13$$

$$i = (G + Mx3 + Nx3)/7$$

If process 4 is selected, the calculation formulas to be used to generate pixels d, g, h, and i:

$$d = (Lx15 + Rx10 + Sx6)/31$$

$$g = (Lx2 + Rx2 + S)/5$$

$$h = (Lx4 + Rx6 + Sx3)/13$$

$$i = (Lx3 + Rx6 + Sx4)/13$$

For generating other pixels, the calculation formulas are:

$$a = (Gx4 + Mx6 + Nx3)/13$$

$$b = (Gx3 + Mx6 + Nx4)/13$$

$$c = (G + Mx2 + Nx2)/5$$

$$e = (Gx4 + Mx6 + Nx3)/13$$

$$f = (Gx2 + Mx5 + Nx5)/12$$

The edge patterns, the method of referring to the zone comprising 5×5 pixels, and the method of selecting source pixels to be used, have been described above for illustrative purposes. A variety of other manners thereof may be taken. The magnifying rate at which pixels of interpolations are generated is variable. In the above description, pixels of interpolations are generated in a rectangle with its vertical and horizontal edges enlarged three times the corresponding edges of the target pixel of interpolation. This magnifying rate may be changed to two times, four times, or other desirable rate.

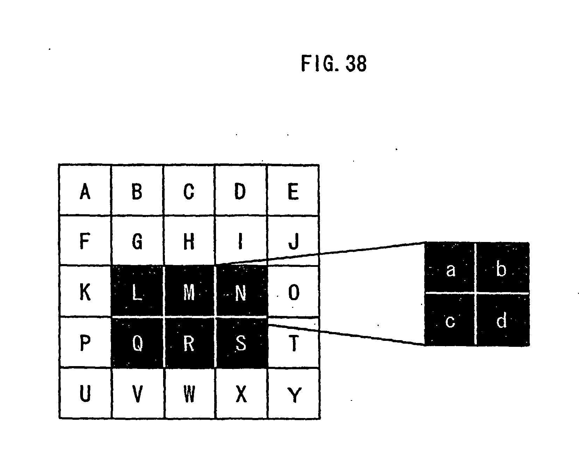

First, exemplary interpolation to which the magnifying rate of two times applies will now be explained. Figs. 38 to 42 exemplifies such interpolation processing by which pixels a to d of interpolations are generated from the source pixel M. Refer to Fig. 38 where it is assumed that a horizontal edge has been found in the zone by pattern matching. Also for this example, if the luminance value of the target pixel M is greater (smaller) than that of the pixel R forming part of the edge, using the R pixel in addition to the M pixel for interpolation is not effective for highlighting and thus the target pixel shall be used as is. The more specific condition for making decision is:

$$((M = edge) \& (R > M)) \; or \; ((M = not \; edge) \& (R < M))$$

If this is fulfilled, highlighting is executed. The calculation formulas for this highlighting are:

$$a = b = M$$

$$c = d = M$$

Otherwise, highlighting is not executed and the following calculation formula is applied:

$$a = b = c = d = M$$

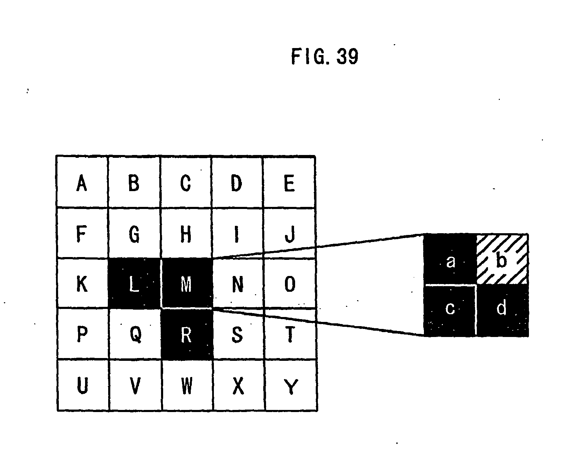

Then, refer to Fig. 39 where it is assumed that an angular edge has been found in the zone by pattern matching.

The condition for making decision whether the detected edge is a right-angled edge is:

$$((\,(\texttt{M = K = edge}) \;\&\; (\texttt{F = not edge})) \text{ or } ((\texttt{M = W = edge}) \;\&\; (\texttt{X = not edge})))$$

or

$$((\,(\texttt{M = K = not edge}) \;\&\; (\texttt{F = edge})) \text{ or } ((\texttt{M = W = not edge}) \;\&\; (\texttt{X = edge})))$$

If this is fulfilled, to highlight the right-angle feature of the edge, calculation for generating pixel b is executed, according to the following formula:

$$\texttt{b = (L + R)/2}$$

Otherwise, the above calculation is executed, according to the following formula:

$$\texttt{b = (Gx2 + Hx3 + Nx3 + Sx2)/10}$$

For generating other pixels, the calculation formulas are:

$$\texttt{a = (Lx3 + Rx2)/5}$$

$$\texttt{c = (L + R)/2}$$

$$\texttt{d = (Lx2 + Rx3)/5}$$

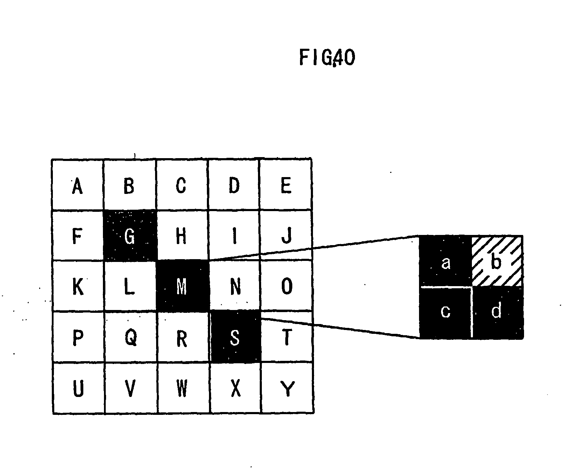

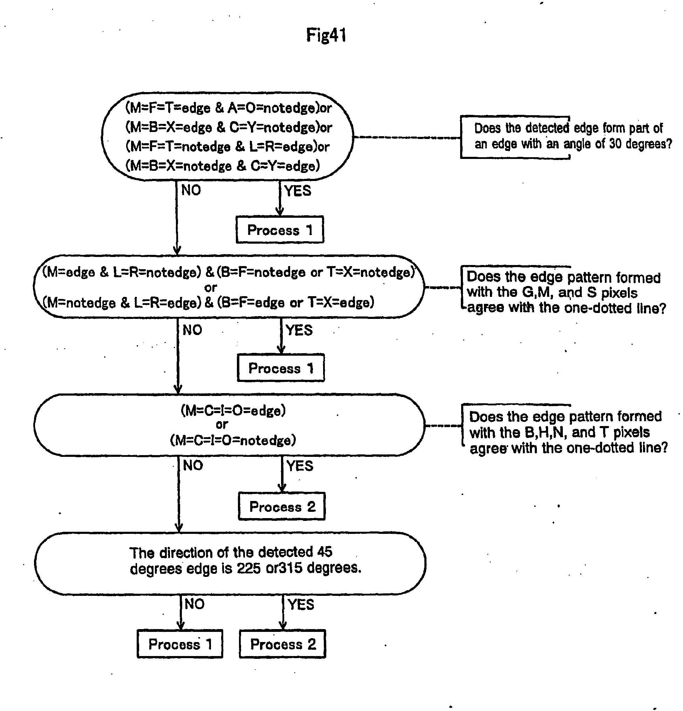

Refer to Fig. 40 where it is assumed that an edge with an angle of 45 degrees has been found in the zone by pattern matching. In order to decide whether the detected edge forms part of its extending edge with an angle of 45 degrees or an edge with an angle of 30 degrees, decision is made, subject to the conditions which are specified in Fig. 41, and the processing flow branches into two processes, depending on this decision and subsequent decisions. In Fig. 41, if process 1 is applied, the calculation formula to be used to generate pixel b is:

$$\texttt{b = (G + S)/2}$$

If process 2 is applied, the calculation formula to be used to generate pixel b is:

$$b = (H + N)/2$$

For generating other pixels, the calculation formulas are:

$$a = (Gx2 + S)/3$$

$$c = (G + S)/2$$

$$d = (G + Sx2)/3$$

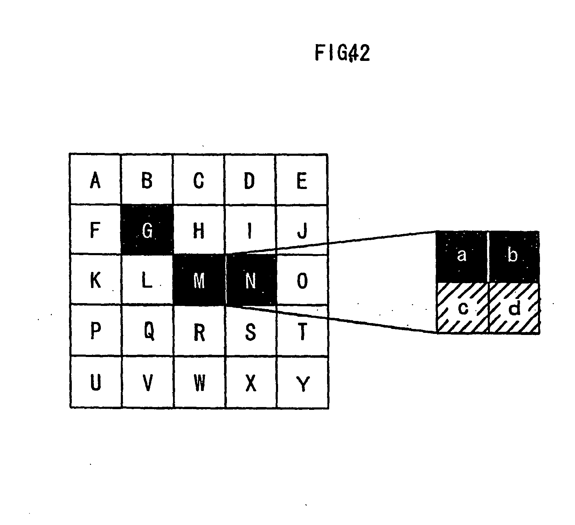

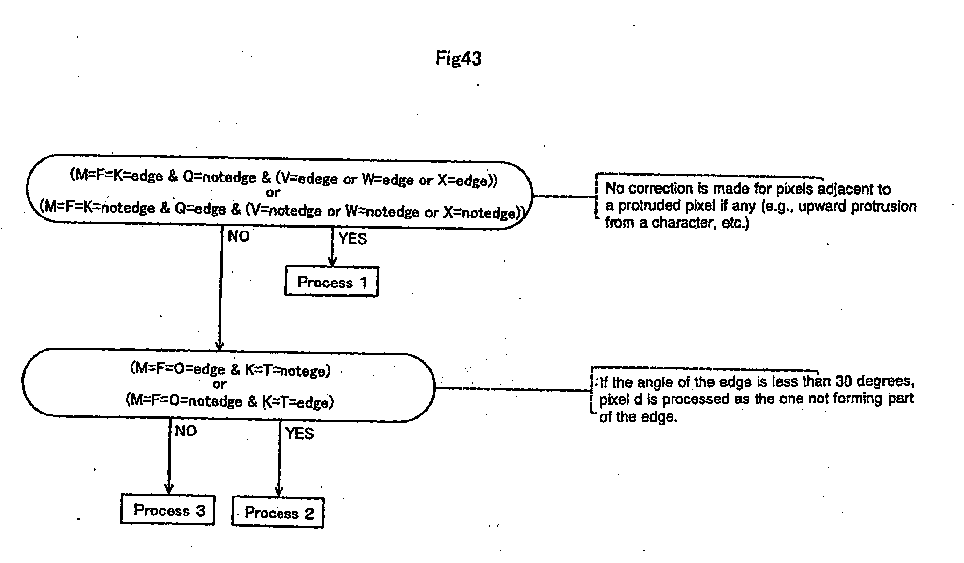

Refer to Fig. 42 where it is assumed that an edge with an angle of 30 degrees has been found in the zone by pattern matching. Depending on the decisions to be made subject to the conditions which are specified in Fig. 43, the processing flow branches into three processes. In Fig. 43, if process 1 is applied, the calculation formulas to be used to generate pixels c and d are:

$$c = (G + N)/2$$

$$d = (G + Nx2)/3$$

If process 2 is applied, the calculation formulas to be used to generate pixels c and d are:

$$c = (Lx3 + Rx3 + Sx2)/8$$

$$d = (Lx2 + Rx3 + Sx3)/8$$

If process 3 is applied, the calculation formulas to be used to generate pixels c and d are:

$$c = (Lx3 + Rx3 + Sx2)/8$$

$$d = (G + Nx2)/3$$

For generating other pixels, the calculation formulas are:

$$a = (Gx3 + Nx2)/5$$

$$b = (Gx2 + Nx3)/5$$

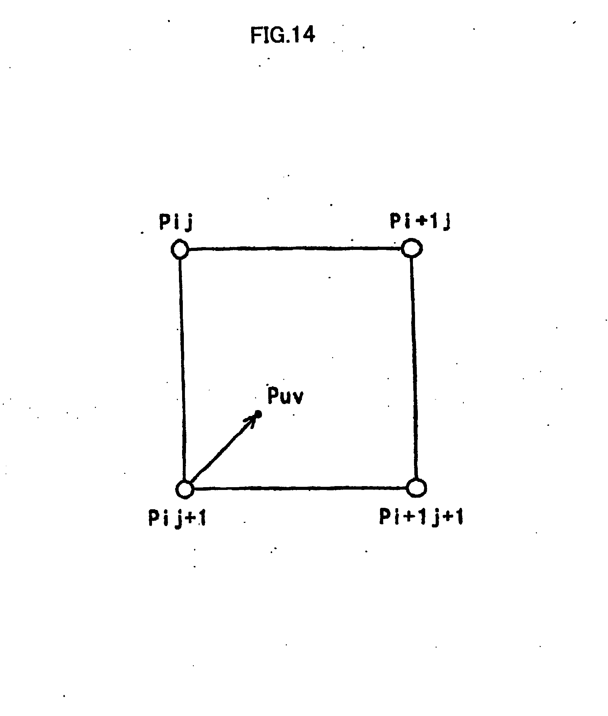

If the judgment is a mismatch between the above two-valued pattern of the reference $3 \times 3$ pixels and any of the prepared edge patterns of pixels formed in the above area comprising $3 \times 3$ pixels, the nearest method is executed instead of using the pattern matching method described above as the first interpolation processing. The concept of the nearest method is illustrated in Fig. 14 where the distance between each of four surrounding grid points Pij, Pi + 1j, Pij +1, Pi + ij + 1 and a desired point Puv to be interpolated is obtained and the data of the nearest grid point is given to the desired point as is. This can be expressed in a general equation as below:

$$Puv = Pij$$

where i = [u+0.5] and j = [v+0.5]. Brackets [ ] denote that Gauss' symbol integers are given.

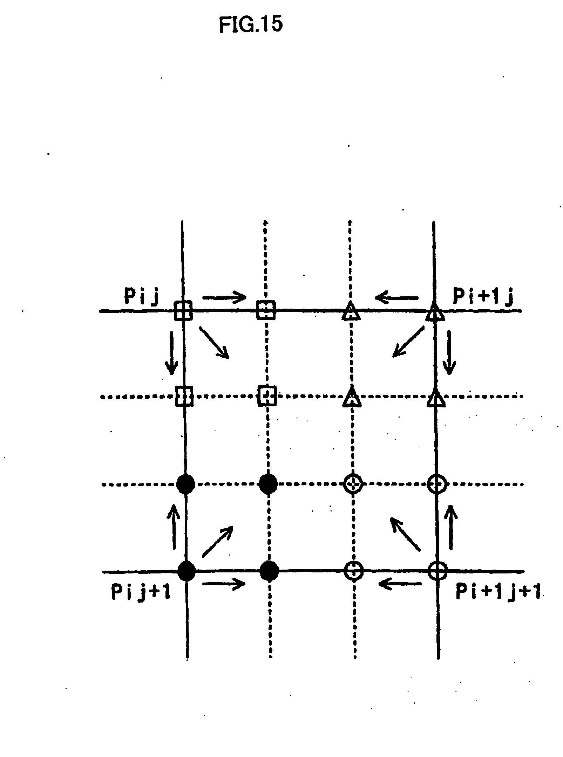

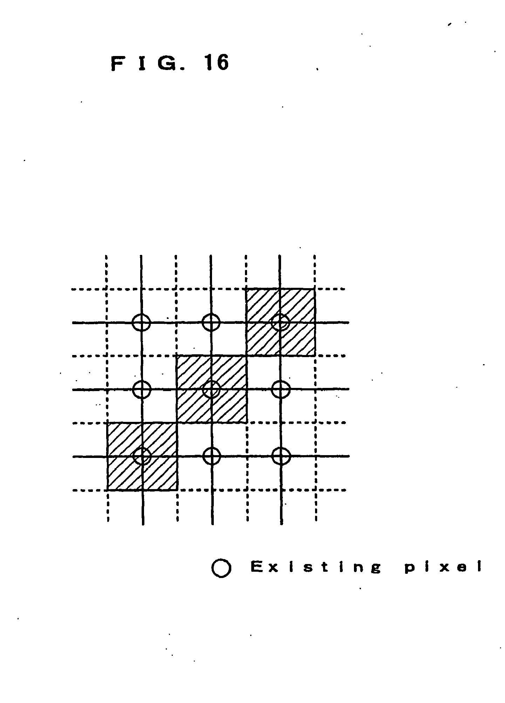

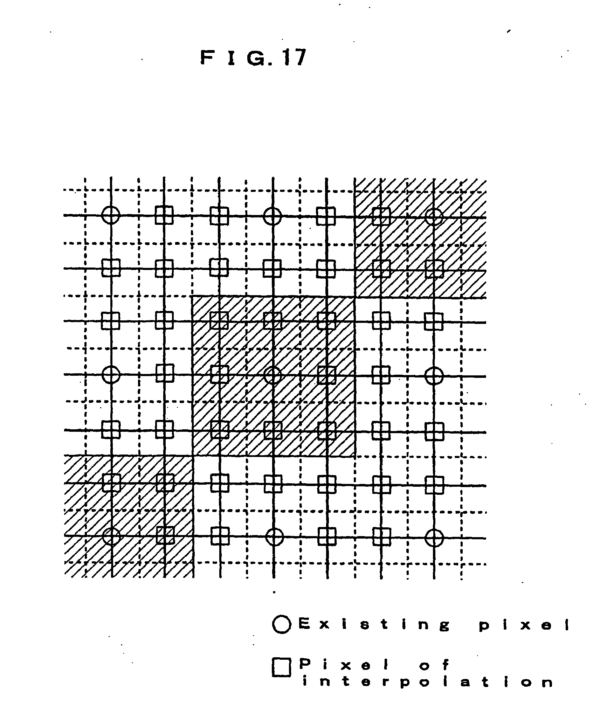

Fig. 15 shows pixels of interpolations increased three times the source in both vertical and horizontal directions by the nearest method. Before interpolation, it is assumed that there are four pixels (□△○●) at the corners. When pixels of interpolations are generated, the nearest pixel data among the four pixels is given to them as is. That is, as regards this example, each of the four pixels at the corners is duplicated to pixels of interpolations adjacent to it. By this processing, an source image which is shown in Fig. 16 where black pixels are arranged diagonally against a background of white pixels changes to an image which is shown in Fig. 17 where black pixels are enlarged three times the source in both vertical and horizontal directions while they remain arranged diagonally. The nearest method has a feature of keeping the edges of an image as is. Thus, after the image is enlarged, its edges remains unchanged, though jaggy contours are found.

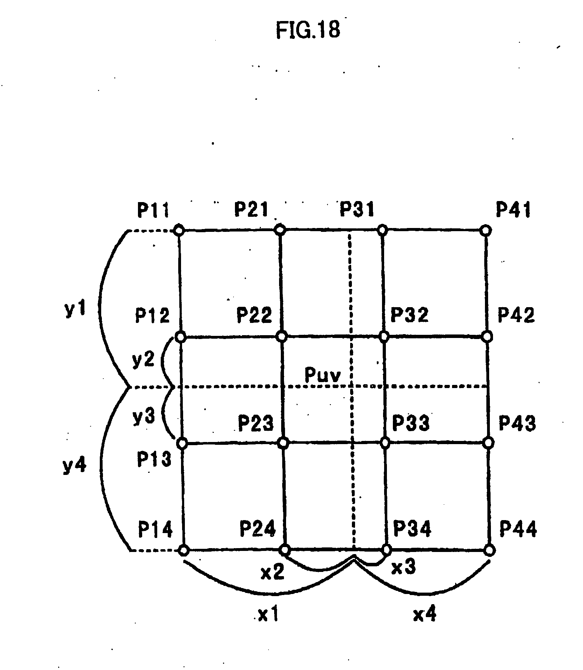

After pixels of interpolations are generated by the first interpolation processing in the manner described above, unless the above-mentioned rate is "1," the second interpolation processing is further executed. In the present example, interpolation by the cubic method is executed as the second interpolation processing, which will be described below. In the cubic method, as is shown in Fig. 18, not only four grid points surrounding a desired point Puv to be interpolated, but also outer grid points that further surround the four grid points, a total of 16 grid points are used.

When the 16 grid points surrounding the point Puv to be interpolated are given their tone values, the luminance of the point Puv is determined, subject to the influence of these tone values on the point Puv. For example, if interpolation is executed, based on a linear expression, the tone values of two grid points between which the point Puv exists are added with each point being given a weight in inverse proportion to its distance from the point Puv. When taking notice of the X axis direction, we express the distance of the above 16 grid points from the point Puv as follows: the distance to the outer left grid points is x1; the distance to the inner left grid points is x2; the distance to the inner right grid points is x3; and the distance to the outer right grid points is x4. We use function f (x) to express the degree of influence of the tone of the gird points on the luminance of the point Puv, according to the above distance. When taking notice of the Y axis direction, we express the distance of the above 16 grid points from the point Puv as follows: the distance to the top grid points is y1, the distance to the inner grid points above the point Puv is y2, the distance to the inner grid points below the point Puv is y3, and the distance to the bottom grid points is x4. Similarly, we use function f (y) to express the degree of influence of the tone of the gird points on the luminance of the point Puv, according to the above distance.

The 16 grid points act on the point Puv to be interpolated with the degree of their influence depending on their distance from the point Puv, which is expressed as described above. The degree of influence of the tone data of all grid points on the point Puv in the X and Y directions in the aggregate can be expressed in a general equation as below:

[Equation 2]

$$P = [f(y1) \; f(y2) \; f(y3) \; f(y4)] \begin{pmatrix} P11 & P21 & P31 & P41 \\ P12 & P22 & P32 & P42 \\ P13 & P23 & P33 & P43 \\ P14 & P24 & P34 & P44 \end{pmatrix} \begin{pmatrix} f(x1) \\ f(x2) \\ f(x3) \\ f(x4) \end{pmatrix}$$

Hereupon, the degree of influence of the grid points on the point Puv depending on their distance can be expressed by a cubic convolution function as below:

$$f(t) = \{ \sin (\pi \; t) \} / \pi \; t$$

Using the absolute values of the coordinates (u,v) of the point Puv, we can calculate the above distance values of x1 to x4 and y1 to y4 as follows:

$$x1 = 1 + (u - |u|) \qquad y1 = 1 + (v - |v|)$$

$$x2 = (u - |u|) \qquad y2 = (v - |v|)$$

$$x3 = 1 - (u - |u|) \qquad y3 = 1 - (v - |v|)$$

$$x4 = 2 - (u - |u|) \qquad y4 = 2 - (v - |v|)$$

On the above assumption, we develop P as follows:

[Equation 3]

$$P = [f(y_1)\ f(y_2)\ f(y_3)\ f(y_4)] \begin{pmatrix} P11 \cdot f(x_1) + P21 \cdot f(x_2) + P31 \cdot f(x_3) + P41 \cdot f(x_4) \\ P12 \cdot f(x_1) + P22 \cdot f(x_2) + P32 \cdot f(x_3) + P42 \cdot f(x_4) \\ P13 \cdot f(x_1) + P23 \cdot f(x_2) + P33 \cdot f(x_3) + P43 \cdot f(x_4) \\ P14 \cdot f(x_1) + P24 \cdot f(x_2) + P34 \cdot f(x_3) + P44 \cdot f(x_4) \end{pmatrix}$$

$$= f(y_1)\ \{P11 \cdot f(x_1) + P21 \cdot f(x_2) + P31 \cdot f(x_3) + P41 \cdot f(x_4)\}$$
$$+ f(y_2)\ \{P12 \cdot f(x_1) + P22 \cdot f(x_2) + P32 \cdot f(x_3) + P42 \cdot f(x_4)\}$$
$$+ f(y_3)\ \{P13 \cdot f(x_1) + P23 \cdot f(x_2) + P33 \cdot f(x_3) + P43 \cdot f(x_4)\}$$
$$+ f(y_4)\ \{P14 \cdot f(x_1) + P24 \cdot f(x_2) + P34 \cdot f(x_3) + P44 \cdot f(x_4)\}$$

$$= P11 \cdot f(x_1) \cdot f(y_1) + P21 \cdot f(x_2) \cdot f(y_1) + P31 \cdot f(x_3) \cdot f(y_1) + P41 \cdot f(x_4) \cdot f(y_1)$$
$$+ P12 \cdot f(x_1) \cdot f(y_2) + P22 \cdot f(x_2) \cdot f(y_2) + P32 \cdot f(x_3) \cdot f(y_2) + P42 \cdot f(x_4) \cdot f(y_2)$$
$$+ P13 \cdot f(x_1) \cdot f(y_3) + P23 \cdot f(x_2) \cdot f(y_3) + P33 \cdot f(x_3) \cdot f(y_3) + P43 \cdot f(x_4) \cdot f(y_3)$$
$$+ P14 \cdot f(x_1) \cdot f(y_4) + P24 \cdot f(x_2) \cdot f(y_4) + P34 \cdot f(x_3) \cdot f(y_4) + P44 \cdot f(x_4) \cdot f(y_4)$$

As is called the cubic convolution function, the function f (t) of the degree of influence of the grid points on the point Puv depending on their distance is approximated by the following cubic expression:

[Equation 4]

$$f(t) = \{\sin(\pi t)\}/\pi t$$
$$\doteq \begin{cases} 1 - 2|t|^{**}2 + |t|^{**}3 & : 0 \leq |t| < 1 \\ 4 - 8|t| + 5|t|^{**}2 - |t|^{**}3 & : 1 \leq |t| < 2 \\ 0 & : 2 \leq |t| \end{cases}$$

This cubic method is characterized in that the tone gradually changes during the move from one grid point toward another, which is known as cubic functionally dependent change.

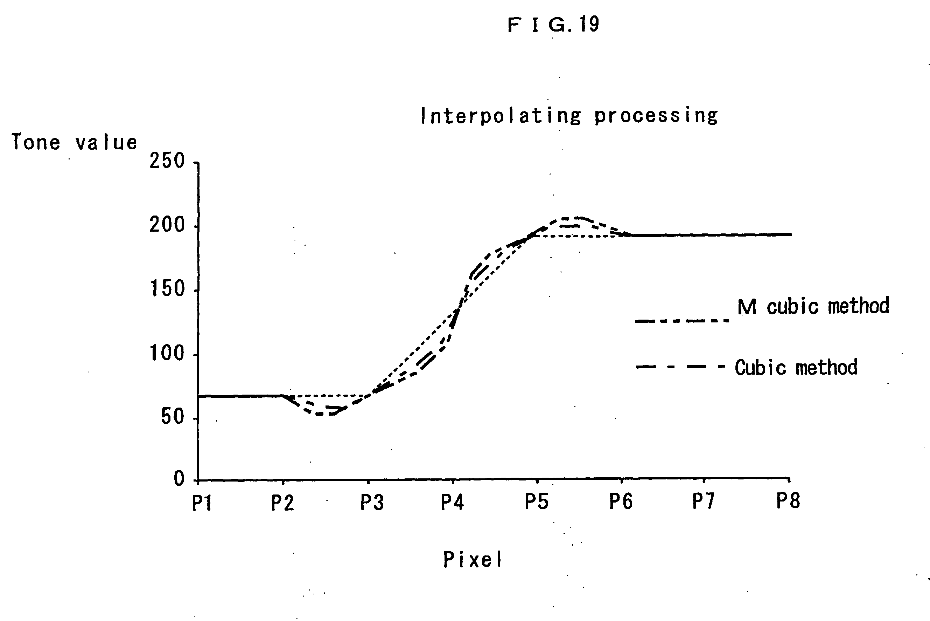

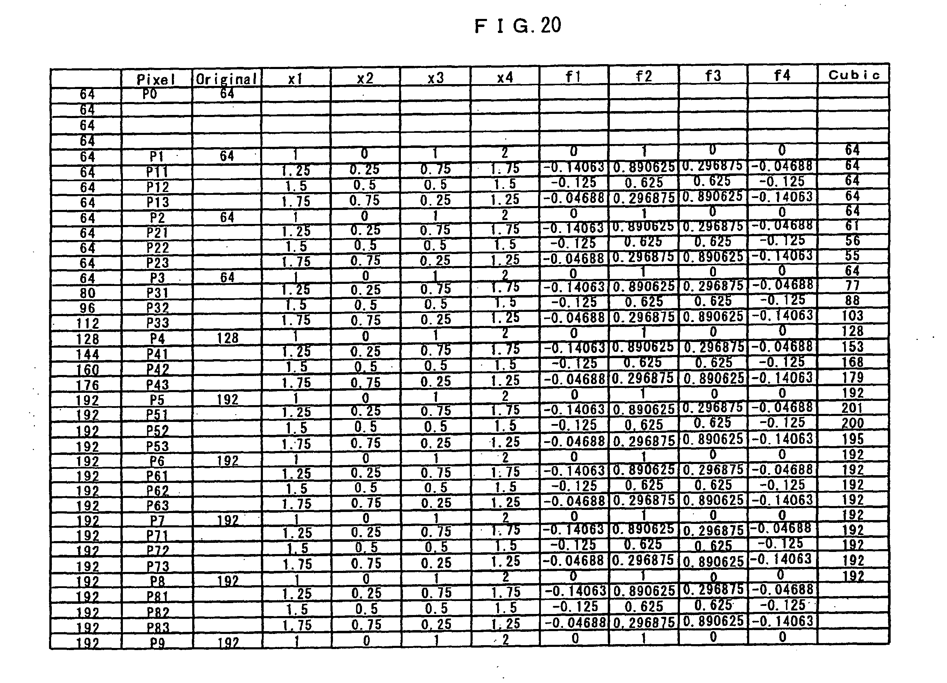

Figs. 19 and 20 presents sample data on interpolation processing by the cubic method. For easy understanding, we use a model of pixels where a horizontally lengthening edge is formed, but no pixel data change occurs in the vertical direction to explain this interpolation processing. It is assumed that three pixels are interpolated.

Sample values listed in Fig. 20 are first explained. In the "Source" column at the left, the tone values of the pixels before interpolation are given. In this column, from the top to down, there are four pixels (P0, P1, P2, P3) with a tone value of "64", one pixel (P4) with a tone value of "128, " and five pixels (P5, P6, P7, P8, P9) with a tone value of "192". The edge is part of the pixel with a tone value of "128."

Three pixels (Pn1, Pn2, Pn3) are to be interpolated between the source pixels with distance between these pixels being "0.25." The above distance values x1 to x4 for each point to be interpolated are given in the columns in the middle of the table. For the values of x1 to x4, functions f (x1) to f (x4) are separately calculated. When x1, x2, x3, and x4 are, for example, "1.25," "0.25," "0.75," and "1.75," respectively, the f (t) calculations for each are approximately "-0.14," "0.89," "0.30," and "-0.05." When x1, x2, x3, and x4 are "1.50," "0.50," "0.50," and "1.50," " respectively, the f (t) calculation for each are approximately "-0.125," "0.625," "0.625," and "-0.125." When x1, x2, x3, and x4 are "1.75," "0.75," "0.25," and "1.25," respectively, the f (t) calculations for each are approximately "-0.05," "0.30," "0.89, " and "-0.14 ." By using the above results, the tone values of the points to be interpolated are calculated. The results of calculation are given in the rightmost column of the table and plotted in a graph which is shown in Fig. 9. What is meant by this graph will be described in detail later.

As no pixel data change in the vertical direction is assumed, arithmetic is simplified. Only the pixel da a of the four grid points (PI, P2, P3, P4) placed in the horizontal direction must be referred to. By using the function f (t) of the degree of influence of the grid points on a point to be interpolated, depending on their distance from that point, the cubic value (tone value) of the point to be interpolated can be calculated as follows:

$$P = P1 \cdot f(x1) + P21\ f(x2) + P3 \cdot f(x3) + P4 \cdot f(x4)$$

Hence, the cubic value (tone value) of point P21 to be interpolated is calculated as follows:

$$P21 = 64*f(1.25) + 64*f(0.25) + 64*f(0.75) + 128*f(1.75$$

$$= 64*(-0.14063) + 64*(0.890625) + 64*(0.296875) +$$

$$128*(-0.04688)$$

$$= 61$$

According to the cubic method, tone change is expressed cubic functionally and thus the quality of interpolation result can be adjusted by adjusting the obtained curve shape.

As examples of the adjustment, the following are given:

$$0 < t < 0.5\ f(t) = -(8/7)\ t**3 - (4/7)\ t**2 + 1$$

$$0.5 < t < 1\ f(t) = (1 - t)(10/7)$$

$$1 < t < 1.5\ f(t) = (8/7)(t - 1)**3 + (4/7)(t - 1)**2$$

$$- (t - 1)$$

$$1.5 < t < 2 \quad f(t) = (3/7)(t - 2)$$

Such adjustment is referred to as a hybrid-by-cubic method or an M (Modified) cubic method.

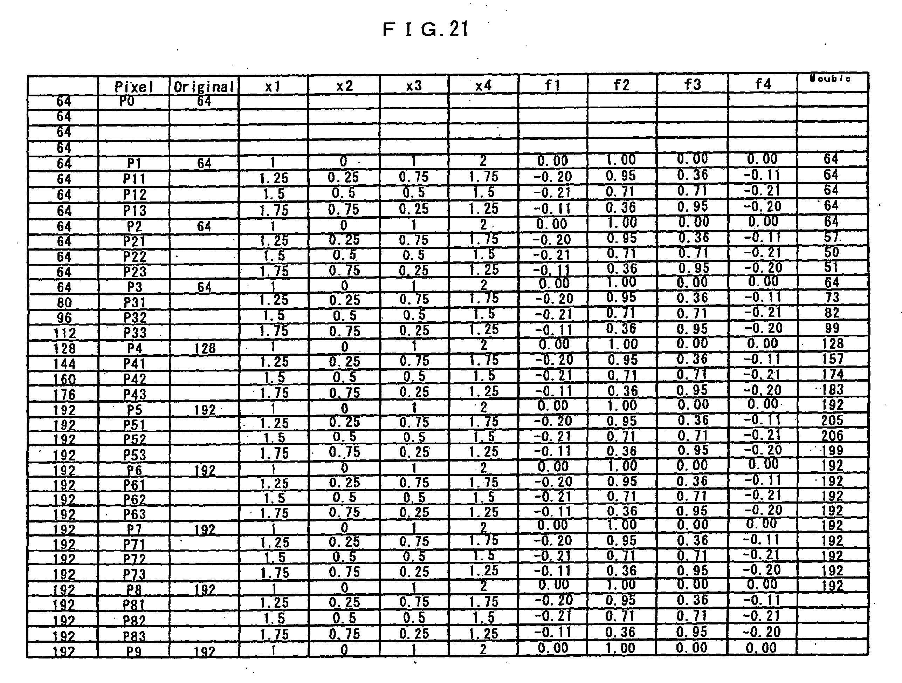

Fig. 21 presents sample data on interpolation processing by the M-cubic method, which lists the results of this interpolation for the model on the same assumption as for the cubic method. The result of interpolation processing by the M-cubic method is also shown in Fig. 19 where the cubic functional curve of the M-cubic example becomes slightly steeper than the curve of the normal cubic method, correspondingly making all parts of the image somewhat sharper.

Whether the M-cubic method or the normal cubic method is used, once pixels of interpolations have been generated by the cubic method in the above step of the second interpolation processing, all parameters to be assigned to the above calculation equation for data to be blended are now obtained: i.e., data generated by the first interpolation processing, rate, and data generated by the second interpolation processing. By assigning these parameters to the above equation, calculation of the pixels of interpolations data to be blended at a ratio between the first and second interpolations is executed.

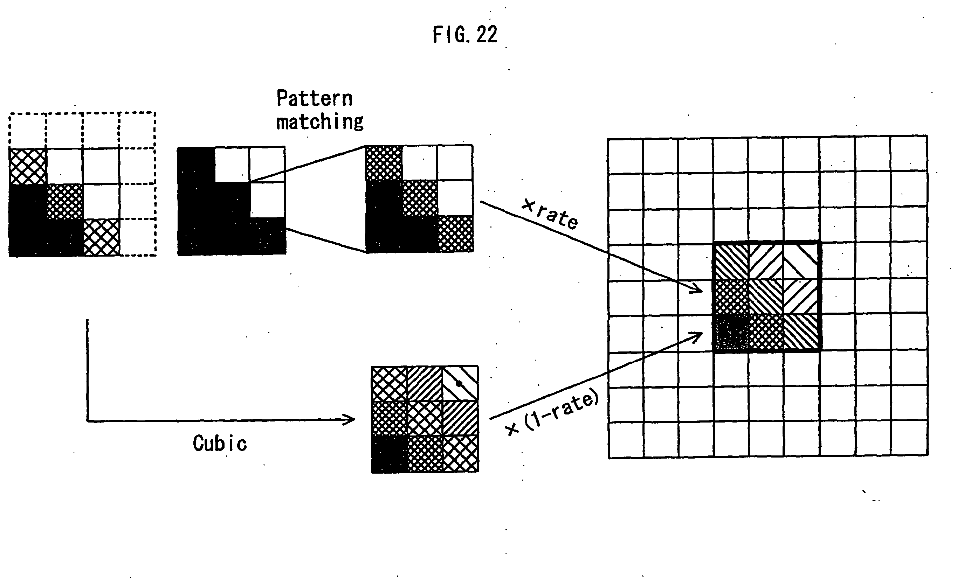

Using example image data which is shown in Fig. 22A, the data processing procedure up to the blending step will be explained below. Hereupon, it is assumed for this explanation that the number of discrete luminance values Y appearing in the zone comprising $5 \times 5$ pixels around the target pixel is greater than 15 and the above-mentioned rate is neither "0" nor "1." Thus, after the rate is calculated in the step S108, the first interpolation is executed in the step S114. The zone (drawn with solid lines) comprising $3 \times 3$ pixels around the target pixel, shown in Fig. 22A, is extracted in the step S202 and a two-valued pattern of the pixels, which is shown in Fig. 22B, is created from the pixel data in that zone.

As this two-valued pattern of the pixels matches the corresponding given edge pattern prepared in advance, processing by the pattern matching method is executed in the step S 208 and pixels of interpolations which are shown in Fig. 22C are generated. By this processing, from the $3 \times 3$ pixels shown in Fig. 22A where an edge appears in the diagonal direction with the luminance gradient toward the left bottom, pixels of interpolations shown in Fig. 22C are generated where the property of the 3x3 pixels is reflected; i.e. the edge in the diagonal direction remains as is and the luminance gradient toward the left bottom highlights the edge.

On the other hand, in the step S118, from the pixel data shown in Fig. 22A, pixels of interpolations which are shown in Fig. 22D are generated. Hereupon, to generate a pixel of interpolation, data of 16 pixels surrounding the pixel is used. For example, to generate a right top pixel with a black dot, shown in Fig. 22D, 16 pixels in the zone drawn with solid and dotted lines, shown in Fig. 22A, are used. In the thus generated pixels of interpolations, subtle tone difference between the pixels in the above zone drawn with the solid and dotted lines is reflected due to the characteristics of the cubic method, while the edge is made vague as contrasted with the edge made by the above pattern matching method. That is, the edge appears in the diagonal direction of the rectangle comprising the pixels of interpolations, but the luminance gradient toward the left bottom becomes moderate and this makes the edge vague.

After the pixels of interpolations are generated by the first and second interpolation processing, the pixels of interpolations generated by the first interpolation processing are multiplied by rate and the those generated by the second interpolation processing are multiplied by (1 - rate) In this way, blended pixels of first and second interpolations, which are shown in Fig. 22E, are generated. Once the blended pixels of first and second interpolations to the target pixel, as shown in Fig. 22E, have been generated, the judgment in the step S122. is made. As long as another target pixel of interpolation exists in other coordinates, the interpolation procedure is repeated. When all target pixels have been processed, the interpolation-processed image data is transferred to the next process in the step S124. However, depending on the magnifying rate of interpolations, the amount of the interpolation-processed image data may become quite huge. There may be hardware limitation; i.e., the available memory area for the printer driver 12c is not so much. In this case, the above data may be output in blocks of a given amount.

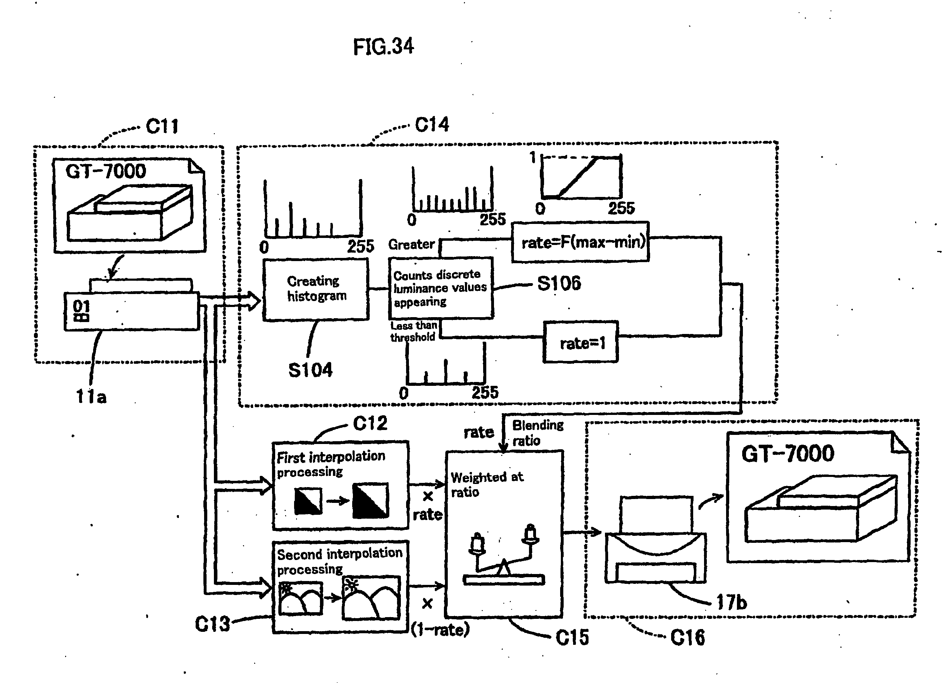

Finally, a general view of the present embodiment of the invention is shown in Fig. 34. The scanner 11a scans a photograph and generates digitized source image data that is processed in the following processes. The unit to acquire this source image data is the image data acquisition unit C11.

In the step S104, the source image data is read and a histogram of luminance values in the zone comprising $5 \times 5$ pixels around a target pixel is created. In the step S106, the number of discrete luminance values appearing in the created histogram is counted. If this count is less than a predetermined threshold, the attribute of the image is simply regarded as a non-natural picture and the blending ratio (rate) of interpolations by the first interpolation processing to those by the second interpolation processing is set to 1. If the count is greater than the threshold, the attribute of the image is regarded as a natural picture or a mixed image of natural and non-natural pictures and the rate is determined by the evaluation function F. This evaluation function F is a function of difference between the maximum luminance value Ymax and the minimum luminance value Ymin in the above zone and sets the rate by evaluating edge-like visualization. The unit to obtain a blending ratio between the first and second interpolations in this way is the first unit of determining a blending ratio C14.

In the step S114, interpolation processing is executed within the predetermined zone around the target pixel by the pattern matching method or the nearest method The interpolation that tends to keep the edge intact is carried out by the first interpolation processing unit C12.

On the other hand, in the step S118, interpolation processing is executed by the cubic method in which subtle tone difference between the pixels is reflected, while the edge is made vague, as contrasted with the edge made by the pattern matching method. This interpolation is carried out by the second interpolation processing unit C13.

Then, in the step S120, the data of pixels separately interpolated by the first and second interpolations are weighted and added by the equation (1) to which the blending ratio (rate) determined as described above is assigned and blended pixels of first and second interpolations are generated. The total sum of the blending ratio, of course, becomes "1." This step is carried out by the image data blending unit C15.

Following that, the above procedure is repeated with the target pixel being changed until all target pixels have been processed. Then, an interpolation-processed image is created. Thus, completely interpolation-processed image data is output in the step S124. This step is carried out by the image data output unit C16. By way of example, if the image is output to the printer 17b, its print will be produced.

Next, a preferred embodiment of the present invention will be described below. In this embodiment, a printing system uses the image data interpolation program. Components used in common with the forgoing examples are referred to as in the foregoing description.

To the above-mentioned printer 17b, the result of processing of the application 12d is output through the printer driver 12c as print data. The color printer 17b prints the image from the data by printing the dots of the image on printing paper with color inks.

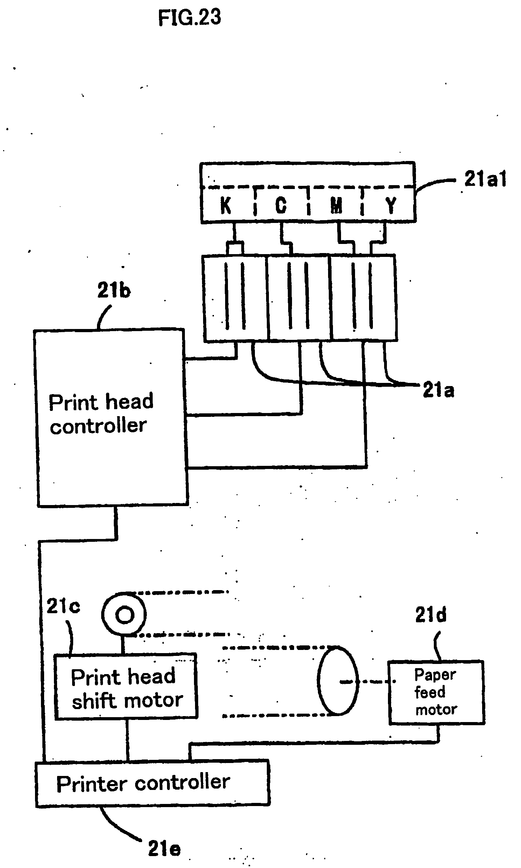

The outline structure of a color ink jet printer 21 as an example of the color printer is shown in Figs. 23 to 25. The color ink jet printer 21 is equipped with a dot printing mechanism consisting of a print head 21a comprising three print head units, a print head controller 21b that controls the print head 21a, a print head shift motor 21c for moving the print head 21a in the shift direction, a paper feed motor 21d for feeding printing paper in the line feed direction, and a printer controller 21e for interfacing these print head controller 21b, print head shift motor 21c, and paper feed motor 21d with external equipment. The color ink jet printer 21 can print an image while scanning the print head 21a on an image recording medium which is printing paper, according to the print data.

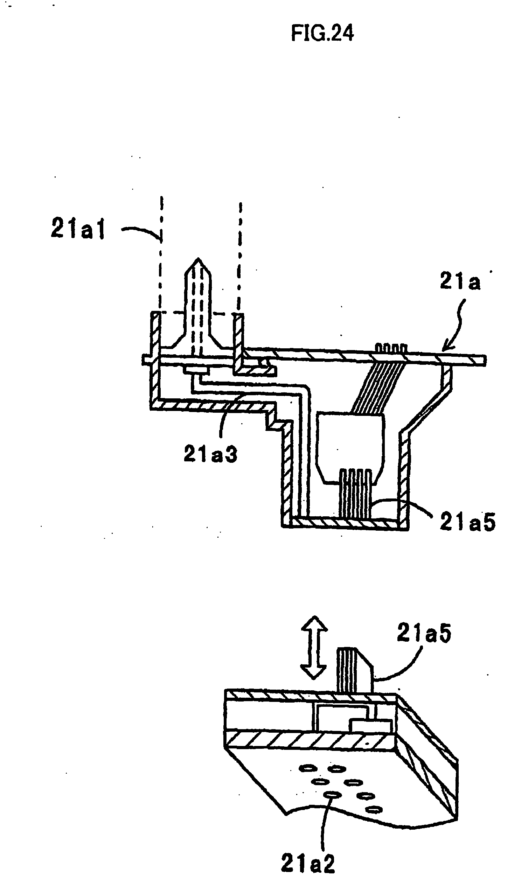

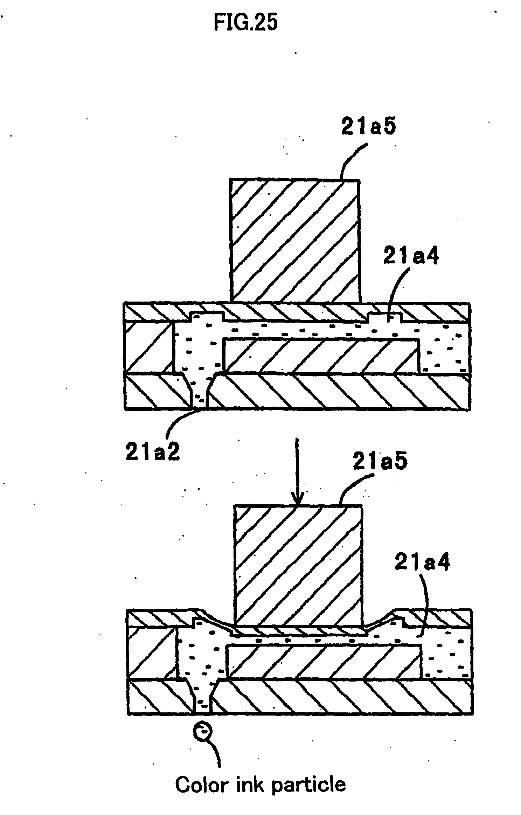

Fig. 24 shows the internal structure of the print head 21a. Fig. 25 illustrates the ink jet mechanism. Inside the print head 21a, a narrow pipe line 21a3 from a color ink tank 21a1 to nozzles 21a2 is formed and terminates at a section where an ink chamber 21a4 is formed. The walls of the ink camber 21a4 are made of flexible material and are furnished with a piezo element 21a5 that is an electostriction device. When voltage is applied to the piezo element 21a5, its crystal structure is distorted and the element performs rapid electrical-to-mechanical energy conversion. By the distortion of the crystal structure, the wall of the ink chamber 21a4 is pushed and the capacity of the chamber 21a4 decreases. Then, a given amount of color ink particles are jetted out of the nozzles 21a2 provided at the bottom of the ink chamber 21a4 This pump structure is referred to as a micro-pump mechanism.

On one print head unit, two independent rows of nozzles 21a2 are formed so that particular color ink will be supplied to each row of nozzles 21a2. Thus, three print head units each have two rows of nozzles and a maximum of six color inks can be used. In the printer example shown in Fig. 23, it is assumed that color inks are used in the following manner: a black ink is supplied to two rows of nozzles of the left print head unit, a cyan ink is supplied to only one row of nozzles of the middle print head unit, and a magenta ink and a yellow ink are separately supplied to two right and left rows of nozzles of the right print head unit

Spacing of the nozzles 21a2 in the row lengthwise direction, formed on the bottom surface of the print head 21a, does not agree with the resolution of printing. In general, this spacing of the nozzles 21a2 is larger than the resolution of printing. Notwithstanding, the printer is able to print at high resolution because the paper feed motor 21d is controlled to appropriately feed paper in the line feed direction. For example, if paper is fed in eight steps over the distance of the spacing of the nozzles 21a2 and the print head 21a is moved in the shift direction for each step, the printing resolution increases. In the shift direction, because jetting color ink at arbitrary intervals determines resolution, it can be said that resolution depends on timing control. Exactly speaking, the dot diameter of color ink is also considered as a factor in determining resolution, but this is ignored for easy understanding convenience.

In the embodiment of the invention, it is assumed that the invention is embodied on the above-mentioned hardware system and printing is executed, based on the image data acquired by the image input device of the computer system 10. If there is difference between the resolution of the source image data and the resolution of the color printer 17b, interpolation processing is executed. The following will explain internal operation flow: after the application 12d starts to execute print processing, change is made to the resolution and tone of the image data and the print data that reflects this change is output to the color printer 17b.

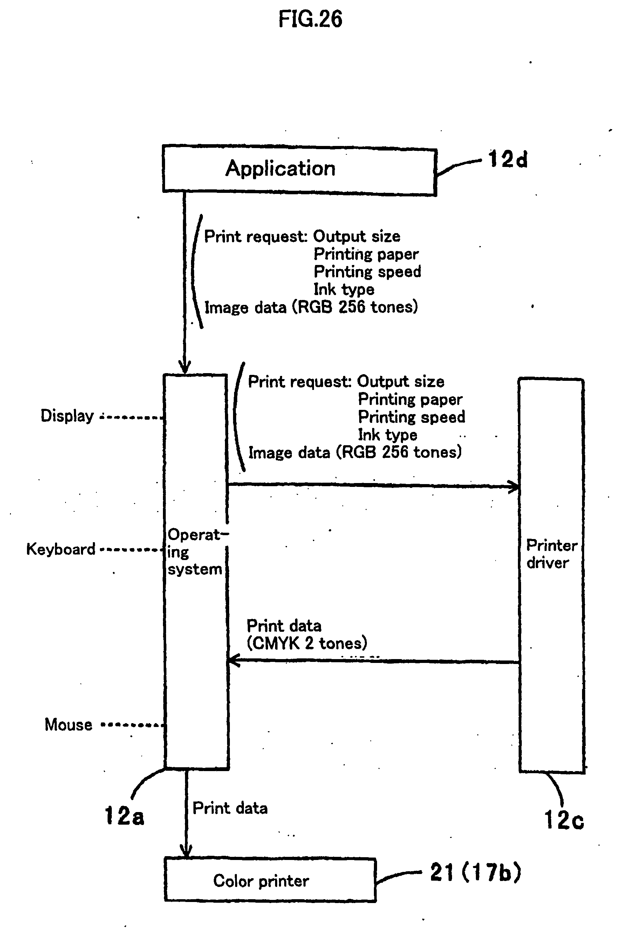

Fig. 26 illustrates the flow of image data. The application 12d issues a print request to the operating system 12a, when the application passes the parameters of output size, printing paper, print speed, and ink type, as well as image data in RGB 256 tones to the operating system. Then, the operating system 12a passes these parameters and the image data to the printer driver 12c. At the same time, the operating system 12a displays the image on the display 17a by means of the display driver 12b and transfers the result of user operation via the keyboard 15a and the mouse 15b to the printer driver 12c. The printer driver 12c executes image interpolation processing so that the specified output size will be obtained, and generates print data. This print data, which is usually in CMYK two tones, is output to the color printer 17b from the hardware port under the control of the operating system 12a.

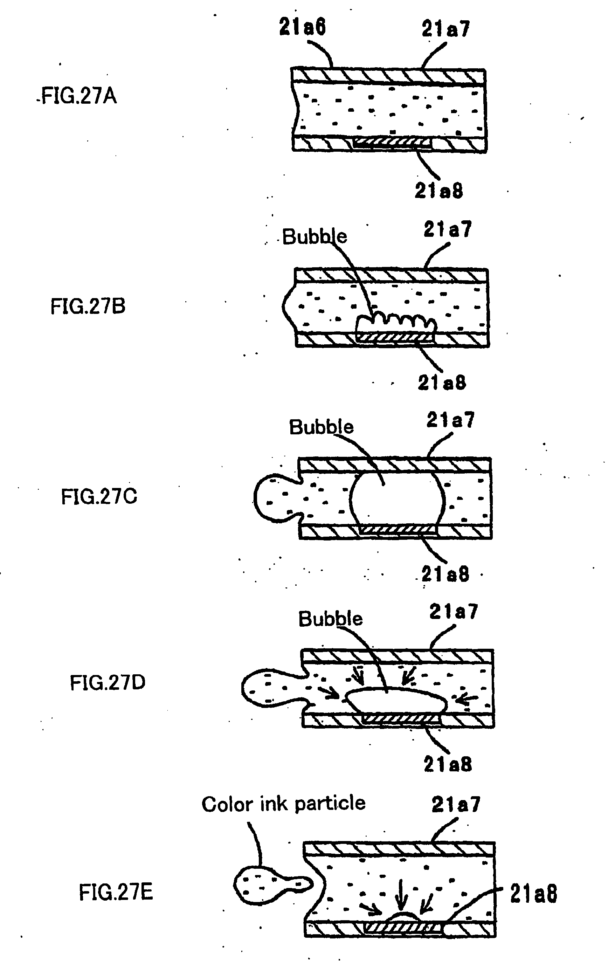

In the embodiment, the print control program is executed on the computer system 10 in this way and the print data is output to the color printer 17b. However, the applicable printer is not limited to the above color printer 21 of ink jet type. Although this color printer is, for example, an ink jet type that uses micro-pump mechanism, other mechanisms can be used. A pump mechanism of bubble jet type is put into practical use, as is shown in Fig. 27, where the wall of a pipe lin 21a7 is furnished with a heater 21a8 near the nozzle 21a6. As the color ink is heated by the heater 21a8, a bubble is gene and eventually the color ink is jetted out by the pressure of the bubble.

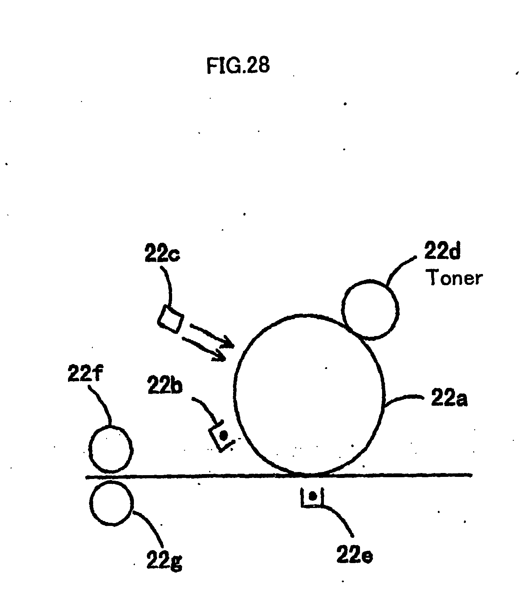

Furthermore, Fig. 28 shows the outline structure of the primary part of what is called an electrophotographic color printer 22 as another mechanism. Along the circumference of a rotary drum 22a as a photosensitive body, a charger unit 22b, an exposure unit 22c, a developer unit 22d, and a transfer unit 22e are arranged in position in harmony with the direction of rotation. After the charger unit 22b uniformly charge the surface of the circumference of the rotary drum 22a, the exposure unit 22c discharges the drum surface where an image is captured, the developer unit 22d makes toner cling to only the discharged surface of the drum, and the transfer unit 22e transfers the toner onto paper as an image recording medium. Then, as paper passes between a heater 22f and a roller 22g, the toner is fused and fixated onto the paper. Because a set of these units carries out printing by using one color toner, four sets for all four colors are provided

In short, there is no particular limitation on the practical structure of the printer. Not only the application range of particular printing methods as described above also the application manner may be varied.

Next, procedure in which optimum image processing is executed by using the above printing system, according to the output resolution, will be explained below.

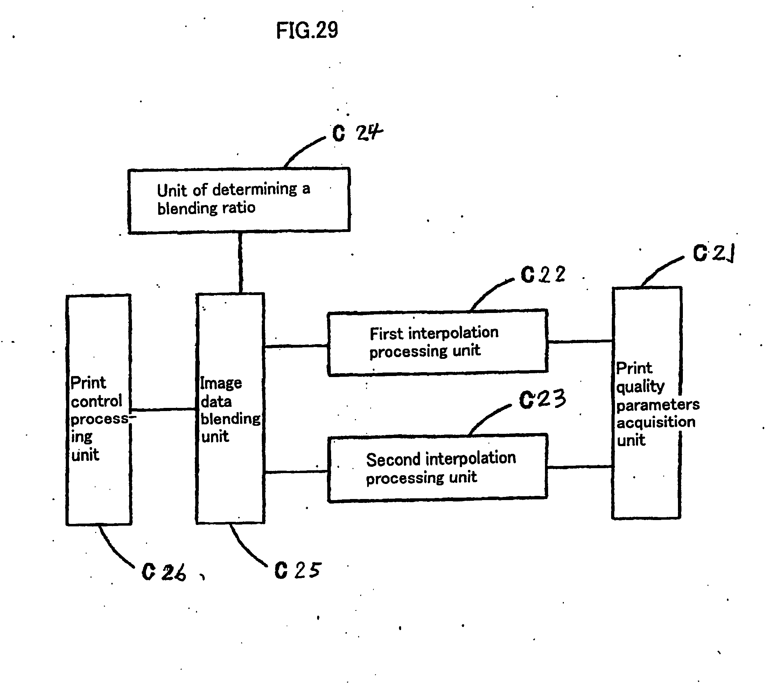

Fig. 29 is a block diagram showing the outline configuration of this printing system. A print quality parameters acquisition unit C21 acquires print quality parameters, according to which the input image is printed in the activated print job. A first interpolation processing unit C22 and a second interpolation processing unit C23 perform interpolation processing by which the number of pixels constituting the image data multiplies. The first interpolation processing unit C12 is able to execute the pattern matching method and the nearest method as interpolation processing. The second interpolation processing unit C13 is able to execute the cubic method as interpolation processing.

A second unit of determining a blending ratio C24 determines a blending ratio between the pixels interpolated by the first interpolation processing unit C12 and those interpolated by the second interpolation processing unit C13, based on the print quality parameters acquired by the above print quality parameters acquisition unit C21. Once the second unit of determining a blending ratio C24 have determined a blending ratio, an image data blending unit C25 blends the data of the pixels interpolated by the first interpolation processing unit C22 and the data of the pixels interpolated by the second interpolation processing unit C23 at that blending ratio. Then, an image data output unit C26 generates printing data and executes printing, based on the pixels data blended by the image data blending unit C25.

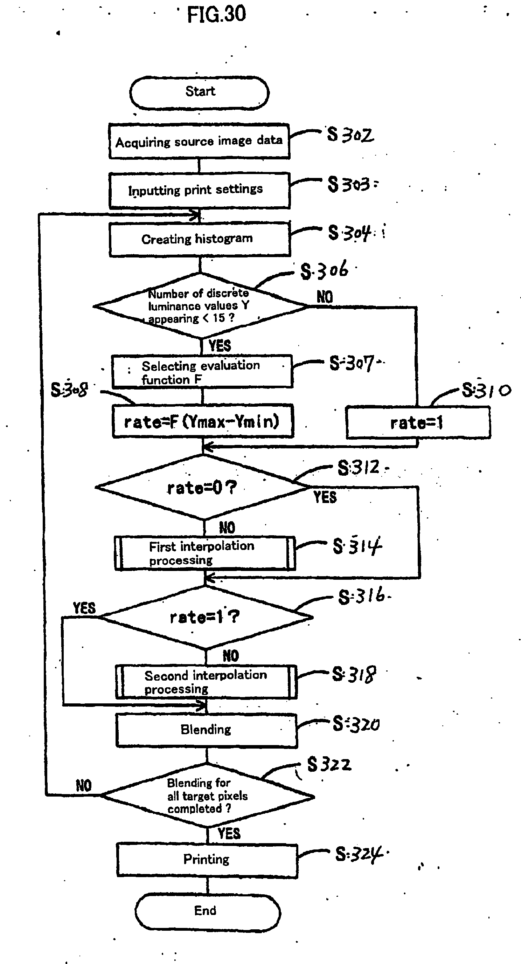

Fig. 30 is a flowchart illustrating the software operation flow regarding the print processing that the above printer driver 12c executes. In Fig. 30, source image data is acquired in step S302. For example, during process sequence in which an image is scanned by the scanner 11a under the control of the application 12d, the image data is processed by predetermined image processing, and printing from the image data is executed, image data of predetermined resolution is passed via the operating system 12a to the printer driver 12c and this stage corresponds to the step S302.

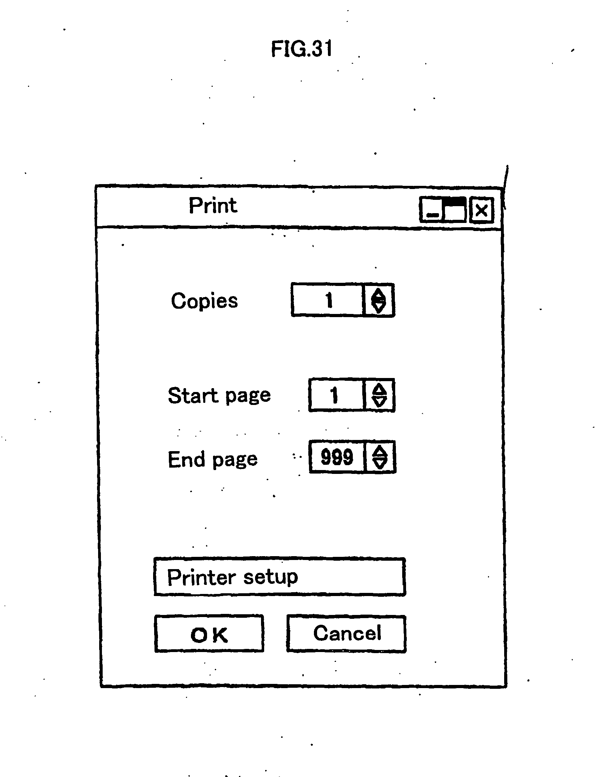

In step 303, print parameter settings are input. When the application 12d starts to execute print processing, if it is assumed that the operation system 12a provides the GUI environment, a print operation window like the one which is shown in Fig. 31 is displayed. Although parameters to be input on this window may be varied, those in the present embodiment are "Copies (of prints), " "Start Page, " and "End Page. " As operation command buttons, the "OK" button, the "Cancel" button, and the Printer Setup" button are provided.

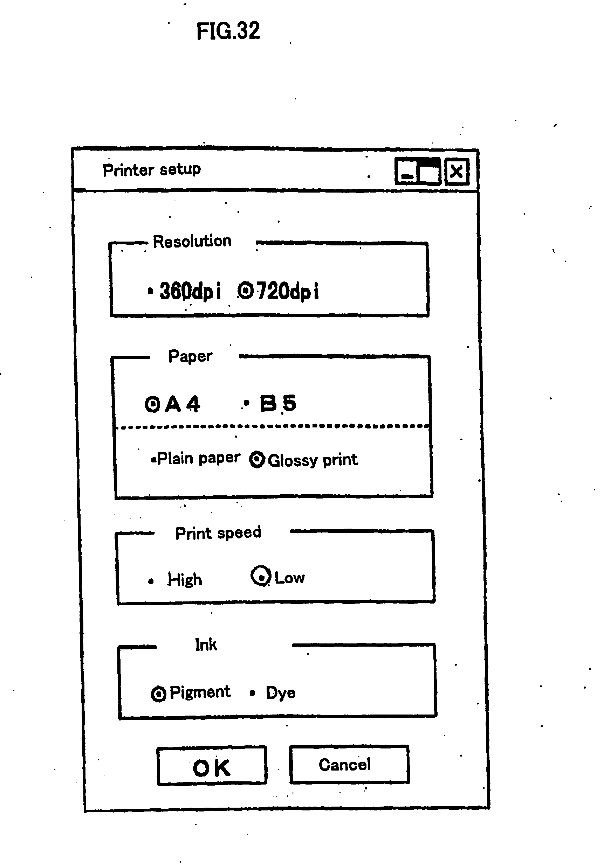

When you choose the "Printer Setup" button, a window like the one which is shown in Fig. 32 is displayed. This window is provided to allow the user to set print parameters which are varied, depending on the printer-specific capability. As will be described later, depending on the settings specified on this window, a blending ratio changes. In the present embodiment, the user can select either "360 dpi" or "720 dpi" as "Resolution (of print) ." Furthermore, the user may select "A4" or "B5" size and "Plain Paper" or "Glossy Print" quality as "Paper," "High" or "Low" as "Print Speed." and "Pigment" or "Dye" as "Ink." Of course, these print setting parameters are examples. It is not necessary that the printer setup window be embodied to allow the user to select all these parameters. This window can be embodied in various ways, for example, it can be designed such that the user can specify an ink type through bidirectional communication with the above color printer 17b.

In the present embodiment, the settings of the above parameters are stored into a setup file under the management of the operating system 12a. If these parameters have previously been set, the setup file is referred to and read. If the operator changes the settings for print operation, the updated settings are read as the set print parameters. The processing of this step S303 is regarded as the step or function of print quality parameters acquisition from the software point of view. However, it can be understood that the description of all steps including this step of print quality parameters acquisition to be executed by the computer does not directly include the operation of the operating system 12a itself and hardware. On the other hand, if this step is considered to be implemented as part of the organically integrated operation of the hardware including the CPU, it corresponds to the action of the print quality parameters acquisition unit C21.

In step S304, a pixel in the read image data is set as a target of interpolation, the pixel data in a zone comprising $5 \times 5$ pixels around the target pixel is set to be reference pixels, and a histogram of the luminance values of the reference pixels is created. In step S306, the number of discrete luminance values appearing in the created histogram is counted and judgment is made as to whether this count is less than 15. The greater the number of discrete luminance values, the greater will be the number of colors assigned to the reference pixels. From this fact, if the number of discrete luminance values appearing in the histogram is less than 15, the reference pixels are regarded as the pixels belonging to a non-natural picture. When the judgment is the above step S306 is that the number of discrete luminance values appearing is less than 15, a blending ratio (rate) of interpolations by the above first interpolation processing to those by the second interpolation processing is set to 1 in step 310.

When the judgment in the step S306 is that the number of discrete luminance values appearing is not less than 15, an evaluation function F is selected in step 307, based on the settings of the print parameters input in the above step S303. In the step 307, if high print quality is set, an evaluation function F is selected that gives a high blending ratio of the pixels interpolated by the second interpolation processing to those interpolated by the first interpolation. In the present embodiment, two types of evaluation functions are prepared: one for high print quality and the other for low print quality. The detail thereof will be described later. The value of the evaluation function for high print quality is smaller than the value of the evaluation function for low print quality. This evaluation function F is a function of the width of the range within which the luminance values of the above reference pixels fall, that is, the difference between the maximum luminance value Ymax and the minimum luminance value Ymin among the reference pixels.

In step S308, to the evaluation function F selected in the above step S307, the difference between the maximum luminance value Ymax and the minimum luminance value Ymin based on the above histogram is assigned and the rate is determined. Thus, the sequence of the steps S304, S306, S307, S308, and S310 corresponds to the second step or function of determining a blending ratio. If these steps are considered to be implemented as part of the organically integrated operation of the hardware including the CPU, they are defined as the action of the second unit of determining a blending ratio C24.

After the rate is determined in the step S308 or the step S310, judgment is made as to whether the rate is "0" in step S312. When the rate is "0, the first interpolation processing is not executed. When the judgment in the step S312 is that the rate is other than "0, " the first interpolation processing is executed in step S314 . Thus, this step corresponds to the step or function of first interpolation processing. If this step is considered to be implemented as part of the organically integrated operation of the hardware including the CPU, it is defined as the action of the first interpolation processing unit C22.

Then, in step S316, judgement is made as to whether the rate is "1." When the rate is "1," the second interpolation processing is not executed. When the judgment in the step S316 is that the rate is not "1, the second interpolation processing is executed in step S318. Thus, this step correspond to the step or function of second interpolation processing. If this step is considered to be implemented as part of the organically integrated operation of the hardware including the CPU, it is defined as the action of the second interpolation processing unit C23. After the rate is determined in this way and the first and/or second interpolation processing is executed, in step S320, blending of pixel data of interpolations is performed, according to the following equation, where the set rate shall be assigned, and then pixels of interpolations are generated in step S320.

```
Data to be blended =

        (First interpolation) x rate + (Second interpolation)

    x (1 - rate)

                                                ... (1)
```

Thus, this step corresponds to the step or function of image data blending. If this step is considered to be implemented as part of the organically integrated operation of the hardware including the CPU, it is defined as the action of the image data blending unit C25. Upon the completion of the above sequence of generating data of interpolations to the target pixel, judgment is made as to whether blending of interpolated data has been completed for all target pixels in the input source image data in step S322. If not, the step S304 and subsequent steps are repeated until blending of interpolated data has been completed for all target pixels.

Upon the completion of blending of interpolated data for all target pixels, printing is executed, based on the interpolation-processed image data, in step S324. For the printer driver 12c, print data is not obtained only by resolution conversion; color conversion and halftone processing are further required. Thus, such conversion and processing are executed and the resultant print data is output to the color printer 7b. The processing of this step corresponds to the step or function of print control processing. If this step is considered to be implemented as part of the organically integrated operation of the hardware including the CPU, it is defined as the action of the print control processing unit C26.

Then, detailed processing for each step in the above flowchart will be explained below. In the present embodiment, judgment is made as to whether the source image acquired in the step S302 belongs to computer graphics (non-natural pictures) or photography (natural pictures) and the result of the judgment as well as the print quality parameters are reflected in setting a blending ratio between the first and second interpolations. To prevent incorrect selection of an interpolation method to be applied, it is, of course, possible to avoid fixing the above-mentioned rate to "1" or "0." However, in the present embodiment, if the number of discrete luminance values appearing in the reference pixels is less than 15, the pixels are regarded as those belonging to a non-natural picture. This is because the inventor considers it more important to avoid the application of the second interpolation processing to non-natural pictures; otherwise, the second interpolation would make contours vague in a non-natural picture.

For the above judgment, a histogram of luminance values, which is shown in Fig. 14, is used. In the step 104, the luminance values of the reference pixels in the zone comprising $5 \times 5$ pixels are obtained and a histogram is created to show how the pixels are distributed in the range of their luminance val es. The number of discrete luminance values appearing in the histogram, that is, how many luminance values appear for which the number of distributed pixels is other than "0" is counted, based on which, the judgment in the step S306 is made.

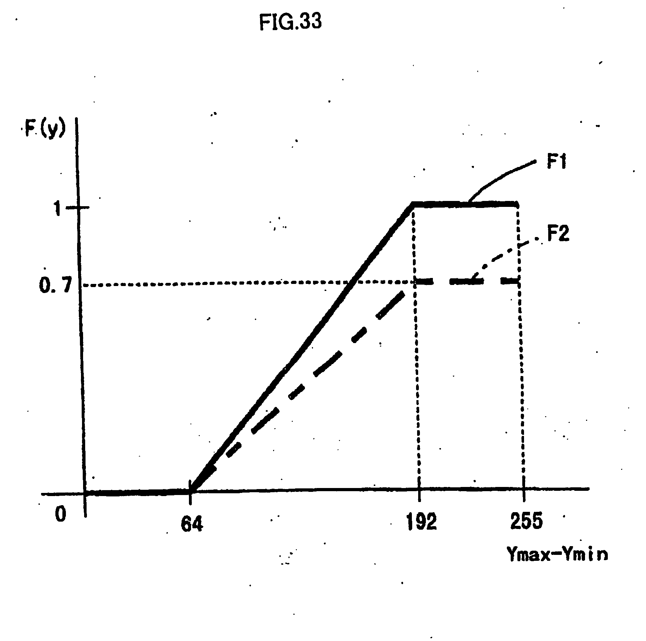

In the histogram of luminance values, if there are 15 or more luminance values for which the number of distributed pixels is other than "0," the blending ratio of the pixels interpolated by the above first interpolation processing to those interpolated by the second one is determined by the appropriate evaluation function. In the present embodiment, two evaluation functions are prepared beforehand: one for high print quality and the other for low print quality. If any one of the print parameters set on the window shown in Fig. 32 indicates high print quality, the evaluation function for high print quality is selected to be used in the step S306. Fig. 33 gives examples of evaluation functions F (y): F1 is the evaluation function for low print quality and F2 is the evaluation function for high print quality.

For the evaluation function F1 (y), the value of "y" falls within the range that $0 \leqq y \leqq 255$ and varies in the range that $0 \leqq F (y) \leqq 1$. F (y) is 0 in the range that $0 \leqq y \leqq 64$ and 1 in the range that $192 \leqq y \leqq 255$. F (y) linearly increases from 0 to 1 in the range that $64 \leqq y \leqq 192$. For the evaluation function F2 (y), the value of "y" falls within the range that $0 \leqq y \leqq 255$ and varies in the range that $0 \leqq F (y) \leqq 0.7$. F (y) is 0 in the range that $0 \leqq y \leqq 64$ and 0.7 in the range that $192 \leqq y \leqq 255$. F (y) linearly increases from 0 to 0.7 in the range that $64 \leqq y \leqq 192$.

Hereupon, the width of the range within which the luminance values falls, "Ymax - Ymin," shown in Fig. 14, is assigned to "y." Thus, the greater this width value, that is, the reference pixels make edge-like visualization due to mutual relation in luminance, the greater will be the rate. Even at the same width value, the value of the evaluation function F1 is always greater than the value of the evaluation function F2. This means that, for high print quality, even at the same width value, the blending ratio of the pixels interpolated by the second interpolation processing by which interpolation is executed without affecting the gradation of the tones to the pixels interpolated by the first interpolation becomes greater.

When "high resolution of print," "high printing paper quality, " and/or "low print speed" are selected, that is, printing for high print quality is executed, by executing the interpolation not affecting the gradation of the tones of the source image, subtle tone gradation is reproduced as the effect visible to the user on the image produced by printing. On the other hand, when printing for low print quality is executed, even if print data from which subtle tone gradation is reproducible is used for printing, such gradation is not reproduced as the effect visible to the user on the image produced by printing. Thus, it can be said that the second interpolation processing is worthy of being executed when high print quality is desirable. In the present embodiment, by using the evaluation function F2, the blending ratio of the pixels interpolated by the second interpolation processing to those interpolated by the first one is set high.

In the present embodiment, the ink type selection also influences the selection between the above evaluation functions. Selection can be made between "pigment" and "dye" as ink type; which is of high quality cannot be determined easily. However, due to its property, pigment ink does not easily blur as compared with dye and tends to highlight the edge contrast on the image produced by printing. Thus, it can be said that ink type selection reflects print quality. In the present embodiment, to obtain same level print result by using either of both ink types, the blending ratio of the pixels interpolated by second interpolation processing to those interpolated by the first one should be higher for "pigment" than as for "dye." In the present embodiment, the above evaluation function F2 shall be used when the ink selection is "pigment."

Of course, the manner of reflecting the evaluation functions and the settings the above print parameters acquired in interpolation in the present embodiment has been described above for illustrative purposes; a variety of manner thereof can be taken. For example, a plurality of evaluation functions can be prepared and they are not necessarily two types as described above. If there are four discrete print parameters to be set, influencing the print quality, as in the above embodiment, four evaluation functions may be prepare. It is conceivable that each time high quality setting increases by one, another evaluation function with the maximum value being lower should be selected.

In another manner, it is not necessary to prepare a plurality of evaluation functions beforehand, but only the above-mentioned evaluation function F1 should be prepared. This function can be used in the following way. When high quality printing is desirable, the value of the evaluation function is multiplied by "0.7" and the rate is determined. Each time high quality setting increases by one, the value of the evaluation function may be multiplied by "0.9." Furthermore, it is not necessary to restrict the evaluation function curves to their examples shown in Fig. 33. Any function may be used that shows the characteristic: when the width of the range of the luminance values is assumed variable, the function value increases monotonously as the value of the width increases. Alternatively, an evaluation function whose value gradually changes over the range of luminance values of 0 to 255 may be used.

Once the evaluation function to be used have been determined in the way described above in the step S307, a blending ratio, the rate is determined by using the evaluation function in step S308. In the histogram shown in Fig. 14, because there are 19 luminance values for which the number of distributed pixels is other than "0, " after the affirmative judgment is made in the step S306, the processing of the step S307 is executed. When resolution of "720 dpi," "glossy print" paper, "high" print speed, and "pigment" ink are selected as shown in Fig. 32, the settings of the print parameters of resolution, paper, and ink require the selection of the evaluation function for high quality printing and thus the evaluation function F2 is selected in the step S307. Then, the rate is determined by the evaluation function F2 in the step S308 and the first interpolation processing in the step S314 and the second interpolation processing in the step S318 are executed.

After pixels of interpolates are generated by the first interpolation processing, if the above rate is not "1, " the second interpolation processing is further executed. Whether the M-aubic method or the normal cubic method is used, once pixels of interpolations have been generated by the cubic method in the above step of the second interpolation processing, all parameters to be assigned to the above calculation equation (1) for data to be blended are now obtained: i.e., data generated by the first interpolation processing, rate, and data generated by the second interpolation processing. By assigning these parameters to the equation (1), calculation of the pixels of interpolations data to be blended at a ratio between the first and second interpolations is executed.

Hereupon, according to the settings shown in Fig. 32, high print quality is set and subtle tone gradation can be reflected in the print result in this state. At this time, because the evaluation function is F2, the blending ratio of the pixels interpolated by cubic method to those interpolated by the fir$t interpolation is set high.

On the other hand, if resolution of "360 dpi," "plain" paper, "high" print speed, and "dye" ink are selected on the window shown in Fig. 32, low print quality is set and the effect of the second interpolation processing is not noticeable. In this state, the above-mentioned evaluation function F1 should be used and the blending ratio of the pixels interpolated by the second interpolation processing to those interpolated by the first interpolation should be set lower in contrast with the above state of the settings shown in Fig. 32. At this time, higher is the blending ratio of the pixels interpolated by pattern matching method or nearest method by which the edge is highlighted to the pixels interpolated by the cubic method by which the values of tones are exactly reproduced. Sharp print result can be obtained, though the print quality is low.

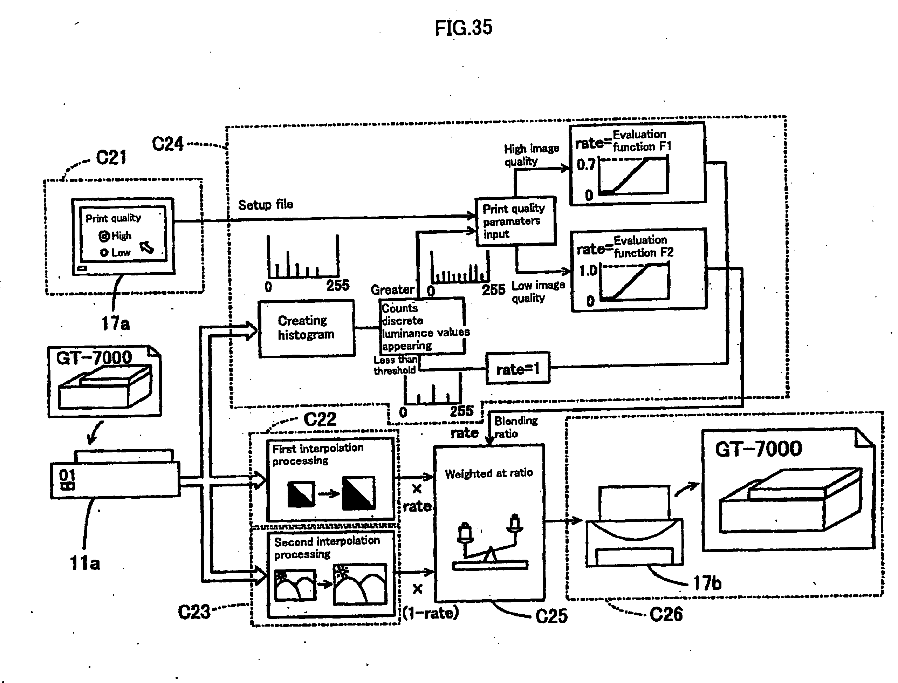

Finally, a general view of the present embodiment (second) of the invention is shown in Fig. 35.

The "Print Setup" window, when displayed, allows the user to set the print parameters that are varied, depending on the printer-specific capability. The settings of these parameters are stored into the setup file. If these parameters have previously been set, the setup file is referred to and read. If the operator changes the settings for print operation, the updated settings are read. The thus set print parameters are input in the step S303 that corresponds to the action of the print quality parameters acquisition unit C21.

On the other hand, in the step S304, source image data is Scanned a histogram of the luminance values of the pixels in the zone comprising $5 \times 5$ pixels around the target pixel is created. In the step S306, the number of discrete luminance values appearing in the created histogram is counted. If this count is less than a predetermined threshold, the attribute of the image is regarded as a simple non-natural picture and a blending ratio (rate) of interpolations by the first interpolation processing to those by the second interpolation processing is set to 1. If the count is greater than the threshold, the attribute of the image is regarded as a natural picture or a mixed image of natural and non-natural pictures and an evaluation function F is selected by which the rate should be determined. Selection of an evaluation function F depends on the print quality setting and there are two evaluation functions: evaluation function F1 for low, image quality and evaluation function F2 for high image quality. The evaluation functions F are functions of the difference between the maximum luminance value Ymax and the minimum luminance value Ymin in the above zone and set the rate by evaluating edge-like visualization. For visualization that is more edge-like, the evaluation function F1 is applied and the percentage of such interpolation is set high that ends to highlight the edge and involves a relatively low load of arithmetic processing. For less edge-like visualization, the evaluation function F2 is applied and the percentage of such interpolation is set high that smoothes the edge and involves a high load of arithmetic processing. The unit to determine a blending ratio in this way, depending on whether print quality is high or low, is the second unit of determining a blending ratio C24.

In the step S314, interpolation processing is executed within the predetermined zone around the target pixel by the pattern matching method or the nearest method. The interpolation that tends to keep the edge intact is carried out by the first interpolation processing unit C22.

On the other hand, in the step S318, interpolation processing is executed by the cubic method in which subtle tone difference between the pixels is reflected, while the edge is made vague, as contrasted with the edge made by the pattern matching method. This interpolation is carried out by the second interpolation processing unit C23. Then, in the step S320, the data of pixels separately interpolated by the first and second interpolations are weighted and added by the equation (1) to which the blending ratio (rate) determined as described above is assigned and blended pixels of first and second interpolations are generated. The total sum of the blending ratio, of course, becomes "1." This step is carried out by the image data blending unit C25.

Following that, the above procedure is repeated with the target pixel being changed until all target pixels have been processed. Then, an interpolation-processed image is created. In the step S324, the completely interpolation-processed image data is supplied to the printer 17b where printing is executed. This step is carried out by the print control processing unit C26.

As explained above, in the present invention, the pixels interpolated by the first interpolation processing and the pixels interpolated by the second interpolation processing are blended, based on a predetermined evaluation function. The thus blended pixels show the characteristics that the edge is made vaguer than the edge made by the pattern matching method only, but sharper than the edge made by the cubic method only. These pixels are also characterized in that the fineness of subtle tone gradation decreases as contrasted with those interpolated by the cubic method only, whereas tone graduation is colorful as contrasted with those interpolated by the pattern matching method only. Because the above evaluation function is a function of the width of the range within which the obtained luminance values fall, a ratio between the two modes of interpolation processing can be determined, according to the attribute of the source image. Furthermore, the blending ratio of the pixels interpolated by the interpolation processing taken to be more suitable for the print quality settings that directly influence the effect of interpolation processing to the pixels interpolated by the other interpolation processing is set high. In consequence, the merit of each mode of interpolation processing becomes more noticeable, whereas the demerit of each becomes mild. Thus, the present invention enable proper interpolation processing, according to the print quality settings, while preventing an error in selecting an interpolation method, based on the appraised attribute of the image for which interpolation is executed.

**Claims**

1.    A medium whereon an image data interpolation program has been recorded to implement pixel interpolation to image data of an image represented in multi-tone dot matrix pixels on a computer, said medium with the image data interpolation program recorded thereon **characterized by**, after being set ready for use on a computer, making the computer perform:

an image data acquisition function arranged to acquire said image data;
a first determining function arranged to create a histogram of luminance values of reference pixels around a pixel of target of interpolation and to determine, based on the number of discrete luminance values appearing in the histogram compared with a threshold, whether the image is a natural image, or a non-natural image or a mixed image of a natural image and a non-natural image;
a first interpolation processing function arranged to interpolate pixels of said image data without decreasing the degree of tone value difference between the existing pixels;
a second interpolation processing function arranged to interpolate pixels of said image data without affecting the gradation of the tones of the image;
a second determining function arranged to determine a blending ratio based on an evaluation function of a difference between a maximum luminance value and a minimum luminance value in the histogram if the image is determined to be a natural image or a mixed image, and to determine the blending ratio so as not to blend the interpolated image data generated by said second interpolation processing function into the corresponding data generated by said first interpolation processing function if the image is determined to be a non-natural image;
an image data blending function arranged to blend the interpolated image data generated by said first interpolation processing function and the corresponding data generated by said second interpolation processing function by an amount corresponding to the blending ratio; and

an image data output function arranged to output data from the first interpolation, second interpolation and image data blending functions as interpolation-processed image data, wherein

if the image is determined to be a non-natural image, the image data is arranged to be interpolated by the first interpolation processing function alone; and

if the image is determined to be a natural image or a mixed image, the image data is arranged to be interpolated by at least one of the first interpolation processing function and the second interpolation processing function and results of the interpolated image data generated by the first interpolation processing function and the corresponding data generated by the second interpolation processing function are blended by an amount corresponding to the blending ratio;

said medium, furthermore making the computer perform:

a function of print quality parameters acquisition arranged to acquire print quality parameters, according to which a printer prints an image from said image data;

a further determining function arranged to determine a blending ratio that determines a blending ratio between the pixels interpolated by said first interpolation processing and those interpolated by said second interpolation processing, based on said print quality parameters acquired; and

a function of print control processing arranged to execute print control processing, based on the data of pixel interpolations blended at said blending ratio.

2. The medium with the image data interpolation program recorded thereon as claimed in claim 1, **characterized in that**:

said first interpolation processing function is able to execute pattern matching interpolation which is performed, according to a predetermined rule, when a given pattern exists in the reference pixels, and nearest neighbor interpolation.

3. The medium with the image data interpolation program recorded thereon as claimed claim 1 or claim 2, **characterized in that**:

if the image is determined to be a mixed image, said second determining function is arranged to increase the percentage of said first interpolation processing in direct proportion to the increase of the width of the range within which the luminance values of said reference pixels fall.

4. The medium with the image data interpolation program recorded thereon as claimed in any of the preceeding claims, **characterized in that**:

said further determining function is arranged to determine a blending ratio by means of an evaluation function that depends on the print quality parameters acquired.

5. The medium with the image data interpolation program recorded thereon as claimed in any of the preceeding claims, **characterized in that**:

said further determining function is arranged to set a higher percentage of said second interpolation processing when determining a blending ratio, when said print quality parameters acquired indicate higher print quality.

6. The medium with the image data interpolation program recorded thereon as claimed in any one of of the preceeding claims, **characterized in that**:

said further determining function is arranged to inhibit only said first interpolation processing from being active when said print quality parameters acquired indicate high print quality.

7. An image data interpolation method for interpolating pixels to image data of an image represented in multi-tone dot matrix pixels, **characterized by** comprising:

an image data acquisition step for acquiring said image data;

a first determining step for creating a histogram of luminance values of reference pixels around a pixel of target of interpolation and for determining, based on the number of discrete luminance values appearing in the histogram compared with a threshold, whether the image is a natural image, or a non-natural image or a mixed image of a natural image and a non-natural image;

a first interpolation processing step for interpolating pixels of said image data without decreasing the degree of tone value difference between the existing pixels;

a second interpolation processing step for interpolating pixels of said image data without affecting the gradation of the tones of the image;

a second determining step for determining a blending ratio based on an evaluation function of a difference between a maximum luminance value and a minimum luminance value in the histogram if the image is determined to be a natural image or a mixed image, and for determining the blending ratio so as not to blend the interpolated image data generated by said second interpolation processing step into the corresponding data generated by said first interpolation processing step if the image is determined to be a non-natural image;

an image data blending step for blending the interpolated image data generated by said first interpolation processing step and the corresponding data generated by said second interpolation processing step by an amount corresponding to the blending ratio; and

an image data output step for outputting data from the first interpolation, second interpolation and image data blending steps as interpolation-processed image data, wherein

if the image is determined to be a non-natural image, the image data is arranged to be interpolated by the first interpolation processing step alone; and

if the image is determined to be a natural image or a mixed image, the image data is arranged to be interpolated by at least one of the first interpolation processing step and the second interpolation processing step and results of the interpolated image data generated by the first interpolation processing step and the corresponding data generated by the second interpolation processing step are blended by an amount corresponding to the blending ratio;

the method further comprising:

a step of print quality parameters acquisition that acquires print quality parameters, according to which a printer prints an image from said image data;

a further determining step that determines a blending ratio between the pixels interpolated by said first interpolation processing and those interpolated by said second interpolation processing, based on said print quality parameters acquired; and

a step of print control processing that executes print control processing, based on the data of pixel interpolations blended at said blending ratio.

**8.** The image data interpolation method as claimed in claim 7, **characterized in that**:

said first interpolation processing step is able to execute pattern matching interpolation which is performed, according to a predetermined rule, when a given pattern exists in the reference pixels, and nearest neighbor interpolation.

**9.** The image data interpolation method according as claimed in either claim 7 or claim 8, **characterized in that**:

if the image is determined to be a mixed image, said determining step increases the percentage of said first interpolation processing in direct proportion to the increase of the width of the range within which the luminance values of said reference pixels fall.

**10.** The image data interpolation method as claimed in any one of claim 7 or 9, **characterized in that**:

said further determining step determines a blending ratio by means of an evaluation step that depends on the print quality parameters acquired.

**11.** The image data interpolation method as claimed in any one of claim 7 to 10, **characterized in that**:

said further determining step sets a higher percentage of said second interpolation processing when determining a blending ratio, when said print quality parameters acquired indicate higher print quality.

**12.** The image data interpolation method as claimed in any one of claims 7 to 11, **characterized in that**:

said further determining step inhibits only said first interpolation processing from being active when said print quality parameters acquired indicate high print quality.

13. An image data interpolation apparatus for interpolating pixels to image data of an image represented in multi-tone dot matrix pixels, **characterized by** comprising:

an image data acquisition unit arranged to acquire said image data;

a first determining unit arranged to create a histogram of luminance values of reference pixels around a pixel of target of interpolation and to determine, based on the number of discrete luminance values appearing in the histogram compared with a threshold, whether the image is a natural image, or a non-natural image or a mixed image of a natural image and a non-natural image;

a first interpolation processing unit arranged to interpolate pixels of said image data without decreasing the degree of tone value difference between the existing pixels;

a second interpolation processing unit arranged to interpolate pixels of said image data without affecting the gradation of the tones of the image;

a second determining unit arranged to determine a blending ratio based on an evaluation function of a difference between a maximum luminance value and a minimum luminance value in the histogram if the image is determined to be a natural image or a mixed image, and to determine the blending ratio so as not to blend the interpolated image data generated by said second interpolation processing unit into the corresponding data generated by said first interpolation processing unit if the image is determined to be a non-natural image;

an image data blending unit arranged to blend the interpolated image data generated by said first interpolation processing unit and the corresponding data generated by said second interpolation processing unit by an amount corresponding to the blending ratio; and

an image data output unit arranged to output data from the first interpolation, second interpolation and image data blending units as interpolation-processed image data, wherein

if the image is determined to be a non-natural image, the image data is arranged to be interpolated by the first interpolation processing unit alone; and

if the image is determined to be a natural image or a mixed image, the image data is arranged to be interpolated by at least one of the first interpolation processing unit and the second interpolation processing unit and results of the interpolated image data generated by the first interpolation processing unit and the corresponding data generated by the second interpolation processing unit are blended by an amount corresponding to the blending ratio;

the apparatus further comprising:

a print quality parameters acquisition unit that acquires print quality parameters, according to which a printer prints an image from said image data;

a further determining unit arranged to determine a blending ratio between the pixels interpolated by said first interpolation processing unit and those interpolated by said second interpolation processing unit, based on said print quality parameters acquired; and

a print control processing unit arranged to execute print control processing, based on the data of pixel interpolations blended at said blending ratio.

14. The image data interpolation apparatus as claimed in claim 13, **characterized in that**:

said first interpolation processing unit is able to execute pattern matching interpolation which is performed, according to a predetermined rule, when a given pattern exists in the reference pixels, and nearest neighbor interpolation.

15. The image data interpolation apparatus as claimed in either claim 13 or claim 14, **characterized in that**:

if the image is determined to be a mixed image, said determining unit is arranged to increase the percentage of said first interpolation processing in direct proportion to the increase of the width of the range within which the luminance values of said reference pixels fall.

16. The image data interpolation apparatus as claimed in any one of claims 13 to 15, **characterized in that**:

said further determining unit is arranged to determine a blending ratio by means of an evaluation function that depends on the print quality parameters acquired.

**17.** The image data interpolation apparatus as claimed in any one of claims 13 to 16, **characterized in that**:

said further determining unit is arranged to set a higher percentage of said second interpolation processing when determining a blending ratio, when said print quality parameters acquired indicate higher print quality.

**18.** The image data interpolation apparatus as claimed in any one of claims 13 to 17, **characterized in that**:

said further determining unit is arranged to inhibit only said first interpolation processing from being active when said print quality parameters acquired indicate high print quality.


**Patentansprüche**

**1.** Datenträger, auf dem ein Bilddateninterpolationsprogramm gespeichert ist, um die Pixelinterpolation an Bilddaten eines Bilds zu implementieren, das in Mehrton-Punktmatrixpixeln auf einem Rechner dargestellt wird, wobei dieser Datenträger mit dem darauf gespeicherten Bilddateninterpolationsprogramm **dadurch gekennzeichnet ist, dass** er, nachdem er zum Gebrauch auf einem Rechner eingerichtet wurde, den Rechner dazu veranlasst, folgendes auszuführen:

eine Bilddatenerfassungsfunktion, um die Bilddaten zu erfassen;
eine erste Bestimmungsfunktion, um ein Histogramm der Luminanzwerte von Bezugspixeln um ein Zielpixel der Interpolation herum zu erzeugen und auf der Basis der Zahl der diskreten Luminanzwerte, die im Histogramm erscheinen, im Vergleich mit einem Schwellenwert zu bestimmen, ob das Bild ein natürliches Bild oder ein nicht-natürliches Bild oder ein Mischbild aus einem natürlichen Bild und einem nicht-natürlichen Bild ist; eine erste Interpolationsverarbeitungsfunktion, um Pixel dieser Bilddaten zu interpolieren, ohne den Grad der Tonwertdifferenz zwischen den vorhandenen Pixeln zu verringern;
eine zweite Interpolationsverarbeitungsfunktion, um Pixel dieser Bilddaten zu interpolieren, ohne die Tonabstufung des Bilds zu beeinflussen;
eine zweite Bestimmungsfunktion, um ein Mischungsverhältnis auf der Basis einer Bewertungsfunktion einer Differenz zwischen einem maximalen Luminanzwert und einem minimalen Luminanzwert im Histogramm zu bestimmen, wenn bestimmt wird, dass das Bild ein natürliches Bild oder ein Mischbild ist, und um das Mischungsverhältnis so zu bestimmen, dass die interpolierten Bilddaten, die von der zweiten Interpolationsverarbeitungsfunktion erzeugt wurden, nicht in die entsprechenden Daten gemischt werden, die von der ersten Interpolätionsverarbeitungsfunktion erzeugt wurden, wenn bestimmt wird, dass das Bild ein nicht-natürliches Bild ist;
eine Bilddatenmischfunktion, um die interpolierten Bilddaten, die von der ersten Interpolationsverarbeitungsfunktion erzeugt wurden, und der entsprechenden Daten, die von der zweiten Interpolationsverarbeitungsfunktion erzeugt wurden, in einem Verhältnis zu mischen, das dem Mischungsverhältnis entspricht; und
eine Bilddatenausgabefunktion, um Bilddaten von der ersten Interpolätions-, der zweiten Interpolations- und der Bilddatenmischfunktion als interpolationsverarbeitete Bilddaten auszugeben, wobei wenn bestimmt wird, dass das Bild ein nicht-natürliches Bild ist, die Bilddaten nur von der ersten Interpolationsverarbeitungsfunktion interpoliert werden;
wenn bestimmt wird, dass das Bild ein natürliches Bild oder ein Mischbild ist, die Bilddaten durch mindestens eine von der ersten Interpolationsverarbeitungsfunktion und der zweiten Interpolationsverarbeitungsfunktion interpoliert werden und Ergebnisse der interpolierten Bilddaten, die von der ersten Interpolationsverarbeitungsfunktion erzeugt wurden, und der entsprechenden Daten, die von der zweiten Interpolationsverarbeitungsfunktion erzeugt wurden, in einem Verhältnis gemischt werden, die dem Mischungsverhältnis entspricht;

wobei dieser Datenträger den Rechner außerdem dazu veranlasst, auszuführen:

eine Druckqualitätsparametererfassungsfunktion, um Druckqualitätsparameter zu erfassen, denen entsprechend ein Drucker ein Bild aus diesen Bilddaten druckt;
eine weitere Bestimmungsfunktion, um ein Mischungsverhältnis zu bestimmen, das ein Mischungsverhältnis zwischen von der ersten Interpolationsverarbeitung interpolierten und den von der zweiten Interpolationsverarbeitung interpolierten Pixeln auf der Basis der erfassten Druckqualitätsparameter bestimmt; und
eine Drucksteuerungsverarbeitungsfunktion, um die Drucksteuerungsverarbeitung auf der Basis der Pixelinterpolationsdaten durchzuführen, die in diesem Mischungsverhältnis gemischt wurden.

2. Datenträger mit dem darauf gespeicherten Bilddateninterpolationsprogramm nach Anspruch 1, **dadurch gekennzeichnet, dass**:

   die erste Interpolationsverarbeitungsfunktion in der Lage ist, eine Mustervergleichsinterpolation auszuführen, die einer vorbestimmten Regel entsprechend durchgeführt wird, wenn ein gegebenes Muster in den Bezugspixeln vorhanden ist, und die nächste Nachbarinterpolation.

3. Datenträger mit dem darauf gespeicherten Bilddateninterpolationsprogramm nach Anspruch 1 oder Anspruch 2, **dadurch gekennzeichnet, dass**:

   wenn bestimmt wird, dass das Bild ein Mischbild ist, die zweite Bestimmungsfunktion vorgesehen ist, um den Prozentsatz der ersten Interpolationsverarbeitung in direktem Verhältnis zur Vergrößerung der Größe des Bereichs zu vergrößern, in dem die Luminanzwerte des Bezugspixels liegen.

4. Datenträger mit dem darauf gespeicherten Bilddateninterpolationsprogramm nach einem der vorherigen Ansprüche, **dadurch gekennzeichnet, dass**:

   die weitere Bestimmungsfunktion vorgesehen ist, um ein Mischungsverhältnis mithilfe einer Bewertungsfunktion zu bestimmen, die von den erfassten Druckqualitätsparametern abhängig ist.

5. Datenträger mit dem darauf gespeicherten Bilddateninterpolationsprogramm nach einem der vorherigen Ansprüche, **dadurch gekennzeichnet, dass**:

   die weitere Bestimmungsfunktion vorgesehen ist, um bei der Bestimmung eines Mischungsverhältnisses einen höheren Prozentsatz der zweiten Interpolationsverarbeitung einzustellen, wenn die erfassten Druckqualitätsparameter eine höhere Druckqualität angeben.

6. Datenträger mit dem darauf gespeicherten Bilddateninterpolationsprogramm nach einem der vorherigen Ansprüche, **dadurch gekennzeichnet, dass**:

   die weitere Bestimmungsfunktion vorgesehen ist, um die Aktivierung nur der ersten Interpolationsverarbeitung zu sperren, wenn die erfassten Druckqualitätsparameter eine hohe Druckqualität angeben.

7. Bilddateninterpolationsverfahren zur Pixelinterpolation an Bilddaten eines Bilds, das in Mehrton-Punktmatrixpixeln dargestellt wird, **dadurch gekennzeichnet, dass** es umfasst:

   einen Bilddatenerfassungsschritt, um die Bilddaten zu erfassen;
   einen ersten Bestimmungsschritt, um ein Histogramm der Luminanzwerte von Bezugspixeln um ein Zielpixel der Interpolation herum zu erzeugen und auf der Basis der Zahl der diskreten Luminanzwerte, die im Histogramm erscheinen, im Vergleich mit einem Schwellenwert zu bestimmen, ob das Bild ein natürliches Bild oder ein nicht-natürliches Bild oder ein Mischbild aus einem natürlichen Bild und einem nicht-natürlichen Bild ist;
   einen ersten Interpolationsverarbeitungsschritt, um Pixel dieser Bilddaten zu interpolieren, ohne den Grad der Tonwertdifferenz zwischen den vorhandenen Pixeln zu verringern;
   einen zweiten Interpolationsverarbeitungsschritt, um Pixel dieser Bilddaten zu interpolieren, ohne die Tonabstufung des Bilds zu beeinflussen;
   einen zweiten Bestimmungsschritt, um ein Mischungsverhältnis auf der Basis einer Bewertungsfunktion einer Differenz zwischen einem maximalen Luminanzwert und einem minimalen Luminanzwert im Histogramm zu bestimmen, wenn bestimmt wird, dass das Bild ein natürliches Bild oder ein Mischbild ist, und um das Mischungsverhältnis so zu bestimmen, dass die interpolierten Bilddaten, die vom zweiten Interpolationsverarbeitungsschritt erzeugt wurden,
   nicht in die entsprechenden Daten gemischt werden, die vom ersten Interpolationsverarbeitungsschritt erzeugt wurden, wenn bestimmt wird, dass das Bild ein nicht-natürliches Bild ist;
   einen Bilddatenmischschritt, um die interpolierten Bilddaten, die vom ersten Interpolationsverarbeitungsschritt erzeugt wurden, und der entsprechenden Daten, die vom zweiten Interpolationsverarbeitungsschritt erzeugt wurden, in einem Verhältnis zu mischen, das dem Mischungsverhältnis entspricht; und
   einen Bilddatenausgabeschritt, um Bilddaten vom ersten Interpolations-, zweiten Interpolations- und Bilddatenmischschritt als interpolationsverarbeitete Bilddaten auszugeben, wobei

wenn bestimmt wird, dass das Bild ein nicht-natürliches Bild ist, die Bilddaten nur vom ersten Interpolationsverarbeitungsschritt interpoliert werden;

wenn bestimmt wird, dass das Bild ein natürliches Bild oder ein Mischbild ist, die Bilddaten durch mindestens einen vom ersten Interpolationsverarbeitungsschritt und zweiten Interpolationsverarbeitungsschritt interpoliert werden und Ergebnisse der interpolierten Bilddaten, die vom ersten Interpolationsverarbeitungsschritt erzeugt wurden, und

der entsprechenden Daten, die vom zweiten Interpolationsverarbeitungsschritt erzeugt wurden, in einem Verhältnis gemischt werden, die dem Mischungsverhältnis entspricht;

wobei das Verfahren außerdem umfasst:

einen Druckqualitätsparametererfassungsschritt, um Druckqualitätsparameter zu erfassen, denen entsprechend ein Drucker ein Bild aus diesen Bilddaten druckt;

einen weiteren Bestimmungsschritt, um ein Mischungsverhältnis zwischen von der ersten Interpolationsverarbeitung interpolierten und den von der zweiten Interpolationsverarbeitung interpolierten. Pixeln auf der Basis der erfassten Druckqualitätsparameter zu bestimmen; und

einen Drucksteuerungsverarbeitungsschritt, um die Drucksteuerungsverarbeitung auf der Basis der Pixelinterpolationsdaten durchzuführen, die in diesem Mischungsverhältnis gemischt wurden.

8. Bilddateninterpolationsverfahren nach Anspruch 7, **dadurch gekennzeichnet, dass**:

der erste Interpolationsverarbeitungsschritt in der Lage ist, eine Mustervergleichsinterpolation auszuführen, die einer vorbestimmten Regel entsprechend durchgeführt wird, wenn ein gegebenes Muster in den Bezugspixeln vorhanden ist, und die nächste Nachbarinterpolation.

9. Bilddateninterpolationsverfahren nach Anspruch 7 oder Anspruch 8, **dadurch gekennzeichnet, dass**:

wenn bestimmt wird, dass das Bild ein Mischbild ist, dieser Bestimmungsschritt den Prozentsatz der ersten Interpolationsverarbeitung in direktem Verhältnis zur Vergrößerung der Größe des Bereichs vergrößert, in dem die Luminanzwerte des Bezugspixels liegen.

10. Bilddateninterpolationsverfahren nach einem der Ansprüche 7 bis 9, **dadurch gekennzeichnet, dass**:

der weitere Bestimmungsschritt vorgesehen ist, um ein Mischungsverhältnis mithilfe einer Bewertungsfunktion zu bestimmen, die von den erfassten Druckqualitätsparametern abhängig ist.

11. Bilddateninterpolationsverfahren nach einem der Ansprüche 7 bis 10, **dadurch gekennzeichnet, dass**:

der weitere Bestimmungsschritt bei der Bestimmung eines Mischungsverhältnisses einen höheren Prozentsatz der zweiten Interpölationsverarbeitung einstellt, wenn die erfassten Druckqualitätsparameter eine höhere Druckqualität angeben.

12. Bilddateninterpolationsverfahren nach einem der Ansprüche 7 bis 11, **dadurch gekennzeichnet, dass**:

der weitere Bestimmungsschritt die Aktivierung nur der ersten Interpolationsverarbeitung sperrt, wenn die erfassten Druckqualitätsparameter eine hohe Druckqualität angeben.

13. Bilddateninterpolationsvorrichtung zur Pixelinterpolation an Bilddaten eines Bilds, das in Mehrton-Punktmatrixpixeln dargestellt wird, **dadurch gekennzeichnet, dass** sie umfasst:

eine Bilddatenerfassungseinheit, um die Bilddaten zu erfassen;

eine erste Bestimmungseinheit, um ein Histogramm der Luminanzwerte von Bezugspixeln um ein Zielpixel der Interpolation herum zu erzeugen und auf der Basis der Zahl der diskreten Luminanzwerte, die im Histogramm erscheinen, im Vergleich mit einem Schwellenwert zu bestimmen, ob das Bild ein natürliches Bild oder ein nicht-natürliches Bild oder ein Mischbild aus einem natürlichen Bild und einem nicht-natürlichen Bild ist; eine erste Interpolationsverarbeitungseinheit, um Pixel dieser Bilddaten zu interpolieren, ohne den Grad der Tonwertdifferenz zwischen den vorhandenen Pixeln zu verringern;

eine zweite Interpolationsverarbeitungseinheit, um Pixel dieser Bilddaten zu interpolieren, ohne die Tonabstufung des Bilds zu beeinflussen;

eine zweite Bestimmungseinheit, um ein Mischungsverhältnis auf der Basis einer Bewertungsfunktion einer Differenz zwischen einem maximalen Luminanzwert und einem minimalen Luminanzwert im Histogramm zu bestimmen, wenn bestimmt wird, dass das Bild ein natürliches Bild oder ein Mischbild ist, und um das Mischungsverhältnis so zu bestimmen, dass die interpolierten Bilddaten, die von der zweiten Interpolationsverarbeitungseinheit erzeugt wurden, nicht in die entsprechenden Daten gemischt werden, die von der ersten Interpolationsverarbeitungseinheit erzeugt wurden, wenn bestimmt wird, dass das Bild ein nicht-natürliches Bild ist;

eine Bilddatenmischeinheit, um die interpolierten Bilddaten, die von der ersten Interpolationsverarbeitungseinheit erzeugt wurden, und der entsprechenden Daten, die von der zweiten Interpolationsverarbeitungsschritt erzeugt wurden, in einem Verhältnis zu mischen, das dem Mischungsverhältnis entspricht; und

eine Bilddatenausgabeeinheit, um Bilddaten von der ersten Interpolations-, zweiten Interpolations- und Bilddatenmischeinheit als interpolationsverarbeitete Bilddaten auszugeben, wobei

wenn bestimmt wird, dass das Bild ein nicht-natürliches Bild ist, die Bilddaten nur von der ersten Interpolationsverarbeitungseinheit interpoliert werden;

wenn bestimmt wird, dass das Bild ein natürliches Bild oder ein Mischbild ist, die Bilddaten durch mindestens eine von der ersten Interpolationsverarbeitungseinheit und der zweiten Interpolationsverarbeitungseinheit interpoliert werden und Ergebnisse der interpolierten Bilddaten, die von der ersten Interpolationsverarbeitungseinheit erzeugt wurden, und

der entsprechenden Daten, die von der zweiten Interpolationsverarbeitungseinheit erzeugt wurden, in einem Verhältnis gemischt werden, die dem Mischungsverhältnis entspricht;

wobei die Vorrichtung außerdem umfasst:

eine Druckqualitätsparametererfassungseinheit, um Druckqualitätsparameter zu erfassen, denen entsprechend ein Drucker ein Bild aus diesen Bilddaten druckt;

eine weitere Bestimmungseinheit, um ein Mischungsverhältnis zwischen von der ersten Interpolationsverarbeitungseinheit interpolierten und den von der zweiten Interpolationsverarbeitungseinheit interpolierten Pixeln auf der Basis der erfassten Druckqualitätsparämeter zu bestimmen; und

eine Drucksteuerungsverarbeitungseinheit, um die Drucksteuerungsverarbeitung auf der Basis der Pixelinterpolationsdaten durchzuführen, die in diesem Mischungsverhältnis gemischt wurden.

**14.** Bilddateninterpolationsvorrichtung nach Anspruch 13,
**dadurch gekennzeichnet, dass**:

die erste Interpolationsverarbeitungseinheit in der Lage ist, eine Mustervergleichsinterpolation auszuführen, die einer vorbestimmten Regel entsprechend durchgeführt wird, wenn ein gegebenes Muster in den Bezugspixeln vorhanden ist, und die nächste Nachbarinterpolation.

**15.** Bilddateninterpolationsvorrichtung nach Anspruch 13 oder Anspruch 14, **dadurch gekennzeichnet, dass**:

wenn bestimmt wird, dass das Bild ein Mischbild ist, diese Bestimmungseinheit den Prozentsatz der ersten Interpolationsverarbeitung in direktem Verhältnis zur Vergrößerung der Größe des Bereichs vergrößert, in dem die Luminanzwerte des Bezugspixels liegen.

**16.** Bilddateninterpolationsvorrichtung nach einem der Ansprüche 13 bis 15, **dadurch gekennzeichnet, dass**:

die weitere Bestimmungseinheit vorgesehen ist, um ein Mischungsverhältnis mithilfe einer Bewertungsfunktion zu bestimmen, die von den erfassten Druckqualitätsparametern abhängig ist.

**17.** Bilddateninterpolationsvorrichtung nach einem der Ansprüche 13 bis 16, **dadurch gekennzeichnet, dass**:

die weitere Bestimmungseinheit bei der Bestimmung eines Mischungsverhältnisses einen höheren Prozentsatz der zweiten Interpolationsverarbeitung einstellt, wenn die erfassten Druckqualitätsparameter eine höhere Druckqualität angeben.

**18.** Bilddateninterpolationsvorrichtung nach einem der Ansprüche 13 bis 17, **dadurch gekennzeichnet, dass**:

die weitere Bestimmungseinheit die Aktivierung nur der ersten Interpolationsverarbeitung sperrt, wenn die erfassten Druckqualitätsparameter eine hohe Druckqualität angeben.

**Revendications**

**1.** Support sur lequel a été enregistré un programme d'interpolation de données d'image pour implémenter une interpolation de pixels pour des données d'image d'une image représentée par pixels de matrice à points à nuances multiples sur un ordinateur, ledit support avec le programme d'interpolation de données d'image enregistré dessus se caractérisant, une fois prêt pour l'utilisation sur un ordinateur, en ce qu'il fasse en sorte que l'ordinateur réalise :

une fonction d'acquisition de données d'image étudiée pour acquérir lesdites données d'image ;
une première fonction de détermination étudiée pour créer un histogramme des valeurs de luminance de pixels de référence autour d'un pixel de cible d'interpolation et pour déterminer, sur la base du nombre de valeurs de luminance discrètes apparaissant dans l'histogramme en comparaison avec un seuil, si l'image est une image naturelle ou une image non naturelle ou une image mixte formée par une image naturelle et une image non naturelle;
une première fonction de traitement d'interpolation étudiée pour interpoler des pixels desdites données d'image sans diminuer le degré de différence de valeur de nuance entre les pixels existants ;
une deuxième fonction de traitement d'interpolation étudiée pour interpoler des pixels desdites données d'image sans affecter la gradation des nuances de l'image;
une deuxième fonction de détermination étudiée pour déterminer une proportion de mélange sur la base d'une fonction d'évaluation de la différence entre une valeur de luminance maximale et une valeur de luminance minimale dans l'histogramme si l'on détermine que l'image est une image naturelle ou une
image mixte, et pour déterminer la proportion de mélange de manière à ne pas mélanger les données d'image interpolées générées grâce à ladite deuxième fonction de traitement d'interpolation avec les données correspondantes générées grâce à ladite première fonction de traitement d'interpolation si l'on détermine que l'image est une image non naturelle ;
une fonction de mélange des données d'image étudiée pour mélanger les données d'image interpolées générées grâce à ladite première fonction de traitement d'interpolation et les données correspondantes générées grâce à ladite deuxième fonction de traitement d'interpolation d'un degré correspondant à la proportion de mélange ; et
une fonction de sortie de données d'image étudiée pour faire sortir des données de la première interpolation, la deuxième interpolation et des fonctions de mélange de données d'image en tant que données d'image traitées par interpolation, moyennant quoi
si l'on détermine que l'image est une image non naturelle, les données d'image sont étudiées pour être interpolées seulement grâce à la première fonction de traitement d'interpolation; et
si l'on détermine que l'image est une image naturelle ou une image mixte, les données d'image étant étudiées pour être interpolées grâce au moins à l'une parmi la première fonction de traitement d'interpolation et la deuxième fonction de traitement d'interpolation, et les résultats des données d'image interpolées générées grâce à la première fonction de traitement d'interpolation et des données correspondantes générées grâce à la deuxième fonction de traitement d'interpolation étant mélangés selon un degré correspondant à la proportion de mélange ;
ledit support faisant par ailleurs en sorte que l'ordinateur réalise:

une fonction d'acquisition des paramètres de qualité d'impression étudiée pour acquérir des paramètres de qualité d'impression, selon lesquels une imprimante imprime une image à partir desdites données d'image ;
une autre fonction de détermination étudiée pour déterminer une proportion de mélange qui détermine une proportion de mélange entre les pixels interpolés grâce audit premier traitement d'interpolation et ceux interpolés grâce audit deuxième traitement d'interpolation, sur la base desdits paramètres de qualité d'impression acquis ; et
une fonction de traitement de commande d'impression étudiée pour exécuter un traitement de commande d'impression, sur la base des données des interpolations de pixels mélangées selon ladite proportion de mélange.

**2.** Support avec le programme d'interpolation de données d'image enregistré dessus tel que revendiqué par la revendication 1, **caractérisé en ce que** :

ladite première fonction d'interpolation est capable d'exécuter une interpolation d'appariement de formes laquelle est réalisée selon une règle prédéterminée lorsqu'une forme donnée existe pour les pixels de référence, ainsi qu'une interpolation des plus proches voisins.

3. Support avec le programme d'interpolation de données d'image enregistré dessus tel que revendiqué par la revendication 1 ou la revendication 2, **caractérisé en ce que** :

si l'on détermine que l'image est une image mixte, ladite deuxième fonction de détermination est étudiée pour augmenter le pourcentage dudit premier traitement d'interpolation en proportion directe avec l'augmentation de l'étendue de la plage dans laquelle se situent les valeurs de luminance desdits pixels de référence.

4. Support avec le programme d'interpolation de données d'image enregistré dessus selon l'une quelconque des revendications précédentes, **caractérisé en ce que**:

ladite autre fonction de détermination est étudiée pour déterminer une proportion de mélange à l'aide d'une fonction d'évaluation qui dépend des paramètres de qualité d'impression acquis.

5. Support avec le programme d'interpolation de données d'image enregistré dessus tel que revendiqué selon l'une quelconque des revendications précédentes, **caractérisé en ce que** :

ladite autre fonction de détermination est étudiée pour fixer un pourcentage plus élevé dudit deuxième traitement d'interpolation lors de la détermination d'une proportion de mélange, lorsque lesdites paramètres de qualité d'impression acquis indiquent une qualité d'impression supérieure.

6. Support avec le programme d'interpolation de données d'image enregistré dessus tel que revendiqué selon l'une quelconque des revendications précédentes, **caractérisé en ce que** :

ladite autre fonction de détermination est étudiée pour empêcher seulement ledit premier traitement d'interpolation d'être actif lorsque lesdits paramètres de qualité d'impression acquis indiquent une qualité d'impression élevée.

7. Procédé d'interpolation de données d'image pour interpoler des pixels pour des données d'image d'une image représentée par pixels de matrice à points à nuances multiples, **caractérisé en ce qu'**il comprenne :

une étape d'acquisition de données d'image pour acquérir lesdites données d'image ;
une première étape de détermination pour créer un histogramme des valeurs de luminance des pixels de référence autour d'un pixel de cible d'interpolation et pour déterminer, sur la base du nombre de valeurs de luminance discrètes apparaissant dans l'histogramme en comparaison avec un seuil, si l'image est une image naturelle, ou une image non naturelle ou une image mixte formée par une image naturelle et une image non naturelle ;
une première étape de traitement d'interpolation pour interpoler des pixels desdites données d'image sans réduire le degré de différence de valeur de nuance entre les pixels existants ;
une deuxième étape de traitement d'interpolation pour interpoler les pixels desdites données d'image sans affecter la gradation des nuances de l'image;
une deuxième étape de détermination pour déterminer une proportion de mélange sur la base d'une fonction d'évaluation de la différence entre une valeur de luminance maximale et une valeur de luminance minimale dans l'histogramme si l'on détermine que l'image est une image naturelle ou une image mixte, et pour déterminer la proportion de mélange de manière à ne pas mélanger les données d'image interpolées générées grâce à ladite deuxième étape de traitement d'interpolation avec les données correspondantes générées grâce à ladite première étape de traitement d'interpolation si l'on détermine que l'image est une image non naturelle;
une étape de mélange des données d'image pour mélanger les données d'image interpolées générées grâce à ladite première étape de traitement d'interpolation et les données correspondantes générées grâce à ladite deuxième étape de traitement d'interpolation selon un degré correspondant à la proportion de mélange ; et
une étape de sortie des données d'image pour faire sortir les données de la première interpolation, la deuxième interpolation et des étapes de mélange de données d'image en tant que données d'image traitées par interpolation, moyennant quoi

si l'on détermine que l'image est une image non naturelle, les données d'image sont étudiées pour être interpolées grâce seulement à la première étape de traitement d'interpolation ; et

si l'on détermine que l'image est une image naturelle ou une image mixte, les données d'image étant étudiées pour être interpolées grâce au moins à l'une parmi la première étape de traitement d'interpolation et la deuxième étape de traitement d'interpolation, et les résultats des données d'image interpolées générées grâce à la première étape de traitement d'interpolation et des données correspondantes générées grâce à la deuxième étape de traitement d'interpolation étant mélangés selon un degré correspondant à la proportion de mélange;

le procédé comprenant en outre :

une étape d'acquisition de paramètres de qualité d'impression faisant l'acquisition de paramètres de qualité d'impression, selon lesquels une imprimante imprime une image à partir desdites données d'image;

une autre étape de détermination qui détermine une proportion de mélange entre les pixels interpolés grâce audit premier traitement d'interpolation et ceux interpolés grâce audit deuxième traitement d'interpolation, sur la base desdits paramètres de qualité d'impression acquis ; et

une étape de traitement de commande d'impression qui exécute un traitement de commande d'impression, sur la base des données des interpolations de pixels mélangées selon ladite proportion de mélange.

8.  Procédé d'interpolation de données d'image tel que revendiqué par la revendication 7, **caractérisé en ce que** :

ladite première étape de traitement d'interpolation est capable d'exécuter une interpolation d'appariement de formes laquelle est réalisée, selon une règle prédéterminée, lorsqu'une forme donnée existe pour les pixels de référence, ainsi qu'une interpolation des plus proches voisins.

9.  Procédé d'interpolation de données d'image tel que revendiqué par la revendication 7 ou la revendication 8, **caractérisé en ce que** :

si l'on détermine que l'image est une image mixte, ladite étape de détermination augmente le pourcentage dudit premier traitement d'interpolation en proportion directe avec l'augmentation de l'étendue de la plage dans laquelle les valeurs de luminance desdits pixels de référence se situent.

10.  Procédé d'interpolation de données d'image tel que revendiqué par l'une quelconque des revendications 7 à 9, **caractérisé en ce que** :

ladite autre étape de détermination détermine une proportion de mélange à l'aide d'une étape d'évaluation qui dépend des paramètres de qualité d'impression acquis.

11.  Procédé d'interpolation de données d'image tel que revendiqué par l'une quelconque des revendications 7 à 10, **caractérisé en ce que** :

ladite autre étape de détermination fixe un pourcentage plus élevé dudit deuxième traitement d'interpolation lors de la détermination d'une proportion de mélange, lorsque lesdits paramètres de qualité d'impression acquis indiquent une qualité d'impression supérieure.

12.  Procédé d'interpolation de données d'image tel que revendiqué par l'une quelconque des revendications 7 à 11, **caractérisé en ce que** :

ladite autre étape de détermination empêche seulement ledit premier traitement d'interpolation d'être actif lorsque lesdits paramètres de qualité d'impression acquis indiquent une qualité d'impression élevée.

13.  Appareil d'interpolation de données d'image pour interpoler des pixels pour des données d'image d'une image représentée par pixels de matrice à points à nuances multiples, **caractérisé en ce qu'**il comprenne :

une unité d'acquisition de données d'image étudiée pour acquérir lesdites données d'image ;

une première unité de détermination étudiée pour créer un histogramme des valeurs de luminance de pixels de référence autour d'un pixel de cible d'interpolation et pour déterminer, sur la base du nombre de valeurs de luminance discrètes apparaissant dans l'histogramme en comparaison avec un seuil, si l'image est une image naturelle, ou une image non naturelle ou une image mixte formée par une image naturelle et une image non naturelle ;

une première unité de traitement d'interpolation étudiée pour interpoler des pixels desdites données d'image sans diminuer le degré de différence de valeur de nuance entre les pixels existants ;

une deuxième unité de traitement d'interpolation étudiée pour interpoler des pixels desdites données d'image sans affecter la gradation des nuances de l'image ;

une deuxième unité de détermination étudiée pour déterminer une proportion de mélange sur la base d'une fonction d'évaluation de la différence entre une valeur de luminance maximale et une valeur de luminance minimale dans l'histogramme si l'on détermine que l'image est une image naturelle ou une image mixte, et pour déterminer la proportion de mélange de manière à ne pas mélanger les données d'image interpolées générées grâce à ladite deuxième unité de traitement d'interpolation avec les données correspondantes générées grâce à ladite première unité

d'interpolation si l'on détermine que l'image est une image non naturelle;

une unité de mélange des données d'image pour mélanger les données d'image interpolées générées grâce à ladite première unité de traitement d'interpolation et les données correspondantes générées grâce à ladite deuxième unité de traitement d'interpolation selon un degré correspondant à la proportion de mélange ; et

une unité de sortie des données d'image pour faire sortir les données de la première interpolation, la deuxième interpolation et des unités de mélange de données d'image, en tant que données d'image traitées par interpolation, moyennant quoi

si l'on détermine que l'image est une image non naturelle, les données d'image sont étudiées pour être interpolées grâce seulement à la première unité de traitement d'interpolation ; et

si l'on détermine que l'image est une image naturelle ou une image mixte, les données d'image étant étudiées pour être interpolées grâce au moins à l'une parmi la première unité de traitement d'interpolation et la deuxième unité de traitement d'interpolation, et les résultats des données d'image interpolées générées grâce à la première unité de traitement d'interpolation et des données correspondantes générées grâce à la deuxième unité de traitement d'interpolation étant mélangés selon un degré correspondant à la proportion de mélange;

l'appareil comprenant en outre :

une unité d'acquisition de paramètres de qualité d'impression faisant l'acquisition des paramètres de qualité d'impression, selon lesquels une imprimante imprime une image à partir desdites données d'image ; une autre unité de détermination étudiée pour déterminer une proportion de mélange entre les pixels interpolés grâce à ladite première unité de traitement d'interpolation et ceux interpolés grâce à ladite deuxième unité de traitement d'interpolation, sur la base desdits paramètres de qualité d'impression acquis ; et

une unité de traitement de commande d'impression étudiée pour exécuter un traitement de commande d'impression, sur la base des données des interpolations de pixels mélangées selon ladite proportion de mélange.

14. Appareil d'interpolation de données d'image tel que revendiqué par la revendication 13, **caractérisé en ce que** :

ladite première unité de traitement d'interpolation est capable d'exécuter une interpolation d'appariement de formes, laquelle est réalisée selon une règle prédéterminée lorsqu'une forme donnée existe pour les pixels de référence, et une interpolation des plus proches voisins.

15. Appareil d'interpolation de données d'image tel que revendiqué par la revendication 13 ou la revendication 14, **caractérisé en ce que** :

si l'on détermine que l'image est une image mixte, ladite unité de détermination est étudiée, pour augmenter le pourcentage dudit premier traitement d'interpolation en proportion directe à l'augmentation de l'étendue de la plage dans laquelle tombent les valeurs de luminance desdits pixels de référence.

16. Appareil d'interpolation de données d'image tel que revendiqué par l'une quelconque des revendications 13 à 15, **caractérisé en ce que** :

ladite autre unité de détermination est étudiée pour déterminer une proportion de mélange à l'aide d'une fonction d'évaluation qui dépend des paramètres de qualité d'impression acquis.

17. Appareil d'interpolation de données d'image tel que revendiqué par l'une quelconque des revendications 13 à 16, **caractérisé en ce que** :

ladite autre unité de détermination est étudiée pour fixer un pourcentage plus élevé dudit deuxième traitement d'interpolation lors de la détermination d'une proportion de mélange, lorsque lesdits paramètres de qualité d'impression acquis indiquent une qualité d'impression supérieure.

18. Appareil d'interpolation de données d'image tel que revendiqué par l'une quelconque des revendications 13 à 17, **caractérisé en ce que** :

ladite autre unité de détermination est étudiée pour empêcher seulement ledit premier traitement d'interpolation d'être actif lorsque lesdits paramètres de qualité d'impression acquis indiquent un degré élevé de qualité d'impression.

FIG.1

C11 — Image data acquisition unit

C12 — Fist interpolation processing unit

C13 — Second interpolation processing unit

C14 — Unit of determining a blending ratio

C15 — Image data blending unit

C16 — Image data output unit

F I G. 2

FIG.3

17a1

11b1

17b1

FIG.4

11a2

11b2

14a2

17b2

FIG.5

18a

# FIG.6

18b

## FIG.7

```
                    ┌─────────────┐
                    │    Start    │
                    └──────┬──────┘
                           │
              ┌────────────────────────┐
              │ Acquiring source image │ ─── S102
              │ data                   │
              └────────────┬───────────┘
                           │
              ┌────────────────────────┐
              │  Creating histogram    │ ─── S104
              └────────────┬───────────┘
                           │          ┌── S106
                        ◇──┴──◇            YES
                     Number of
                     discrete luminance
                     values Y appearing ──────────┐
                     < 15 ?                        │
                        ◇─────◇                    │
                   NO ── S108        ── S110       │
              ┌──────────────────┐  ┌──────────┐   │
              │ rate=F (Ymax-Ymin)│  │ rate=1  │   │
              └─────────┬─────────┘  └────┬─────┘   │
                        │                 │         │
                        │◄────────────────┘         │
                        │          ── S112          │
                     ◇──┴──◇                        │
                     rate=0?     YES ───────────────┤
                     ◇─────◇                        │
                        NO                          │
              ┌──────────────────┐                  │
              │ First interpolation│ ── S114        │
              │ processing        │                 │
              └─────────┬─────────┘                 │
                        │◄────────────────────────── 
                        │          ── S116
            YES     ◇──┴──◇
          ┌─────────  rate=1 ?
          │         ◇─────◇
          │            NO
          │  ┌──────────────────┐
          │  │ Second interpolation│ ── S118
          │  │ processing        │
          │  └─────────┬─────────┘
          │            │
          │►───────────┤
                       │
              ┌──────────────────┐
              │     Blending      │ ── S120
              └─────────┬─────────┘
                        │          ── S122
                     ◇──┴──◇
          NO      Blending for all
        ┌───────── target pixels
        │         completed ?
        │            ◇─────◇
        │              YES
        │  ┌──────────────────┐
        │  │ Interpolation-processed│ ── S124
        │  │ image data output │
        │  └─────────┬─────────┘
        │            │
        │     ┌─────────────┐
        │     │     End     │
        │     └─────────────┘
```

# FIG.8

```
        ╭─────────────────────╮
        │  First interpolation │
        │     processing       │
        ╰─────────┬───────────╯
                  │
        ┌─────────┴───────────┐
        │ Extracting image data│ ～ S202
        └─────────┬───────────┘
                  │
        ┌─────────┴───────────┐
        │Creating Two-valued pattern│ ～ S204
        └─────────┬───────────┘
                  │           ～ S206
              ╱───┴───╲
          ╱   Two-valued pattern  ╲     NO
         ╱    match edge pattern ? ╲─────────┐
          ╲                       ╱          │
              ╲───┬───╱                      │
                 YES                         │
S208              │               S210       │
  ┌───────────────┴──────┐   ┌──────────────┴─────┐
  │ Pattern matching method│   │  Nearest method    │
  └───────────────┬──────┘   └──────────────┬─────┘
                  │◄─────────────────────────┘
        ┌─────────┴───────────┐
        │Storing interpolations data│ ～ S212
        └─────────┬───────────┘
                  │
        ╭─────────┴───────────╮
        │       Return        │
        ╰─────────────────────╯
```

# FIG.9

$$Y= \frac{R+G+B}{3}$$

FIG.10

# F I G. 1 1

A          B

i →

j ↓   Pij

$$Yij= \frac{Rij+Gij+Bij}{3}$$

$$Yt= \frac{Ymax+Ymin}{2}$$

F I G . 12

EP 1 180 743 B1

F I G. 13

A

B

C

D

E

F

54

# FIG.14

FIG.15

F I G. 16

◯ Existing pixel

F I G. 17

◯ Existing pixel

☐ Pixel of interpolation

## FIG.18

F I G.19

Interpolating processing

M cubic method

Cubic method

Tone value

250
200
150
100
50
0

P1  P2  P3  P4  P5  P6  P7  P8

Pixel

F I G. 20

| | Pixel | Original | x1 | x2 | x3 | x4 | f1 | f2 | f3 | f4 | Cubic |
|---|---|---|---|---|---|---|---|---|---|---|---|
| 64 | P0 | 64 | | | | | | | | | |
| 64 | | | | | | | | | | | |
| 64 | | | | | | | | | | | |
| 64 | | | | | | | | | | | |
| 64 | P1 | 64 | 1 | 0 | 1 | 2 | 0 | 1 | 0 | 0 | 64 |
| 64 | P11 | | 1.25 | 0.25 | 0.75 | 1.75 | -0.14063 | 0.890625 | 0.296875 | -0.04688 | 64 |
| 64 | P12 | | 1.5 | 0.5 | 0.5 | 1.5 | -0.125 | 0.625 | 0.625 | -0.125 | 64 |
| 64 | P13 | | 1.75 | 0.75 | 0.25 | 1.25 | -0.04688 | 0.296875 | 0.890625 | -0.14063 | 64 |
| 64 | P2 | 64 | 1 | 0 | 1 | 2 | 0 | 1 | 0 | 0 | 64 |
| 64 | P21 | | 1.25 | 0.25 | 0.75 | 1.75 | -0.14063 | 0.890625 | 0.296875 | -0.04688 | 61 |
| 64 | P22 | | 1.5 | 0.5 | 0.5 | 1.5 | -0.125 | 0.625 | 0.625 | -0.125 | 56 |
| 64 | P23 | | 1.75 | 0.75 | 0.25 | 1.25 | -0.04688 | 0.296875 | 0.890625 | -0.14063 | 55 |
| 64 | P3 | 64 | 1 | 0 | 1 | 2 | 0 | 1 | 0 | 0 | 64 |
| 80 | P31 | | 1.25 | 0.25 | 0.75 | 1.75 | -0.14063 | 0.890625 | 0.296875 | -0.04688 | 77 |
| 96 | P32 | | 1.5 | 0.5 | 0.5 | 1.5 | -0.125 | 0.625 | 0.625 | -0.125 | 88 |
| 112 | P33 | | 1.75 | 0.75 | 0.25 | 1.25 | -0.04688 | 0.296875 | 0.890625 | -0.14063 | 103 |
| 128 | P4 | 128 | 1 | 0 | 1 | 2 | 0 | 1 | 0 | 0 | 128 |
| 144 | P41 | | 1.25 | 0.25 | 0.75 | 1.75 | -0.14063 | 0.890625 | 0.296875 | -0.04688 | 153 |
| 160 | P42 | | 1.5 | 0.5 | 0.5 | 1.5 | -0.125 | 0.625 | 0.625 | -0.125 | 168 |
| 176 | P43 | | 1.75 | 0.75 | 0.25 | 1.25 | -0.04688 | 0.296875 | 0.890625 | -0.14063 | 179 |
| 192 | P5 | 192 | 1 | 0 | 1 | 2 | 0 | 1 | 0 | 0 | 192 |
| 192 | P51 | | 1.25 | 0.25 | 0.75 | 1.75 | -0.14063 | 0.890625 | 0.296875 | -0.04688 | 201 |
| 192 | P52 | | 1.5 | 0.5 | 0.5 | 1.5 | -0.125 | 0.625 | 0.625 | -0.125 | 200 |
| 192 | P53 | | 1.75 | 0.75 | 0.25 | 1.25 | -0.04688 | 0.296875 | 0.890625 | -0.14063 | 195 |
| 192 | P6 | 192 | 1 | 0 | 1 | 2 | 0 | 1 | 0 | 0 | 192 |
| 192 | P61 | | 1.25 | 0.25 | 0.75 | 1.75 | -0.14063 | 0.890625 | 0.296875 | -0.04688 | 192 |
| 192 | P62 | | 1.5 | 0.5 | 0.5 | 1.5 | -0.125 | 0.625 | 0.625 | -0.125 | 192 |
| 192 | P63 | | 1.75 | 0.75 | 0.25 | 1.25 | -0.04688 | 0.296875 | 0.890625 | -0.14063 | 192 |
| 192 | P7 | 192 | 1 | 0 | 1 | 2 | 0 | 1 | 0 | 0 | 192 |
| 192 | P71 | | 1.25 | 0.25 | 0.75 | 1.75 | -0.14063 | 0.890625 | 0.296875 | -0.04688 | 192 |
| 192 | P72 | | 1.5 | 0.5 | 0.5 | 1.5 | -0.125 | 0.625 | 0.625 | -0.125 | 192 |
| 192 | P73 | | 1.75 | 0.75 | 0.25 | 1.25 | -0.04688 | 0.296875 | 0.890625 | -0.14063 | 192 |
| 192 | P8 | 192 | 1 | 0 | 1 | 2 | 0 | 1 | 0 | 0 | 192 |
| 192 | P81 | | 1.25 | 0.25 | 0.75 | 1.75 | -0.14063 | 0.890625 | 0.296875 | -0.04688 | |
| 192 | P82 | | 1.5 | 0.5 | 0.5 | 1.5 | -0.125 | 0.625 | 0.625 | -0.125 | |
| 192 | P83 | | 1.75 | 0.75 | 0.25 | 1.25 | -0.04688 | 0.296875 | 0.890625 | -0.14063 | |
| 192 | P9 | 192 | 1 | 0 | 1 | 2 | 0 | 1 | 0 | 0 | |

EP 1 180 743 B1

| | Pixel | Original | x1 | x2 | x3 | x4 | f1 | f2 | f3 | f4 | Wcubic |
|---|---|---|---|---|---|---|---|---|---|---|---|
| 64 | P0 | 64 | | | | | | | | | |
| 64 | | | | | | | | | | | |
| 64 | | | | | | | | | | | |
| 64 | | | | | | | | | | | |
| 64 | P1 | 64 | 1 | 0 | 1 | 2 | 0.00 | 1.00 | 0.00 | 0.00 | 64 |
| 64 | P11 | | 1.25 | 0.25 | 0.75 | 1.75 | -0.20 | 0.95 | 0.36 | -0.11 | 64 |
| 64 | P12 | | 1.5 | 0.5 | 0.5 | 1.5 | -0.21 | 0.71 | 0.71 | -0.21 | 64 |
| 64 | P13 | | 1.75 | 0.75 | 0.25 | 1.25 | -0.11 | 0.36 | 0.95 | -0.20 | 64 |
| 64 | P2 | 64 | 1 | 0 | 1 | 2 | 0.00 | 1.00 | 0.00 | 0.00 | 64 |
| 64 | P21 | | 1.25 | 0.25 | 0.75 | 1.75 | -0.20 | 0.95 | 0.36 | -0.11 | 57 |
| 64 | P22 | | 1.5 | 0.5 | 0.5 | 1.5 | -0.21 | 0.71 | 0.71 | -0.21 | 50 |
| 64 | P23 | | 1.75 | 0.75 | 0.25 | 1.25 | -0.11 | 0.36 | 0.95 | -0.20 | 51 |
| 64 | P3 | 64 | 1 | 0 | 1 | 2 | 0.00 | 1.00 | 0.00 | 0.00 | 64 |
| 80 | P31 | | 1.25 | 0.25 | 0.75 | 1.75 | -0.20 | 0.95 | 0.36 | -0.11 | 73 |
| 96 | P32 | | 1.5 | 0.5 | 0.5 | 1.5 | -0.21 | 0.71 | 0.71 | -0.21 | 82 |
| 112 | P33 | | 1.75 | 0.75 | 0.25 | 1.25 | -0.11 | 0.36 | 0.95 | -0.20 | 99 |
| 128 | P4 | 128 | 1 | 0 | 1 | 2 | 0.00 | 1.00 | 0.00 | 0.00 | 128 |
| 144 | P41 | | 1.25 | 0.25 | 0.75 | 1.75 | -0.20 | 0.95 | 0.36 | -0.11 | 157 |
| 160 | P42 | | 1.5 | 0.5 | 0.5 | 1.5 | -0.21 | 0.71 | 0.71 | -0.21 | 174 |
| 176 | P43 | | 1.75 | 0.75 | 0.25 | 1.25 | -0.11 | 0.36 | 0.95 | -0.20 | 183 |
| 192 | P5 | 192 | 1 | 0 | 1 | 2 | 0.00 | 1.00 | 0.00 | 0.00 | 192 |
| 192 | P51 | | 1.25 | 0.25 | 0.75 | 1.75 | -0.20 | 0.95 | 0.36 | -0.11 | 205 |
| 192 | P52 | | 1.5 | 0.5 | 0.5 | 1.5 | -0.21 | 0.71 | 0.71 | -0.21 | 206 |
| 192 | P53 | | 1.75 | 0.75 | 0.25 | 1.25 | -0.11 | 0.36 | 0.95 | -0.20 | 199 |
| 192 | P6 | 192 | 1 | 0 | 1 | 2 | 0.00 | 1.00 | 0.00 | 0.00 | 192 |
| 192 | P61 | | 1.25 | 0.25 | 0.75 | 1.75 | -0.20 | 0.95 | 0.36 | -0.11 | 192 |
| 192 | P62 | | 1.5 | 0.5 | 0.5 | 1.5 | -0.21 | 0.71 | 0.71 | -0.21 | 192 |
| 192 | P63 | | 1.75 | 0.75 | 0.25 | 1.25 | -0.11 | 0.36 | 0.95 | -0.20 | 192 |
| 192 | P7 | 192 | 1 | 0 | 1 | 2 | 0.00 | 1.00 | 0.00 | 0.00 | 192 |
| 192 | P71 | | 1.25 | 0.25 | 0.75 | 1.75 | -0.20 | 0.95 | 0.36 | -0.11 | 192 |
| 192 | P72 | | 1.5 | 0.5 | 0.5 | 1.5 | -0.21 | 0.71 | 0.71 | -0.21 | 192 |
| 192 | P73 | | 1.75 | 0.75 | 0.25 | 1.25 | -0.11 | 0.36 | 0.95 | -0.20 | 192 |
| 192 | P8 | 192 | 1 | 0 | 1 | 2 | 0.00 | 1.00 | 0.00 | 0.00 | 192 |
| 192 | P81 | | 1.25 | 0.25 | 0.75 | 1.75 | -0.20 | 0.95 | 0.36 | -0.11 | |
| 192 | P82 | | 1.5 | 0.5 | 0.5 | 1.5 | -0.21 | 0.71 | 0.71 | -0.21 | |
| 192 | P83 | | 1.75 | 0.75 | 0.25 | 1.25 | -0.11 | 0.36 | 0.95 | -0.20 | |
| 192 | P9 | 192 | 1 | 0 | 1 | 2 | 0.00 | 1.00 | 0.00 | 0.00 | |

EP 1 180 743 B1

FIG. 22

## FIG.23

21a1

K | C | M | Y

21b

21a

**Print head controller**

21c

**Print head shift motor**

21d

**Paper feed motor**

**Printer controller**

21e

FIG.24

## FIG.25

21a5

21a4

21a2

21a5

21a4

Color ink particle

EP 1 180 743 B1

FIG.26

Application — 12d

Print request: Output size
Printing paper
Printing speed
Ink type
Image data (RGB 256 tones)

Display

Print request: Output size
Printing paper
Printing speed
Ink type
Image data (RGB 256 tones)

Operating system

Keyboard

Printer driver

Print data
(CMYK 2 tones)

Mouse

12a

Print data

12c

Color printer — 21 (17b)

FIG.27A

**21a6**　　　**21a7**

**21a8**

FIG.27B

Bubble　　**21a7**

**21a8**

FIG.27C

Bubble　　**21a7**

**21a8**

FIG.27D

Bubble　　**21a7**

**21a8**

FIG.27E

Color ink particle　　**21a7**

**21a8**

FIG.28

22c

22d
Toner

22f

22b

22a

22g

22e

FIG.29

## FIG.30

Start

Acquiring source image data — S302

Inputting print settings — S303

Creating histogram — S304

S306
Number of discrete luminance values Y appearing < 15 ?　　NO

YES

Selecting evaluation function F — S307

S308
rate=F (Ymax-Ymin)

rate=1 — S310

S312
rate=0 ?　　YES

NO

First interpolation processing — S314

S316
rate=1 ?

YES

NO

Second interpolation processing — S318

Blending — S320

S322
Blending for all target pixels completed ?　　NO

YES

Printing — S324

End

## FIG.31

Print ▭▭☒

Copies [ 1 |⬍]

Start page [ 1 |⬍]

End page [999|⬍]

| Printer setup |

| O K | | Cancel |

## FIG.32

Printer setup    ▢ ▢ ☒

**Resolution**

• **360dpi** ◉ **720dpi**

**Paper**

◉ **A 4**   • **B 5**

• Plain paper ◉ Glossy print

**Print speed**

• High   ◉ Low

**Ink**

◉ Pigment • Dye

**O K**     Cancel

FIG.33

# FIG.34

EP 1 180 743 B1

FIG.35

Fig36

EP 1 180 743 B1

(M=F=T=edge & A=O=notedge)or
(M=B=X=edge & C=Y=notedge)or
(M=F=T=notedge & L=R=edge)or
(M=B=X=notedge & C=Y=edge)

Does the detected
edge form part of
an edge with an angle of 30 degrees?

YES

NO

(M=edge & L=R=notedge) & (B=F=notedge or T=X=notedge)
or
(M=notedge & L=R=edge) & (B=F=edge or T=X=edge)

(M=edge & L=R=notedge) & (B=F=notedge or T=X=notedge)
or
(M=notedge & L=R=edge) & (B=F=edge or T=X=edge)

NO

YES

Process 1

Does the edge pattern
agree with the one-dotted
line?

YES

Process 1

NO

(M=I=edge)
or
(M=1=notedge)

(M=I=edge)
or
(M=1=notedge)

NO

YES

Process

YES

Process 3

NO

Process 2

(M=edge & ((T=edge & O=notedge) or (F=edge & notedge))
or
(M=notedge & ((T=notedge & O=edge) or (F=notedge & A=edge))

NO

YES

The direction of the 30 degrees edge
is assumed 60,150,240 or 330.

NO

The direction of the
detected 45 degrees
edge is 135 or 225 degrees.

YES

Process 2

NO

(M=edge & ((B=edge & C=notedge) or (X=edge & Y=notedge))
or
(M=notedge & ((B=notedge & C=edge) or (X=notedge & Y=edge))

The direction of the 30 degrees edge
is assumed 30,120,210 or 300.

YES

Process 1

NO

The direction of the
detected 45 degrees
edge is 225 or315 degrees.

YES

Process 2

EP 1 180 743 B1

## Fig37

(M=F=K=edge & Q=notedge & (V=edege or W=edge or X=edge))
or
(M=F=K=notedge & Q=edge & (V=notedge or W=notedge or X=notedge))

NO     YES

Process 1

No correction is made for pixels adjacent to a protruded pixel if any(e.g., upward protrusion from a character, etc.)

(M=F=O=edge & K=T=notege)
or
(M=F=O=notedge & K=T=edge)

NO     YES

Process 2

If the angle of the edge is less than 30 degrees, pixel i is processed as the one not forming part of the edge.

(M=edge & I=notege)
or
(M=notedge & I=edge)

NO     YES

Process 3

Does the edge pattern agree with the one-dotted line?

(M=Q=edge)
or
(M=Q=notedge)

NO     YES

Process 4

The direction of the dected 30 degrees edge is assumed 30,120,210 or 300.

NO     YES

Process 3     Process 4

78

FIG. 38

FIG. 39

FIG 40

## Fig41

(M=F=T=edge & A=O=notedge)or
(M=B=X=edge & C=Y=notedge)or
(M=F=T=notedge & L=R=edge)or
(M=B=X=notedge & C=Y=edge)

Does the detected edge form part of an edge with an angle of 30 degrees?

NO · YES

Process 1

(M=edge & L=R=notedge) & (B=F=notedge or T=X=notedge)
or
(M=notedge & L=R=edge) & (B=F=edge or T=X=edge)

Does the edge pattern formed with the G,M, and S pixels agree with the one-dotted line?

NO · YES

Process 1

(M=C=I=O=edge)
or
(M=C=I=O=notedge)

Does the edge pattern formed with the B,H,N, and T pixels agree with the one-dotted line?

NO · YES

Process 2

The direction of the detected 45 degrees edge is 225 or315 degrees.

NO · YES

Process 1 · Process 2

FIG42

## Fig43

(M=F=K=edge & Q=notedge & (V=edege or W=edge or X=edge))
or
(M=F=K=notedge & Q=edge & (V=notedge or W=notedge or X=notedge))

NO — YES

Process 1

No correction is made for pixels adjacent to a protruded pixel if any (e.g., upward protrusion from a character, etc.)

(M=F=O=edge & K=T=notege)
or
(M=F=O=notedge & K=T=edge)

NO — YES

Process 3 — Process 2

If the angle of the edge is less than 30 degrees, pixel d is processed as the one not forming part of the edge.

84